(19) Europäisches Patentamt / European Patent Office / Office européen des brevets

(11) **EP 4 749 983 A1**

(12) **EUROPEAN PATENT APPLICATION**

(43) Date of publication:
**27.05.2026 Bulletin 2026/22**

(21) Application number: **24214350.1**

(22) Date of filing: **20.11.2024**

(51) International Patent Classification (IPC):
**H04L 9/06** (2006.01)     **H04L 9/08** (2006.01)
**H04L 9/32** (2006.01)

(52) Cooperative Patent Classification (CPC):
**H04L 9/3255; H04L 9/0643; H04L 9/0833;
H04L 9/3242**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **PQshield Ltd**
**Oxford, Oxfordshire OX2 7HT (GB)**

(72) Inventor: **KATSUMATA, Shuichi**
**Oxford, OX2 7HT (GB)**

(74) Representative: **EIP**
**Fairfax House**
**15 Fulwood Place**
**London WC1V 6HU (GB)**

(54) **AUTHENTICATION IN SECURE GROUP MESSAGING**

(57)     Various methods for authenticating user devices in a group messaging protocol, such as messaging layer security (MLS), are described. Some methods make use of public and private tokens wherein the public token is derivable from the public token by use of a one-way function. Further methods replace the tokens with one-time signature key pairs. A further method makes use of a group signature scheme to allow traceability of user devices.

$$x_1' \leftarrow \{0,1\}^{128}$$
$$y_1' \leftarrow OWF(x_i')$$
$$c_t \leftarrow SKE.Enc\,(K\_SKE, m, y_1', x_1)$$
$$Y_{tag} \leftarrow MAC.Tag(K\_MAC, c_t)$$

Fig. 8

EP 4 749 983 A1

## Description

<u>Technical Field</u>

The present invention relates to authentication in secure group messaging. In particular there are provided methods of authenticating, at a receiver user device, a message received from a sender user device in a group messaging protocol and information processing systems comprising user devices and a server for performing such methods.

<u>Background</u>

IETF Messaging Layer Security (MI,S) protocol is the result of collaborative efforts within the Internet Engineering Task Force (IETF) and aims to provide a standardized approach for secure group messaging. It aims to provide end-to-end security in dynamic group communication scenarios, helping to protect the privacy and integrity of messages exchanged among participants.

MLS operates at the message layer, meaning it secures individual messages rather than entire communication channels. It is designed to work in a decentralized manner, accommodating dynamic groups where members can join or leave at any time. This makes MLS suitable for scenarios where group membership is subject to change, such as team collaboration or real-time group messaging.

MLS employs a combination of cryptographic techniques to achieve its security goals. It uses a concept known as the "Continuous Group Key Agreement (CGKA)" to provide forward secrecy and cryptographic freshness for messages. This means that each message is encrypted using a unique key derived from a key chain, ensuring that compromising one key does not compromise past or future messages.

MLS is designed to be resistant to various types of attacks. It provides protection against eavesdropping, tampering, message replay, and man-in-the-middle attacks. The protocol also includes mechanisms to detect and handle participant chum, ensuring that new members can securely join the group and existing members can continue communication seamlessly.

While MLS has undergone extensive examination by researchers, the majority of the research has focused on the confidentiality of the exchanged messages. However, there is also a problem that the authenticity of a message should be checked i.e. a user should be able to check a received message to find out which user in a group sent the message.

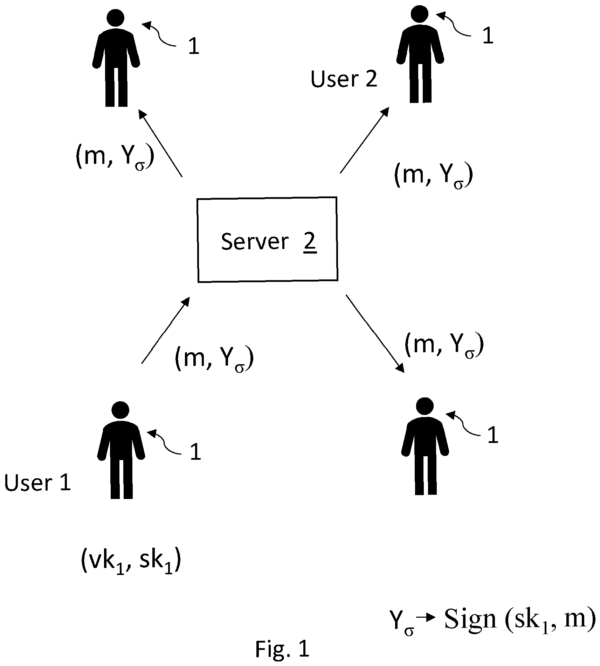

Within MLS there are a couple of methods for determining which user sent a message. A first method will be described with reference to Figure 1. Figure 1 is a schematic diagram showing four user devices 1 in a group messaging system. The user devices communicate with each other via a server 2 using MLS protocol.

The MLS protocol is asynchronous such that the messages are stored on the server 2 until a user device 1 retrieves them. Consequently, there is a need to be able to determine that a received message was actually sent by a particular user device. User 1 shown in the bottom left of Figure 1 is depicted having a pair of keys comprising a public key, vki, and a private key, $sk_1$. In practice, each user will have their own key pair and the public keys will be centrally published. In a case that User 1 sends a message, m, to the other users 1 via the server 2, User 1 generates a signature $Y_\sigma$ of the message under the user's private key, $sk_1$, using a pre-agreed signature scheme. As User 1 has published its public key, $vk_1$, recipients of the message and signature can use user 1's public key and a verification function of the pre-agreed signature scheme to confirm that the signature was generated using the private key, $sk_1$. As the private key, $sk_1$, is assumed to be only known to user 1, other users can be confident that the message is from user 1 as only user 1 can generate the signature.

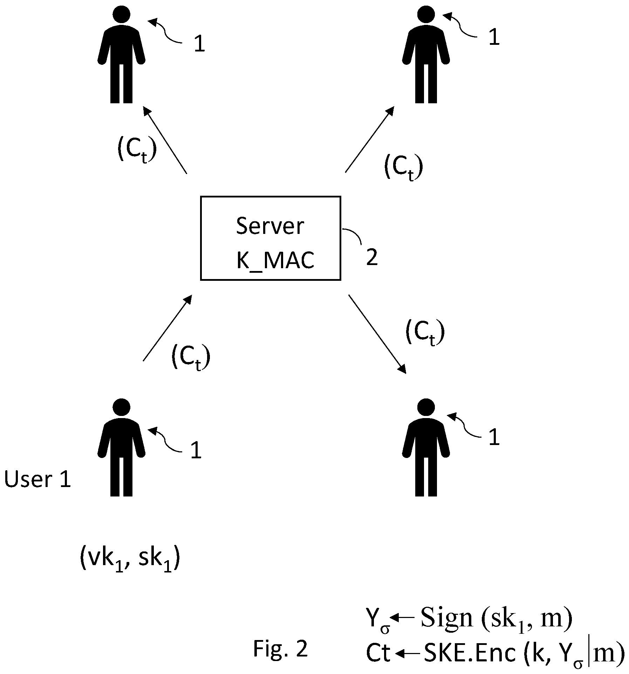

Figure 2 is a schematic diagram of a second method of authenticating a message. A disadvantage of the method discussed in connection with figure 1 is that the server 2 can determine which user is sending each message because the public keys necessary to verify the signatures are publicly available. It is preferred that the server 2 serves the function of transporting the messages but cannot track which user devices 1 are messaging. In the example shown in figure 2, each user device in a group has a group secret key used in the MLS protocol. According to the method shown in Figure 2, an authentication key, k, is derived by each user within the group from the group secret key using a pre-agreed key derivation function. When User 1 sends a message, the message is signed to generate a signature, $Y_\sigma$, using a pre-agreed signature scheme and a concatenation of the message and signature are encrypted using the authentication key, k, and a pre-agreed symmetric encryption scheme to generate a ciphertext, Ct. The ciphertext, Ct, is sent to the server 2 for distribution to other members of the group. The server 2, which does not know the group secret key and accordingly cannot derive the authentication key, k, cannot read the encrypted message and does not know which user sent the message. A group member receiving the message may decrypt the ciphertext, Ct, using the authentication key, k, and a decryption function of the pre-agreed symmetric encryption scheme and may consequently verify the signature as described in connection with the method of Figure 1. A down-side to this approach, however, is that the server 2 also cannot confirm that a user sending a message is a member of the group. Accordingly, this method is open to denial of service attacks.

Accordingly, there is a need for improved methods for authenticating users in a secure group messaging protocol.

## Summary

According to a first aspect of the present invention, there is provided a method of authenticating, at a receiver user device, a message received from a sender user device in a group messaging protocol, the method comprising: receiving at the receiver user device a public token associated with the sender user device; storing the public token at the receiver user device; receiving a message and a private token from the sender user device; verifying the private token against the stored public token using a one-way function; in a case that the private token is verified, determining that the message has been received from the sender user device.

The public token may be received by the receiver user device from a server and the message may be received by the receiver user device from the server along with the private token. The server may receive the message and private token from the sender user device. The server may perform an additional step of verifying the private token against the stored public token using the one-way function before, in a case that the private token is verified, making the message available to a group of user devices including the receiver user device. In a case that the private token is verified, the public token is obtainable by applying the one-way function to the private token.

The one-way function may be a truncated cryptographic function.

The method may comprise the sender user device creating the private token as a random or pseudorandom number. The public token may be generated from the private token using the one-way function by the sender user device. The sender user device may publish the public token. The public token may be published on the server.

The sender user device may send a new public token with the message and private token. The server may receive the new public token and may store the new public token for use when receiving a subsequent message. The receiver user device may receive the new public token with the message and private token. The receiver user device may store the new public token for use when receiving a subsequent message.

According to a further aspect there may be provided a group messaging system comprising a server and at least two user devices, each of the server and the at least two user devices being an information processing apparatus comprising a processor and a computer-readable storage medium, the computer-readable storage medium storing program instructions that cause the information processing apparatus to perform steps according to the first aspect of the invention.

According to a further aspect there may be provided a plurality of programs that, when implemented on a group messaging system, causes the group messaging system to perform a method according to the first aspect of the invention.

According to a second aspect of the present invention there is provided a method of authenticating, at a receiver user device, a message received from a sender user device in a group messaging protocol comprising: receiving at the receiver user device a first public token associated with the sender user device; storing the first public token at the receiver user device; receiving at the receiver user device a first private token and a ciphertext that encrypts at least a message from the sender user device; decrypting, by the receiver user device, the ciphertext to obtain the message; verifying by the receiver user device the first private token against the stored first public token using a one-way function, wherein in a case that the first private token is verified, the first public token is obtainable by applying the one-way function to the first private token; and in a case that the first private token is verified, determining that the message has been received from the sender user device, wherein at least one of the first public token and the first private token is received at the receiver user device in an encrypted format.

The receiver user device may receive the first public token from a server, and the received first public token is encrypted in a previous ciphertext. The receiver user device may receive the ciphertext from the server. The server may receive the first public token, the ciphertext, the first private token, and a message authentication code associated with the ciphertext from the sender user device. The message authentication code may be generated by the sender device from the ciphertext using a MAC key associated with a group of users in the group messaging protocol. The server may check the message authentication code using the MAC key and only makes the ciphertext available to the group of user devices if the message authentication code matches the ciphertext.

The ciphertext may be encrypted by the sender user device and decrypted by the receiver user device using a symmetric encryption key that is derived from a group secret associated with the group messaging protocol. The sender user device may derive the symmetric encryption key from the group secret associated with the group messaging protocol. The receiver user device may derive the symmetric encryption key from the group secret associated with the group messaging protocol.

The server may not have access to the group secret and may be unable to decrypt the ciphertext. The MAC key may be provided to the server by one or more of the user devices that are a member of the group of users. The sender user device may derive the MAC key from the group secret associated with the group messaging protocol. The receiver user device may derive the MAC key from the group secret associated with the group messaging protocol.

The one-way function may be a truncated cryptographic function. The cryptographic function may be SHA 256 and the output may be truncated to sixteen bits.

The ciphertext may also encrypt a second public token The receiver user device may store the second public token for use in receiving a subsequent message from the sender user device after the ciphertext has been decrypted.

The sender user device may create the private token as a random or pseudorandom number. The sender user device may generate the public token from the private token using the one-way function. The public token may be published by the sender user device. The public token may be published by the sender user device on the server.

In some examples, the sender user device may generate the first private token as a random or pseudo-random binary string. The sender user device may generate the first public token by applying a one-way function to the first private token. The sender user device may send the first public token to a server which stores public token values.

In some implementations, the sender user device generates a second private token that is a random or pseudo-random binary string. The sender user device may generate a second public token by applying a one-way function to the second private token. The sender user device may generate the ciphertext by encrypting the message The sender user device may generate the ciphertext by encrypting the message, the private token and a new public token. The sender user device may generate a message authentication code using a MAC key and the generated ciphertext.

According to a further aspect there may be provided a group messaging system comprising a server and at least two user devices, each of the server and the at least two user devices being an information processing apparatus comprising a processor and a computer-readable storage medium, the computer-readable storage medium storing program instructions that cause the information processing apparatus to perform steps according to the second aspect of the invention.

According to a further aspect there may be provided a plurality of programs that, when implemented on a group messaging system, causes the group messaging system to perform a method according to the second aspect of the invention.

According to a third aspect of the invention there may be provided a method of authenticating, at a receiver user device, a message received from a sender user device in a group messaging protocol comprising: each user device in the group generating one or more public tokens for each other user device in a group, wherein: each public token is associated with a corresponding private token that is stored by or may be generated by the user device, each private token can be used to send a message to the user device, and the one or more public tokens generated by a user device for each user device in the group forms a set of public tokens; each user device uploading their set of public tokens to a server to form an overall set of public tokens on the server; each user device downloading public tokens from the server and storing the overall set of public tokens; each user device providing for each other user device in the group one or more private tokens associated with the uploaded public tokens or information for the other user device to generate the one or more private tokens associated with the uploaded public tokens; receiving at the server a message to be transferred and a private token from a sender user device at the server; verifying by the server, the private token using a public token in the overall set of public tokens; in a case that the server successfully verifies the private token against a public token in the overall set of public tokens, making the message to be transferred and private token available to user devices in a group including the receiver user device; obtaining by the receiver user device the message and the private token from the server; verifying by the receiver device the private token as a private token issued by the receiver device for receiving messages; in a case that the private token is verified, determining that the message has been received from the sender user device.

In some implementations, generating one or more public tokens may comprise: generating one or more private tokens that are random or pseudorandom numbers; and generating the one or more public tokens from the one or more private tokens using a one-way function.

The one or more private tokens may be generated at a user device from a plurality of seeds, each seed being associated with a respective user device in the group.

Each user device may provide to each other user device in the group a seed for use by the other user device to generate the one or more private tokens associated with the uploaded public tokens.

The one-way function may be a truncated cryptographic function applied to the private token.

In other implementations each public token is a verification key in a pair of signature keys and information to generate the private token is information for generating signing keys of the pairs of signature keys. Generating one or more public tokens may comprise generating pairs of signature keys and extracting the verification keys from the pairs of signature keys.

The pairs of signature keys may be generated from a plurality of seeds, each seed being associated with a respective user device in the group. Each user device may provide to each other user device in the group a seed for use by the other user device to generate the signing keys associated with the uploaded public tokens. Each private token may be a signature of a message being sent by a sender user device. The signature may be created using a signing key of the pairs of signature keys.

The step of each user device providing to each other user device in the group one or more private tokens associated with the uploaded public tokens or information for the other user device to generate the one or more private tokens associated with the uploaded public tokens may comprise: each user generating a ciphertext encrypted under a respective public key of each other user device, whereby the other user device can obtain the one or more private tokens associated with the uploaded public tokens or information for the other user device to generate the one or more private tokens associated with the uploaded public tokens by using their private key to decrypt the ciphertext.

The server may store the sets of public tokens uploaded by the user devices in a database in accordance with an index value. Each user device may upload their set of public tokens to the server with index values that have been generated at the user device using a permutation function, whereby the server does not know which public tokens are associated with which user device in the group. The method may comprise a step of each user device deriving a permutation key from a group secret shared among the user devices in accordance with the group messaging protocol. Each user device in the group may generate the index values using a permutation function and the generated permutation key.

The message may comprise at least one of a group comprising text, an image, a sound file, and a data file.

According to a further aspect there may be provided a group messaging system comprising a server and at least two user devices, each of the server and the at least two user devices being an information processing apparatus comprising a processor and a computer-readable storage medium, the computer-readable storage medium storing program instructions that cause the information processing apparatus to perform steps according to the third aspect of the invention.

According to a further aspect there may be provided a plurality of programs that, when implemented on a group messaging system, causes the group messaging system to perform a method according to the third aspect of the invention.

According to a fourth aspect of the present invention there is provided a method of authenticating at a receiver user device a message received from a sender user device in a group messaging protocol, wherein: a server is configured to process messages from an overall set of user devices, user devices in the overall set of user devices are configured to communicate with each other using a group messaging protocol in one or more local groups formed from the overall set of user devices, each user device in a local group of the one more local groups derives a local group messaging protocol key pair including a local group signing key and a local group verification key, each user device in the overall set of user devices is a member of a system group signature scheme, and each user device in each local group of the one or more local groups has a tracer key of the group signature scheme associated with that group that is derived from a group secret of the group messaging protocol, the method comprising: a sender user device generating a system group signature of a message using the group signature scheme, wherein the message is to be sent to a local group of the one or more local groups and the system group signature is generated using a tracer key associated with the local group; the sender user device generating a private token associated with the message using the local group signing key; the server checking the system group signature using the system group signature scheme and checking the private token using the local group verification key of the group messaging protocol key pair; and the server making the message available to the local group only if the system group signature is verified against the message and the private token is verified against the message, wherein the system group signature may be used by receiver user devices within the local group to verify the identity of the sender user device using a tracer function of the system group signature scheme.

The private token may be one of a signature of the message and a message authentication code generated based on the message.

According to a further aspect there may be provided a group messaging system comprising a server and at least two user devices, each of the server and the at least two user devices being an information processing apparatus comprising a processor and a computer-readable storage medium, the computer-readable storage medium storing program instructions that cause the information processing apparatus to perform steps according to the fourth aspect of the invention.

According to a further aspect there may be provided a plurality of programs that, when implemented on a group messaging system, causes the group messaging system to perform a method according to the fourth aspect of the invention.

Further features and advantages of the invention will become apparent from the following description of preferred embodiments of the invention, given by way of example only, which is made with reference to the accompanying drawings.

Brief Description of the Drawings

Figure 1 shows the use of signatures in a group messaging protocol;
Figure 2 shows the use of encryption and signatures in a group messaging protocol;
Figure 3 illustrates user devices and a server;
Figure 4 shows message exchange according to a first embodiment;
Figures 5A to 5F illustrate an authenticated messaging protocol of the first embodiment;
Figure 6 is a schematic diagram showing message exchange according to a variation on the first embodiment;
Figures 7A to 7F illustrate an authenticated messaging protocol of the variation on the first embodiment;
Figure 8 is a schematic diagram showing message exchange according to a second embodiment;

Figures 9A to 9F illustrate an authenticated messaging protocol of the second embodiment;

Figure 10 is a schematic diagram showing message exchange according to a variation on the second embodiment;

Figures 11A to 11F illustrate an authenticated messaging protocol of the variation on the second embodiment;

Figure 12 is a schematic diagram showing message exchange according to a third embodiment;

Figure 13 shows private tokens and public tokens stored for use in the third embodiment;

Figures 14A to 14H illustrate an authenticated messaging protocol of the third embodiment;

Figure 15 is a schematic diagram showing message exchange according to a fourth embodiment;

Figures 16A to 16H illustrate an authenticated messaging protocol of the fourth embodiment; and

Figure 17 is a schematic diagram showing components of an information processing apparatus.

Detailed Description

Embodiments will be described below that allow authentication of users in a secure group messaging protocol. The term 'user' or 'users' should be understood to refer to a user device (respectively user devices) that are configured to operate in accordance with the secure group messaging protocol. The user device may be any information processing apparatus, such as a portable device or computer. The user devices are configured such that they may be operated by users within a group to send and receive messages within a group, G.

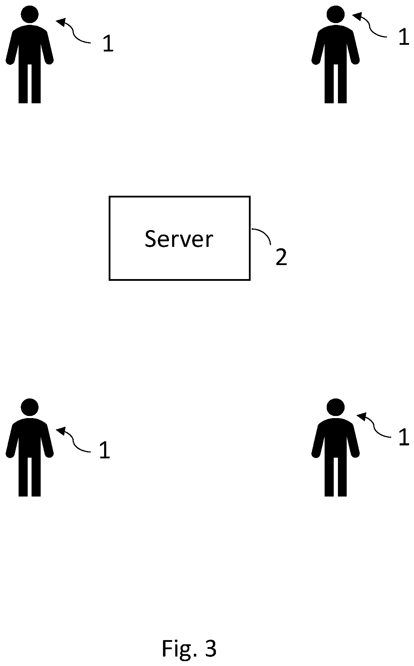

Figure 3 is a schematic diagram showing a server 2 and four users 1. Four users are depicted in Figure 3 and other figures described below to which this description applies equally, but the skilled person will appreciate that a group messaging protocol may enable communication between a group of two or more users and that the depiction of four users is purely for convenience of illustration. The skilled person will also appreciate that the number of users in a group may vary over time in accordance with the group messaging protocol. Details of the group messaging protocol, such as how to add and remove users from a group, are described after description of the embodiments. A complete description of IETF messaging layer protocol is not provided as it is not necessary to understand the invention, but a description of the protocol is publicly available to the reader. The embodiments may be implemented using messaging layer protocol (MLS) or other group messaging protocols. In embodiments in which keys are generated from a group secret, any group messaging protocol that shares a secret among the group members may be used.

**First embodiment**

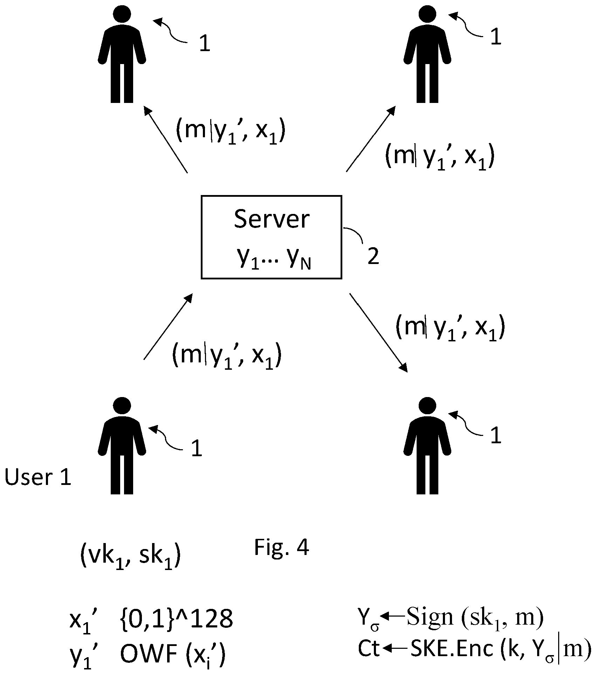

Figure 4 illustrates communications between users in accordance with a first embodiment. In this example, the user devices 1 within the group are configured to use MLS to communicate with each other, but in other embodiments other group messaging protocols may be used. Additionally, the user devices 1 are configured with a pre-agreed one-way function. Before sending messages, during an initial setup or when a user joins a group, G, each user within the group, G, generates a token pair (x,y). A private token of the token pair, x, is created by creating a random or pseudo-random binary string. Any method may be used to generate the binary string. In the first embodiment the binary string has a length of 128 bits. However, in other embodiments a different length of binary string may be used. The binary string forms the private token, x. For convenience, the private and public tokens will be labelled according to the user, so that $x_1$ is a private token value created by user 1, $x_2$ is a private token value created by user 2, etc.

Each user device 1 also generates a public token value, y, by applying the one-way function to the private token, x. Various one-way functions are known. However, by way of example, the private token may be encrypted using SHA-256 and then truncated to 16 bits. Each user device 1 sends their public token value, y, to the server 2, which stores the public token values. Additionally, each user device 1 downloads the set of public tokens from the server 2 to allow the public tokens to be used to authenticate messages.

In case in which a user device 1 sends a message, m, to the group, the user device 1 generates a new token value pair, x' and y', using the same method as described above for creation of the token value pair. The user sends a concatenation of the message, m, the newly created public token value, y', and the current private token value, x, to the server 2. The server 2 may check that the private token value, x, corresponds to the public token value, y, uploaded by the user device 1 to the server 2 by use of the one-way function. If the private token value corresponds to a previously uploaded public token value, y, the server 2 removes the public token value y stored at the server 2 and replaces it with the newly created public token value, y'. Additionally, the server 2 makes the message, m, and public token, y', available for download by user devices 1 in the group, G. In this way, the server 2 has checked that the message originated from a user within the group, G. The tokens are only used once and are one-time tokens. The used public token, y, is replaced by the new public token, y'.

Other users in the group, G, may download the message, private token and new public token, y', from the server 2. To authenticate the message, m, the group members, which keep a copy of the set of the public tokens, y, can also check that the private token, x, corresponds to the public token, y, by virtue of the one-way function. If the check is successful, each receiving user device 1 updates their set of stored public tokens to remove the public token, y, associated with the received message and replace it with the received new public token, y'.

As described above, a new public token, y', is generated for each message and used public tokens are removed in order to avoid replay attacks in which a third party could re-send and intercepted public token in order to authenticate a message.

It should be noted that each user is not limited to creating one token pair (x, y). Each user device 1 may generate a plurality of token pairs and upload several public tokens to the server 2. In this way, the user may send several messages before needing to replenish the associated public tokens on the server 2.

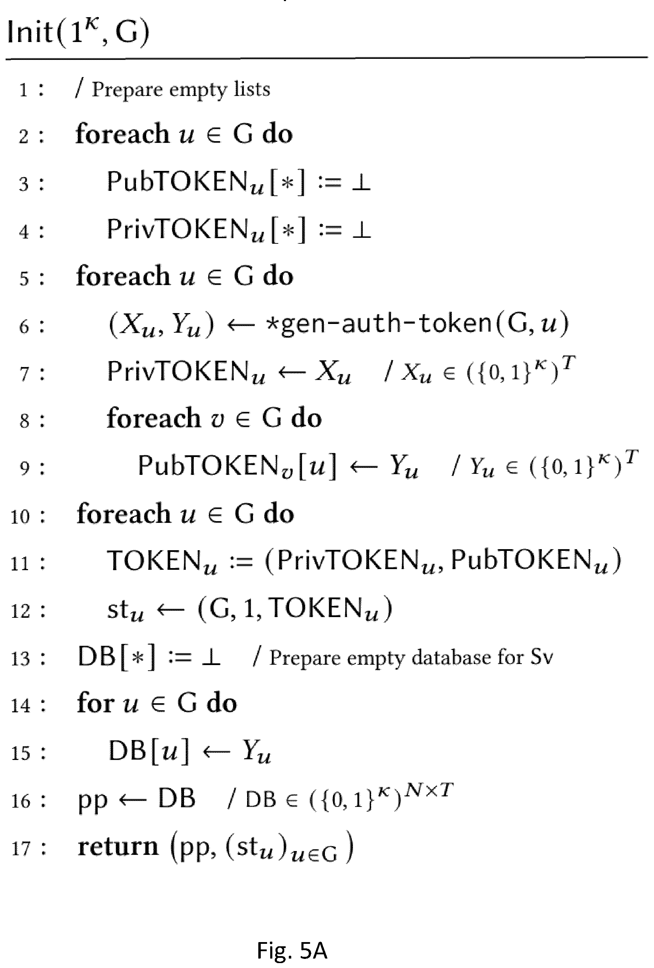

The protocol of the first embodiment is illustrated in Figures 5A to 5F.

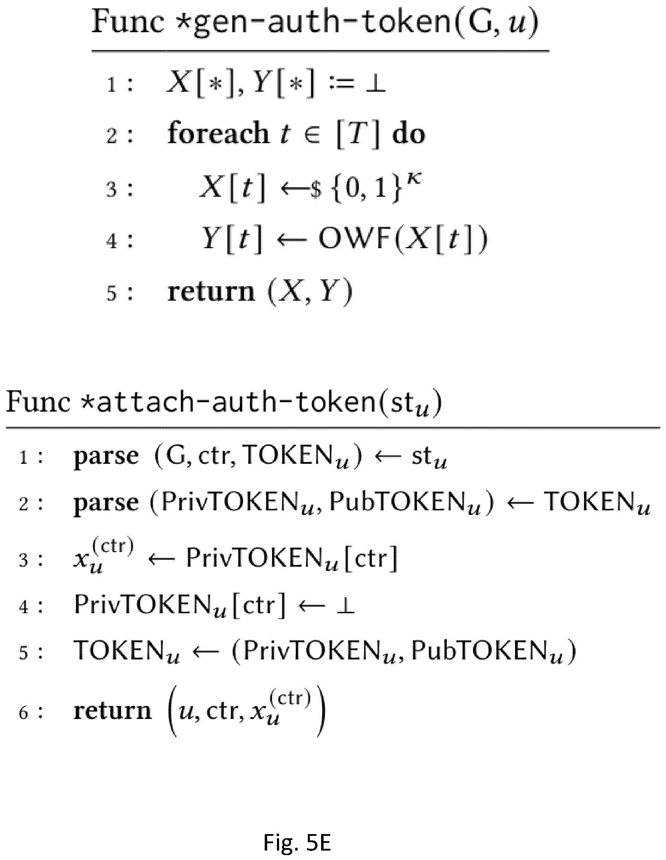

A function Init in Figure 5A illustrates steps performed by each user device 1 for initializing the protocol. In steps 1 to 4 for each user in a group, empty lists of public and private tokens are prepared. In step 6, T private tokens are generated by each user device 1. These steps are performed using a function *gen-auth-token(G, u), which is illustrated in Figure 5E.

The function *gen-auth-token(G, u) generates T private tokens $X[t]$ and T public tokens, $Y[t]$ using the one-way function, OWF, acting on the private tokens.

Returning to the Init function in Figure 5A, in steps 6 to 9, the private tokens $X_u$ are stored in a list PrivTOKEN and the public tokens, $Y_u$, are stored in a list PubTOKEN. In steps 11 and 12, an overall list, TOKEN, is formed from the lists of private and public tokens and the method generates a user state, $st_u$, that includes a group identifier, G, and the overall list, $TOKEN_u$. In steps 14 to 17, a database, DB, is prepared at the server 2 (referred to in this protocol figure and other protocol figures as Sv) and the public tokens, $Y_u$, are stored in the database.

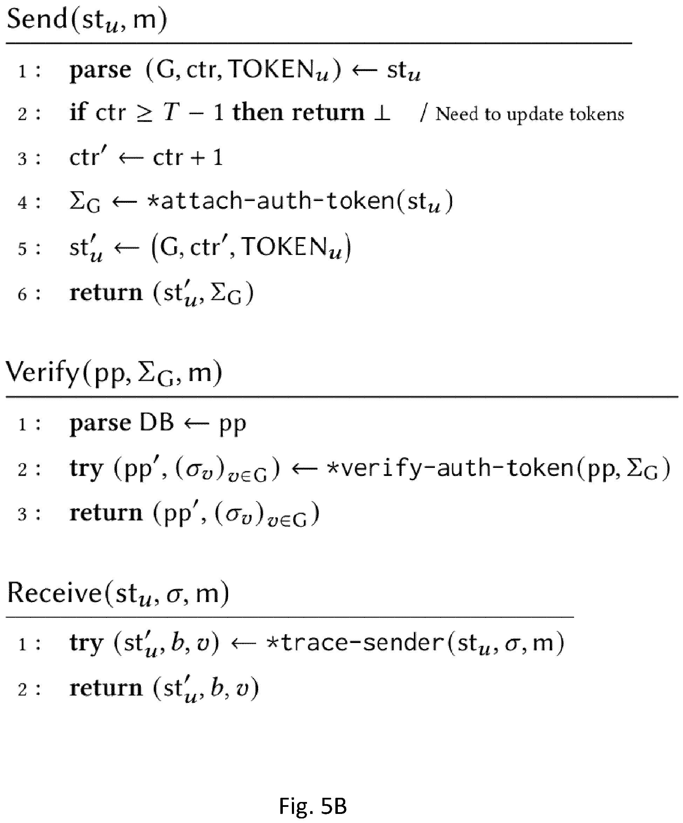

Shown in Figure 5B, a function Send is used for generating a group authentication token $\Sigma_G$ for sending a message, m, based on the state to the user device 1, $st_u$. As depicted, $st_u$ includes an identifier of the group, G, a counter, ctr, and the overall token list, $TOKEN_u$. In step 2, if the counter indicates that a number of messages already sent is greater than T-1, then the tokens need refreshing at the server 2 and a message cannot be sent. This is resolved by an update that will be described further below. Otherwise, in step 3 the counter is incremented. In step 4 the function *attach-auth-token($st_u$) is used to generate a group authentication token $\Sigma_G$ based on the user state, $st_u$. As can be seen from Figure 5E, *attach-auth-token($st_u$), takes the user state, $st_u$., and returns the counter, ctr, and the private token, $x_u$, from the private token list, PrivTOKEN, associated with the counter. The private token forms the group authentication token, $\Sigma_G$.

Returning to the Send function shown in Figure 5B, in step 5, the user state is updated to reflect the updated counter, ctr'. After use of the Send function, the sending user device 1 sends the message and group authentication token to the server 2.

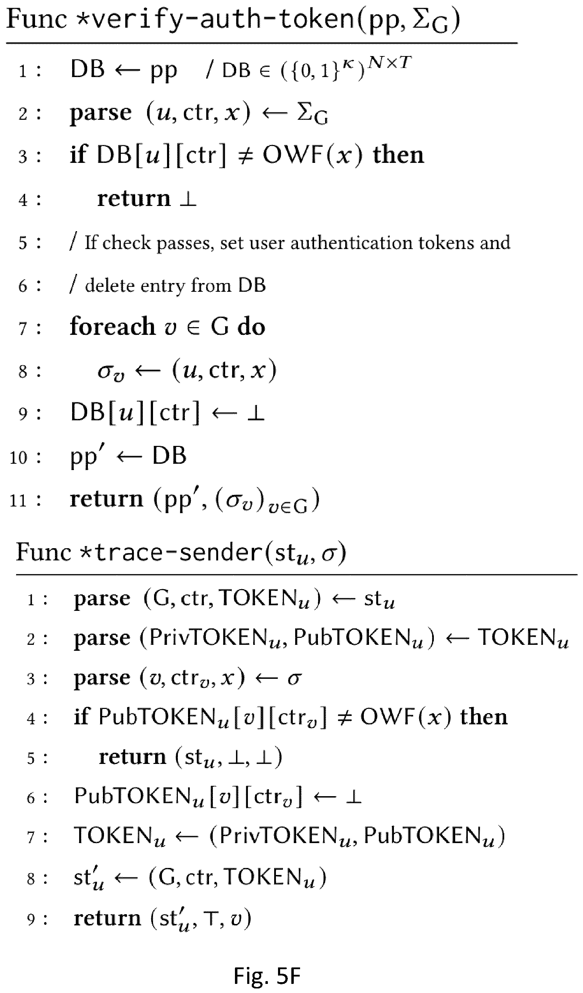

A function Verify is used by the server 2 to verify a received group authentication token, $\Sigma_G$, against a current state, pp, of the database, DB. In step 2, the server 2 uses a function *verify-auth-token (pp, $\Sigma_G$) to check whether a group authentication token is valid. As can be seen from Figure 5F, the function *verify-auth-token (pp, $\Sigma_G$) checks the group authentication token against public tokens in the state of the database DB using a one-way function, OWF. If the check passes, the state of the database, pp, is updated by deleting the corresponding public token from the database. The function returns the updated database state, pp', and a download package, $\sigma_v$, which comprises the user identifier, u, the counter, ctr, and the private token x, received from the sender user device 1.

A function Receive is performed by a user device 1 that downloads a message, m, and the download package, $\sigma_v$, from the server 2. The user device 1 uses a function *trace-sender($st_u$, $\sigma$, m), which is shown in Figure 5F. In steps 1 and 2 of the function *trace-sender($st_u$, $\sigma$, m) the user device 1 parses the user state, $st_u$, in order to obtain the lists of private and public tokens. In steps 4 to 6 the user device 1 compares the received private token with the list of public tokens stored on the user device 1 using the one-way function, OWF. If the corresponding public token is found, the user device 1 updates the counter associated with the received private token and removes the corresponding public token. The function *trace-sender($st_u$, $\sigma$, m) returns an updated user state, $st'_u$, and indication of whether or not the token was verified, b, and the identity, v, of the user that provided the private token.

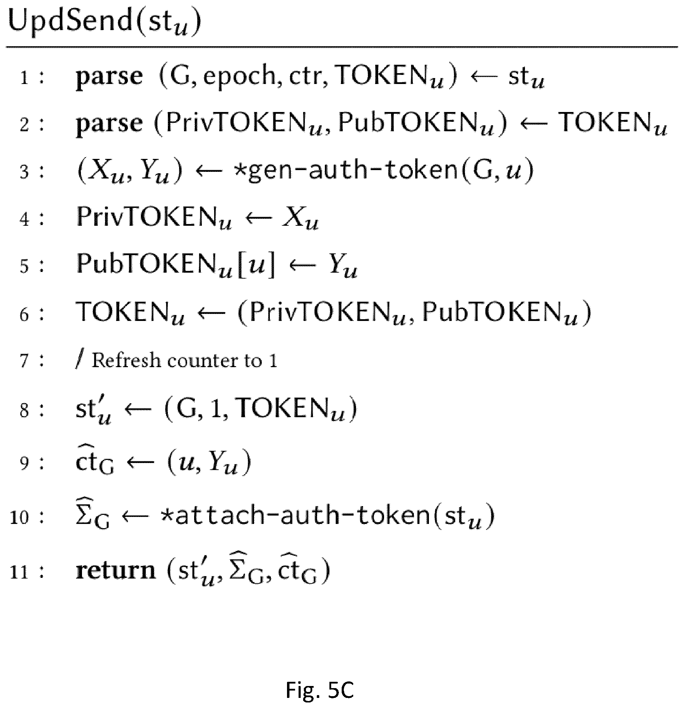

Referring now to Figure 5C, a function UpdSend performs an update and generates a token for sending the update at the same time. This function is used when tokens need to be refreshed. In steps 1 to 6 the current state is parsed, and new tokens are generated using the function *gen-auth-token(G, u) as already described above. As with the Init function, the newly generated private tokens are added to a token list $PrivTOKEN_u$ and the newly generated public tokens are added to a token list $PubTOKEN_u$.

In step 7, the counter, ctr, is refreshed to 1 and in step 8 the user state is updated at the user device 1 performing the update with the new overall list, $TOKEN_u$. A user identifier and a public token, $Y_u$, are stored as update package, $\hat{ct}_G$. In step 10, the function *attach-auth-token($st_u$) is used to generate a group authentication token $\hat{\Sigma}_G$, as previously described in connection with the Send function. The UpdSend function returns an updated state with new tokens, a group authentication token, $\hat{\Sigma}_G$, for use with the update, and an update package, $\hat{ct}_G$, for the server 2.

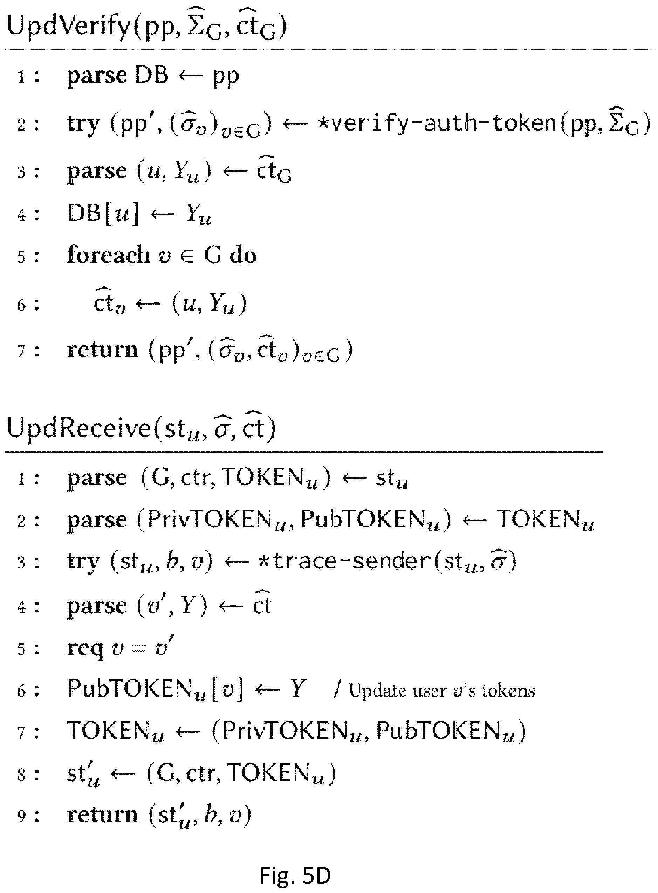

The function UpdVerify (pp, $\hat{\Sigma}_G$, $\hat{ct}_G$) is shown in Figure 5D, is performed by the server 2, and verifies the group authentication token, $\hat{\Sigma}_G$, using the function *verify-auth-token described above. The UpdVerify (pp, $\hat{\Sigma}_G$, $\hat{ct}_G$) function also updates the state of the database with the newly received public token. The function UpdVerify

(pp, $\hat{\Sigma}_G$, $\hat{c}t_G$) returns an updated database state at the server 2, and a download package, $\sigma_v$, which is the user identifier, u, the counter, ctr, and the private token, x. Additionally, the function UpdVerify (pp, $\hat{\Sigma}_G$, $\hat{c}t_G$) returns the update package, $\hat{c}t_v$, which is the user identifier and the new public token, $Y_u$.

The function UpdReceive (stu, $\hat{\sigma}$, $\hat{c}t$) performed by a receiving user device 1 is a similar function to the Receive function described above, but for updating the list of tokens, PubTOKEN, maintained at the user device 1 to include the new public tokens downloaded with the message. The function returns an updated user state, $st'_u$, the identity of the user that sent the received update and an indication, b, of whether or not the private token, x, has been verified.

The first embodiment may be useful because it provides a computationally efficient method of authenticating a message in a group messaging protocol. Post-quantum signature schemes tend to be computationally expensive, which may make conventional signature methods such as those described with respect to Figures 1 and 2 less attractive for some applications. Accordingly, the first embodiment provides a method for authenticating a user that is computationally light.

**Variation on the first embodiment**

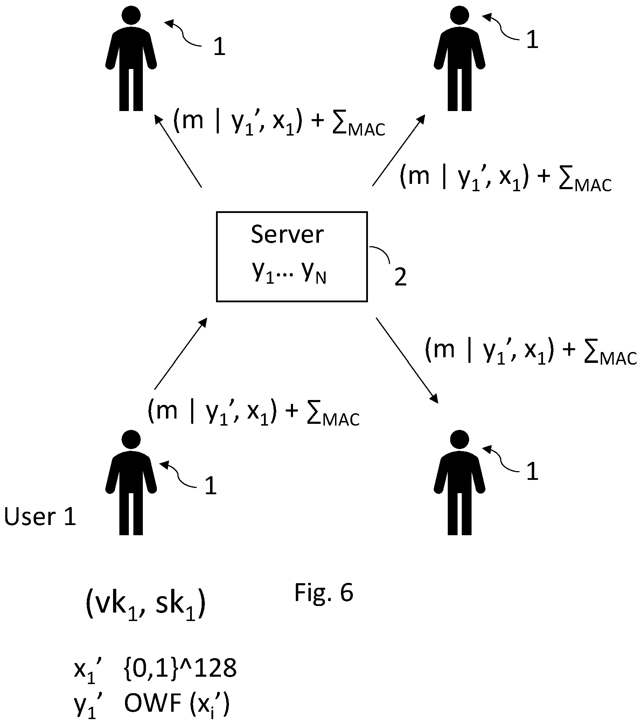

Figure 6 illustrates messaging according to a variation on the first embodiment. The first embodiment provides a light-weight authentication protocol. However, the scheme is not secure because the private key x and the message m are not cryptographically tied to one another in the process of sending the private key, x, and the message, m, to the server 2. The messaging protocol according to the variation on the first embodiment introduces a MAC key known only to the group users, $k_{MAC}$, to cryptographically tie x and m. This MAC key is known as a user MAC key, as it is known only to the group users.

As before, the devices are participating in an MLS protocol or similar. A user MAC key can be generated from the common group secret key gsk. The group secret key is derived from the underlying Continuous Group Key Exchange (CGKA) protocol. Accordingly, the group secret key is regularly updated/rotated by the CGKA. During initiation of the variation on the first embodiment, each user derives a user MAC key, $k_{MAC}$, from the group secret key. Accordingly, the user MAC key is secure and, by virtue of its derivation from the group secret key, achieves forward secrecy (i.e. even if the encryption key, SKE, is made public it won't compromise previous encryption) and post-compromise security (i.e. even if the user MAC key is made public, the system will operate securely once the user MAC key is updated). The user MAC key, $k_{MAC}$, is known only to the user devices. In other words, the user MAC key is kept secret from the server.

During an initial set-up each user device provides a public token, y, to the other user devices. The public token, y, is generated from a corresponding private token, x, using a one-way function. In the same way as described in the first embodiment, the private token is a binary string generated by the user device. The public tokens are distributed via the server. As with the first embodiment, the user device is not limited to issuing a single public key, y, at a time and may issue a plurality of public keys, y.

To send a message, a user (e.g. User 1) generates a new token pair, $x_1'$ and $y_1'$, as described in connection with the first embodiment using the one-way function. The user further generates a user MAC code, $\Sigma_{MAC}$, using the user MAC key, $k_{MAC}$, the message, and the current private token, $x_1$. The user device then sends $(x_1, y_1')$ along with $\Sigma_{MAC}$ as the group authentication token $\Sigma_G$ to the server.

Upon receipt of the group authentication token and the user MAC code, the server checks if the token $x_1$ is valid (i.e. $y_1 = OWF(x_1)$) and relays $(x_1, y_1', \Sigma_{MAC})$ in a download package $\sigma_v$, to all other users. Recall that the user mac code, $\Sigma_{MAC}$, does not need to (nor can it) be verified by the server.

Now, since the public token $y_1$ and $k_{MAC}$ are shared among the group, the user devices can i) verify the user MAC code upon receipt of the message and private token to confirm that the message and private token are linked and ii) trace the user associated with the download package, $\sigma$, by virtue of the public token, $y_1$.

The benefit of this method is that the messages are now unforgeable by a malicious server, since $k_{MAC}$ is unknown to the server. Further, a malicious user cannot impersonate another user because the private token, x, of the other user is unknown.

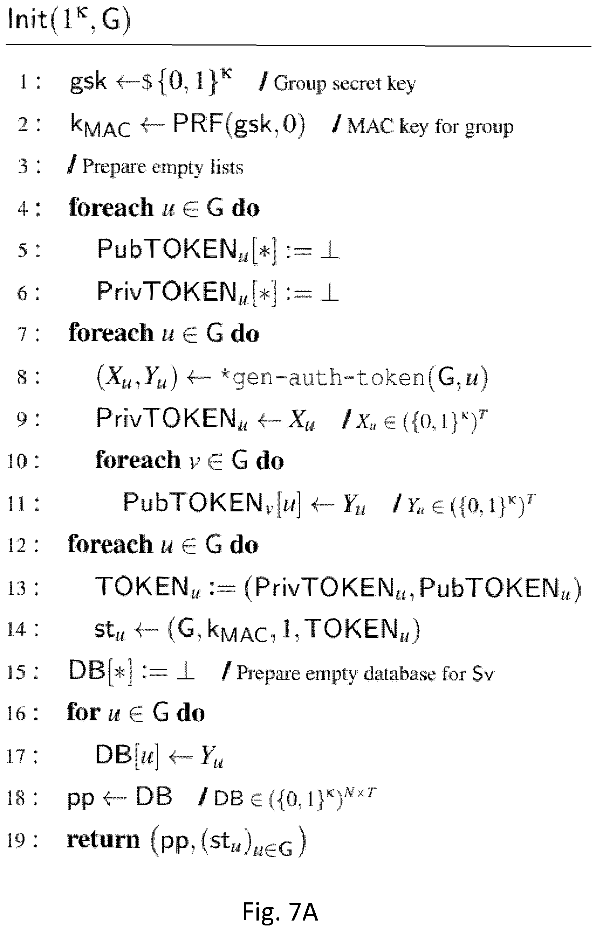

Figures 7A to 7C illustrate a protocol according to the variation on the first embodiment. In particular, differences between the first embodiment and the variation on the first embodiment are emphasised in the below description.

Looking at the initialization function, Init, shown in Figure 7A, a group secret key, gsk, is obtained. As noted above, continuous group key agreement is a feature of the MLS protocol, which allows each user device 1 in the group access to the group secret key, gsk. In step 2, a pseudo-random function, PRF, is applied by each user device to the group secret key, gsk, to generate a user MAC key, $k_{MAC}$, for the group. Steps 4 to 13 are the same as steps 2 to 11 of the Init function in the first embodiment. These steps, performed by the user devices 1, generate private and public tokens as previously described. In step 14, a user state, $st_u$, now includes the user MAC key.

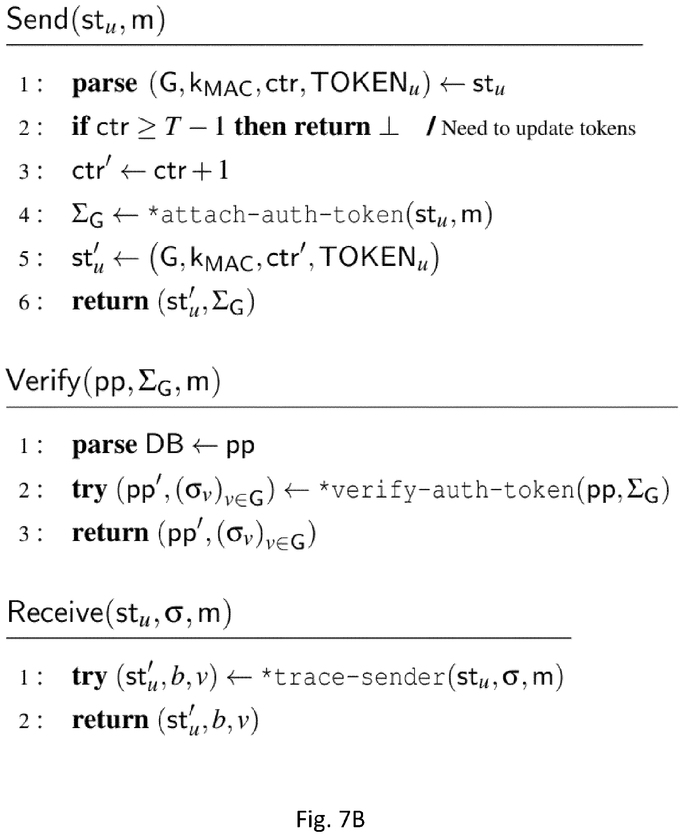

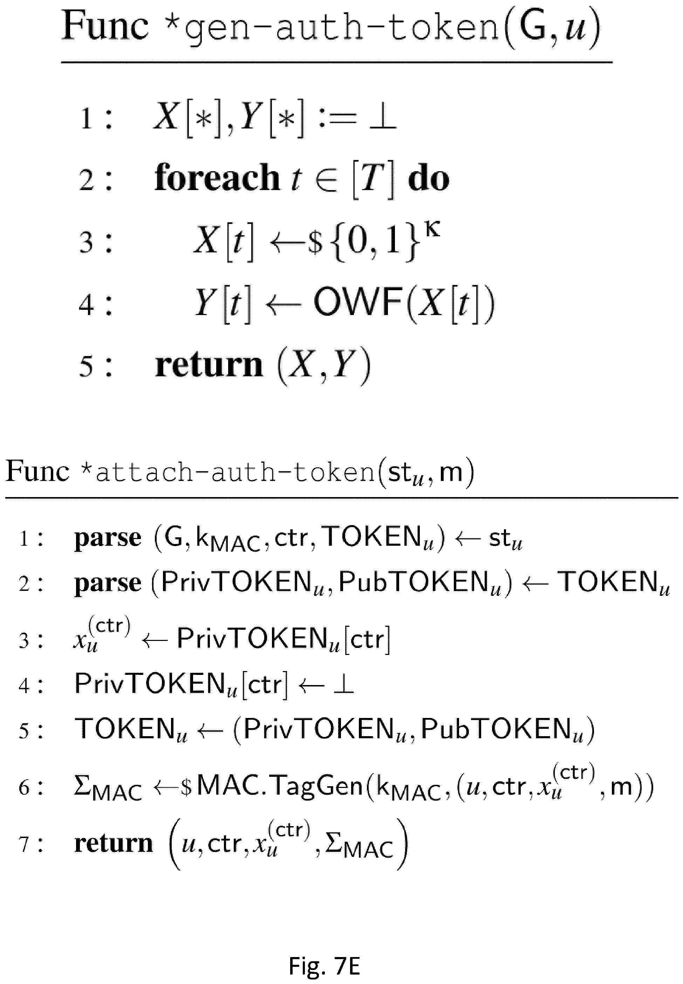

The Send function shown in Figure 7B is changed compared to the Send function described in connection with the first embodiment. The user MAC key $k_{MAC}$ is also parsed from the user state $st_u$ in step 1. In step 4 the function *attach-auth-token ($st_u$, m) shown in Figure 7E has changed. Referring to the *attach-auth-token ($st_u$, m) function, in step 6 of Fig. 7E, a user message authentica-

tion code (MAC) code, $\Sigma_{MAC}$, is generated using a MAC generation function on $(u, ctr, x_u^{(ctr)}, m)$, where m refers to the message to be transmitted, $x_u^{(ctr)}$ is the private token, u is a user identifier, and ctr is an index to enable the server 2 to match the received public key to a previously received public key. Note that the list of arguments of the function *attach-auth-token $(st_u, m)$ has therefore been expanded to include the message, m, as well as the state of the user, $st_u$. Referring back to the Send function in Figure 7B, the updated user state $st_u'$ is additionally updated with the user MAC key $k_{MAC}$.

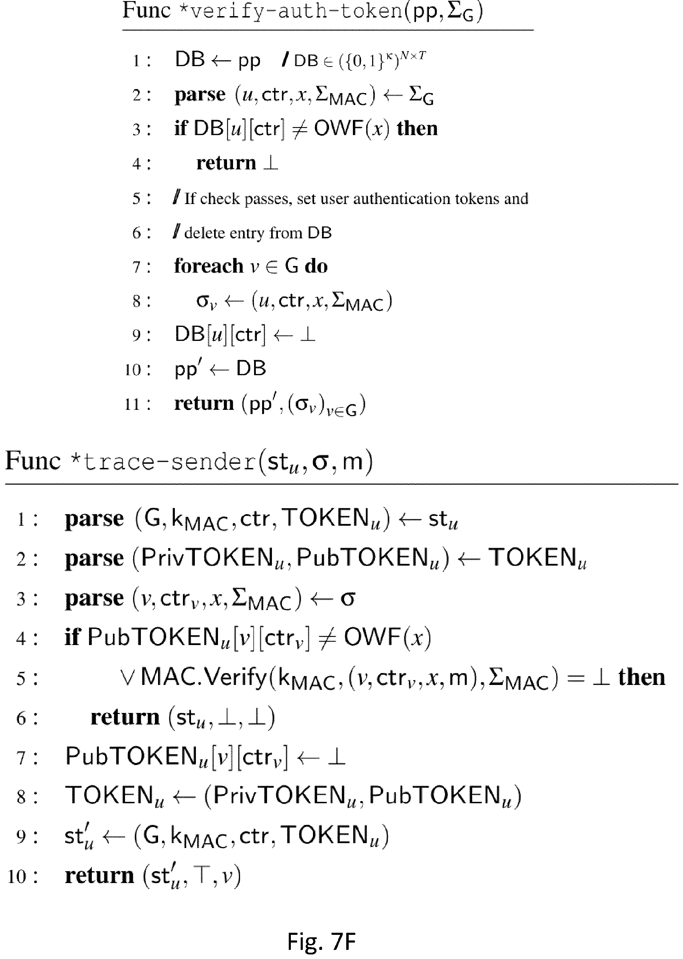

The Verify function performed by the server 2 and shown in Figure 7B differs from the first embodiment because the helper function *verify-auth-token $(pp, \Sigma_G)$ has changed. Referring to the *verify-auth-token $(pp, \Sigma_G)$ function shown in Figure 7F, in step 2 the user MAC code, $\Sigma_{MAC}$, is additionally parsed from the group authentication token $\Sigma_G$. The download package $\sigma_v$ is now also updated to include the user MAC code $\Sigma_{MAC}$ in step 8. It is noted that the server 2 does not, and cannot, check the user MAC code.

The Receive function performed by a user device 1 shown in Figure 7B differs from the first embodiment because the *trace-sender$(st_u, \sigma, m)$ function shown in Figure 7F has changed. In step 1 of the helper function *trace-sender$(st_u, \sigma, m)$, the user MAC key $k_{MAC}$ is parsed from the user state $st_u$. In step 5, the *trace-sender$(st_u, \sigma, m)$ function additionally checks the user MAC code, $\Sigma_{MAC}$, using the user MAC key, user identifier, v, counter, ctr, private token, $x_u^{(ctr)}$, message, m, and the MAC Verify function. If the check passes, the *trace-sender$(st_u, \sigma, m)$ function continues as in the first embodiment. Using the *trace-sender$(st_u, \sigma, m)$ function, the user has additionally checked that the message, m, is tied to the received private token, $x_u^{(ctr)}$.

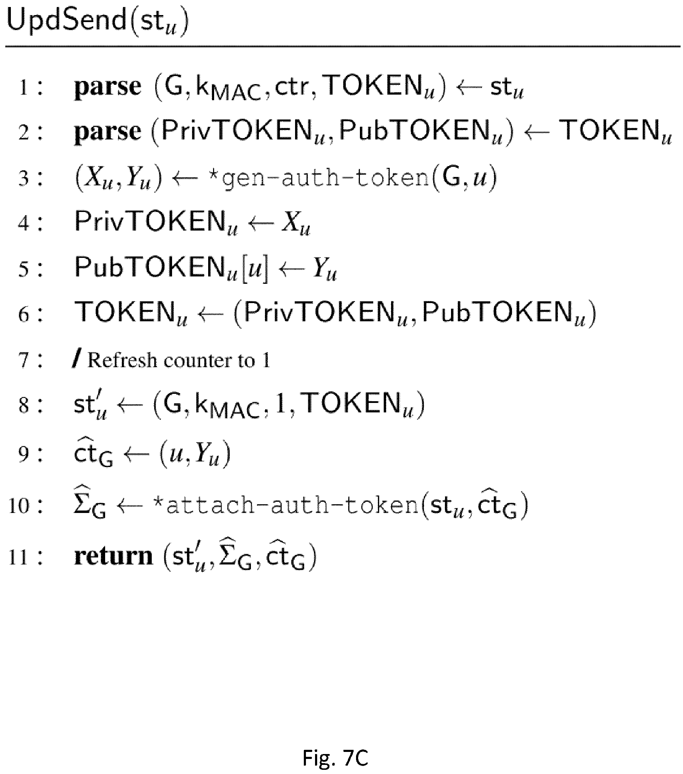

Looking at Figure 7C, the function UpdSend is changed in several ways compared to the first embodiment. In steps 1 and 8, the updated user state $st_u'$ has been changed to additionally include the user MAC key, $k_{MAC}$. Step 10 has changed because the helper function *attach-auth-token$(st_u,$

$$*\text{attach-auth-token}(\text{st}_u, \widehat{ct_G}))$$ has changed to include generating a user MAC code that ties the message to the private token. The function *attach-auth-

$$\text{token}(\text{st}_u, \widehat{ct_G})$$ for the variation on the first embodiment has been described above and the description is not repeated.

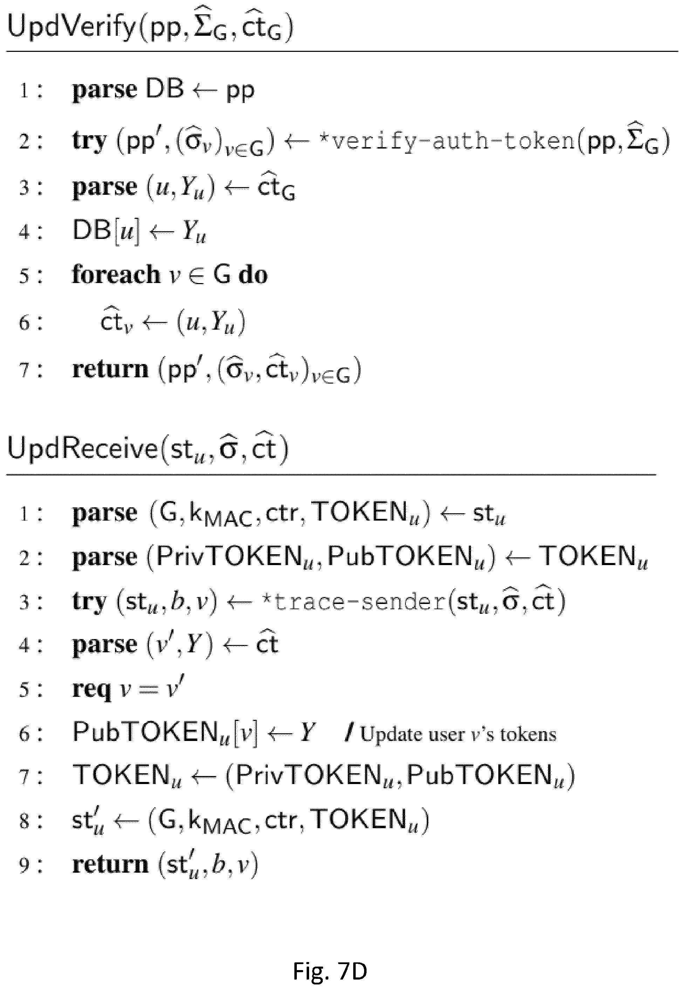

Referring now to Figure 7D, the function UpdVerify is changed because the helper function *verify-auth-token is changed to include a step of adding the received user MAC code to the download package $\sigma_v$. The function *verify-auth-token for the variation on the first embodiment has been described above and the description is not repeated.

The function UpdReceive is changed because the helper function *trace-sender $(st_u, \sigma, m)$ has changed to include a step of checking the received user MAC code against the received message (new public tokens) and private token. The function *trace-sender $(st_u, \sigma, m)$ for the variation on the first embodiment has been described above and the description is not repeated. Referring back to the function UpdReceive, in step 8 the updated user state $st_u'$ additionally includes the user MAC key $k_{MAC}$.

The variation on the first embodiment adapts the first embodiment to improve security. The use of the user MAC code to cryptographically tie the private key, $x_i$, and the message, mi, ensures a message cannot be separated from its corresponding private key, for example by a malicious server.

In the sections below subsequent embodiments are described. It will be appreciated that there are notational differences in the description of the variation of the first embodiment and the second embodiment. Namely, the user MAC key, $k_{MAC}$, referred to in the variation on the first embodiment is different to the MAC key, k_MAC, referred to in the second embodiment.

**Second embodiment**

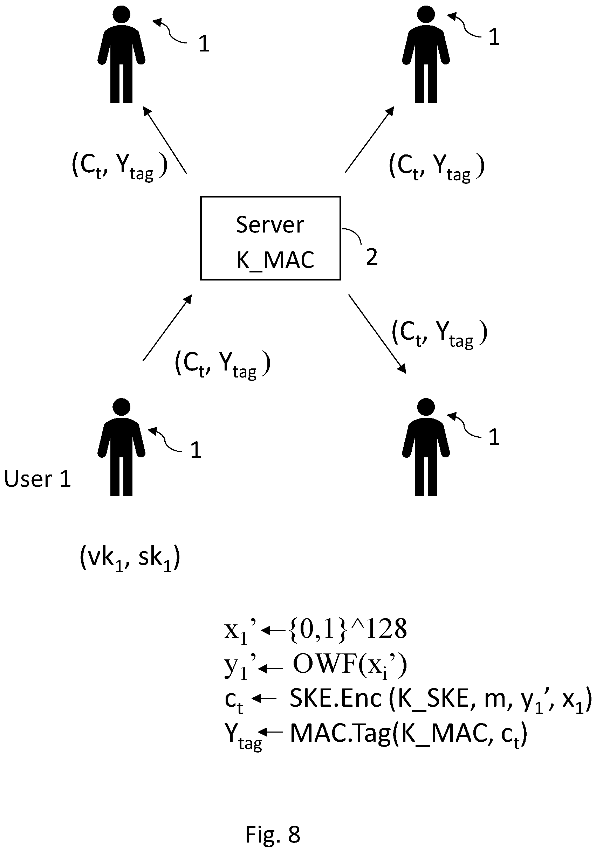

Figure 8 illustrates messaging according to a second embodiment. The first embodiment provided a light weight authentication protocol. However, the scheme was not anonymous because the server 2 could track which users were sending messages. The messaging protocol according to the second embodiment introduces a pair of encryption keys to provide user device anonymity with respect to the server 2. The user devices 1 in the second embodiment have an agreed symmetric encryption scheme including an encryption and a decryption function. As noted earlier, MLS generates a group secret key that is shared among users in a group. The group secret key is derived from the underlying Continuous Group Key Exchange (CGKA) protocol. Accordingly, the group secret key is regularly updated/rotated by the CGKA. During initiation of the second embodiment, each user derives a MAC key, k_MAC, and an encryption key, SKE, from the group secret key. Accordingly, the encryption key and MAC key are secure and, by virtue of their derivation from the group secret key, achieve forward secrecy (i.e. even if the encryption key, SKE, is made public it won't compromise previous encryption) and post-compromise security (i..e even if the MAC key is made public, the system will operate securely once the MAC key is updated). At least one of the user devices 1 provides a copy of the MAC key to the server 2.

During an initial set-up each user device provides a public token, y, to the other user devices. The public token, y, is generated from a corresponding private token using a one-way function. In the same way as described in the first embodiment, the private token is a binary string generated by the user device. The public tokens are distributed via the server. During distribution each public token is encrypted by the group secret key, SKE. As described below messages sent via the server are provided with a message authentication code (MAC) that is checked by the server before forwarding the public key to the other user devices. Accordingly, a ciphertext encrypting the public key is distributed via the server along with a MAC code generated based on the ciphertext. As with the first embodiment, the user device is not limited to issuing a single public key, y, at a time and may issue a plurality of public keys, y.

To send a message, a user (e.g. User 1) generates a new token pair, $x_1'$ and $y_1'$, as described in connection with the first embodiment using the one-way function. The user device 1 then encrypts the message, m, the new public token, y', and the current private token x, using the encryption key, SKE, to generate a ciphertext, Ct. Further, the user device 1 generates a message authentication code, $Y_{tag}$, of the ciphertext, Ct, using the MAC key, k_MAC. The user device 1 then sends the ciphertext, Ct, and the MAC code, $Y_{tag}$ to the server 2.

Upon receipt of the ciphertext and MAC code, the server 2 uses the MAC key to verify the MAC code, $Y_{tag}$. In accordance with a typical group messaging protocol, such as MLS, the server 2 has not been provided with the encryption key, SKE. Accordingly, the server 2 cannot read the ciphertext, Ct, or verify which user device 1 sent the message. However, the server 2 can, by using the MAC key to check the MAC code against the ciphertext, confirm that the ciphertext is from a member of the group and can prevent a third party from attacking the messaging system using a denial of service attack. If the MAC code matches the ciphertext, the server makes the ciphertext available to the group.

The receiver user device downloads the ciphertext from the server. The receiver user device can decrypt the ciphertext using the decryption function and the symmetric encryption key, SKE. As before, the receiver user device checks the private token from the ciphertext against stored public tokens to confirm the identity of the sender user device. The receiver user device also stores the new public token to allow receipt of a further message from the sender user device.

The MAC key and SKE key could be generated once for the group or could be successively regenerated in epochs of the group messaging protocol along with group secret generation in the group messaging protocol.

In the examples given, both the public token and private token are encrypted within the ciphertext during transit between the sender user device and the receiver user device via the server. However, in order to maintain anonymity, it is only necessary that the server does not have access to both the public token and the private token. Accordingly, in other implementations, one of the public token and the private token could be sent in unencrypted form between the sender user device and the receiver user device via the server.

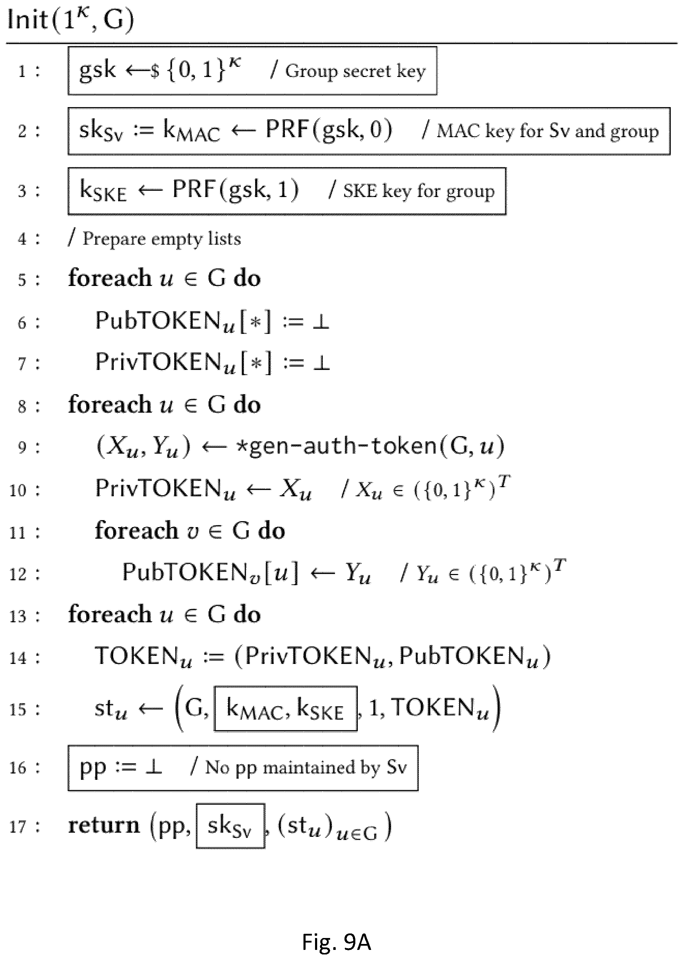

Figures 9A to 9F illustrate a protocol according to the second embodiment. The main differences between the first embodiment and the second embodiment are shown in boxes in Figures 9A to 9F.

Looking at the initialization function, Init, shown in Figure 9A a group secret key, gsk, is obtained. As noted above, the group secret key is a feature of the MLS protocol, which allows each user device 1 in the group access to the group secret key, gsk. In step 2, a pseudo-random function, PRF, is applied to the group secret key to generate a MAC key, $sk_{sv}$ for the server 2, again referred to as Sv. The pseudo-random function, PRF, is also used, in step 3, to generate the encryption key, SKE. Steps 5 to 14 are the same as steps 2 to 11 of the Init function in the first embodiment. These steps performed by the user devices 1 generate private and public tokens as previously described. In step 15, a user state, $st_u$, now includes the MAC key and the encryption key. In step 16, it is noted, as explained above, that as the tokens are encrypted, the server 2 no longer can check the received tokens. Accordingly, the server 2 no longer maintains a database of public tokens and no state of the database, pp, is maintained at the server, Sv.

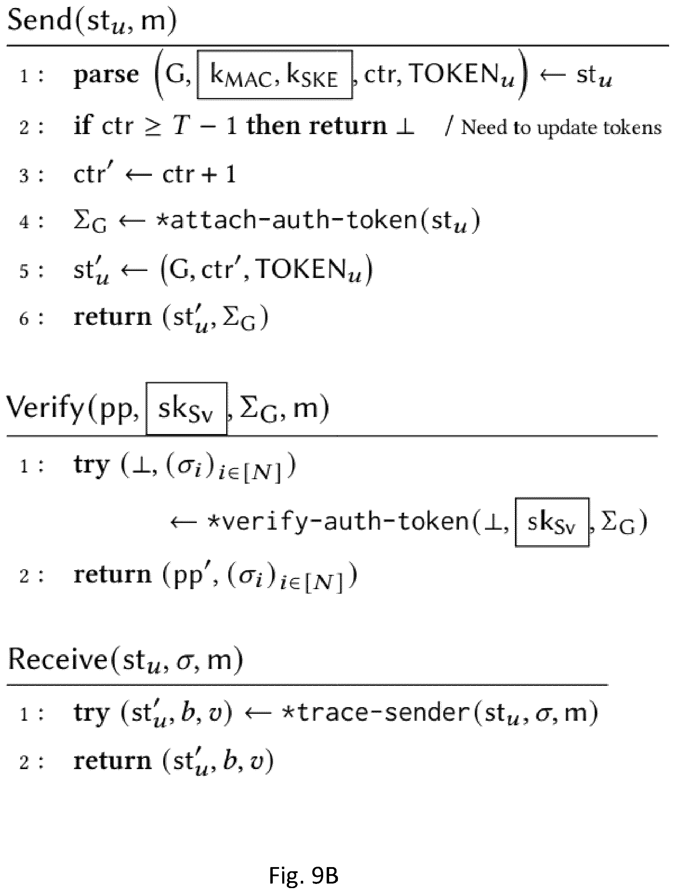

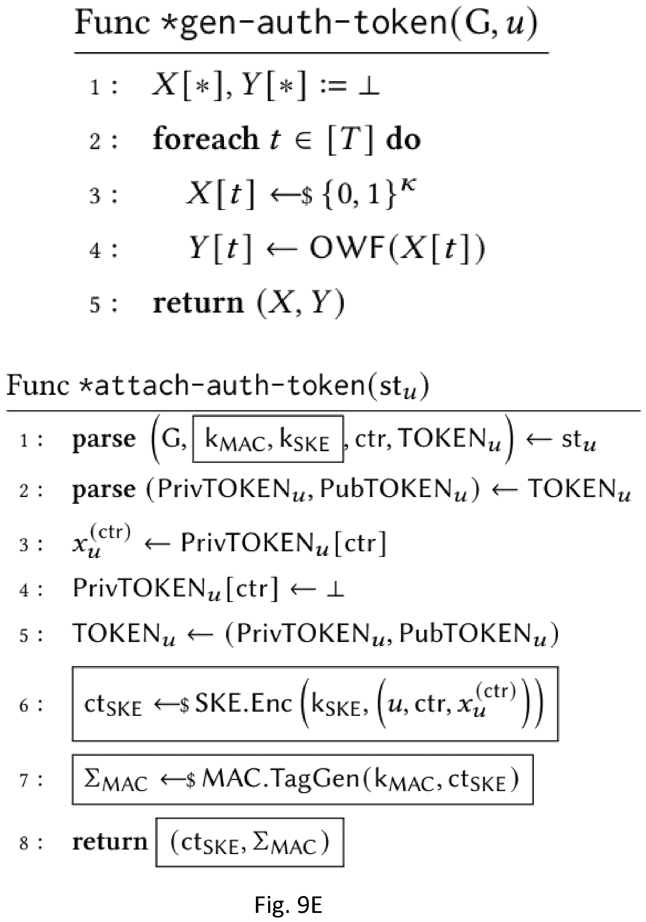

The Send function shown in Figure 9B is substantially the same as that described in connection with the first embodiment, except that the function *attach-auth-token ($st_u$) shown in Figure 9E has been changed. Referring to the *attach-auth-token ($st_u$) function, in step 6, the user identifier, u, counter, ctr, and private token, $x_u$, to be sent to the server 2 are encrypted using an encryption function SKE.Enc under encryption key, $k_{SKE}$ to generate a ciphertext $ct_{SKE}$. In step 7, a group message authentication code (MAC) is generated using a MAC generation function on the ciphertext, $ct_{SKE}$.

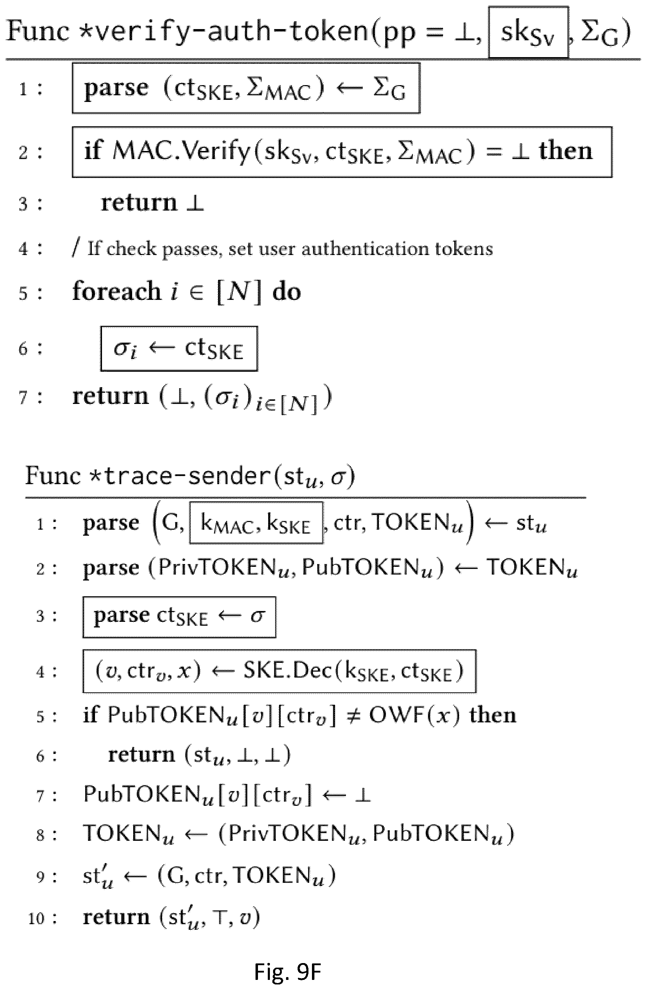

The Verify function, performed by the server 2, shown in Figure 9B is changed because the *verify-auth-token ($\perp$, $sk_{sv}$, $\Sigma_G$) has been changed. Referring to the *verify-auth-token ($\perp$, $sk_{sv}$, $\Sigma_G$) shown in Figure 9F, the server 2 checks the MAC code received from the user device 1 using the MAC generation function, the ciphertext and the MAC key. The function now returns an indicator that indicates whether the MAC code was valid and the download package, $\sigma_i$, which is the ciphertext that will be downloaded by receiving user devices 1 in the group.

The Receive function performed by a user device 1 differs from the first embodiment because the *trace-sender($st_u$, $\sigma$, m) function shown in Figure 9F has changed. Referring to the *trace-sender($st_u$, $\sigma$, m) in step 4, the user device 1 decrypts the ciphertext $ct_{SKE}$ using the encryption key, $k_{SKE}$, and decryption function, SKE.Dec to retrieve the sender's user identifier, v, the counter, $ctr_v$, and the private token. Steps 5 to 9 correspond to steps 4 to 8 described in connection with the verify function in the first embodiment and the description will not be repeated. The verify function checks the received private token, x, against the public tokens, y, maintained at the user device 1. The Receive function returns an updated state, $st'_u$, an indication of whether the token is verified, and the sender's user identifier, $v$.

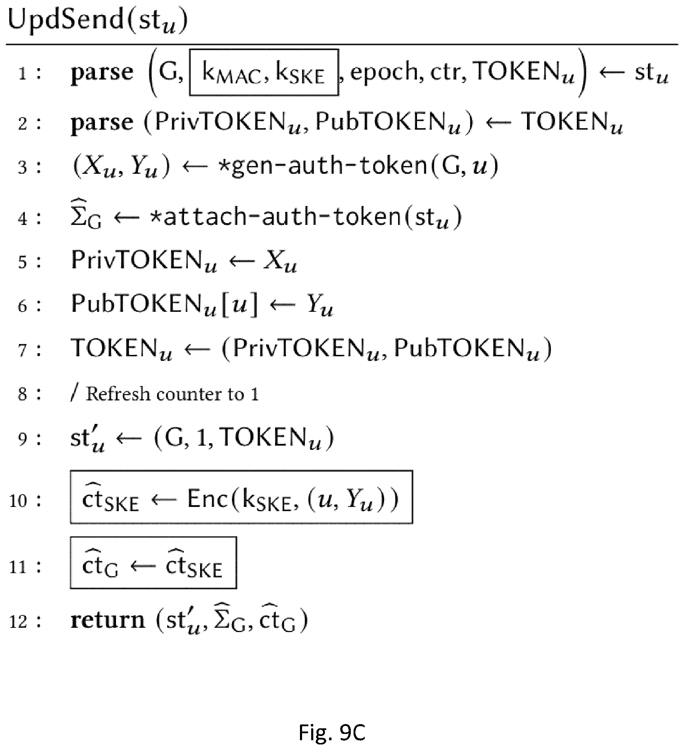

Looking at Figure 9C, the function UpdSend is changed in several ways compared to the first embodiment. In step 4, the function *attach-auth-token is used to generate an encrypted ciphertext and a MAC code. The function *attach-auth-token for the second embodiment has been described above and the description is not repeated. Step 10 corresponds to step 9 in the first embodiment and involves adding the new public token, $Y_u$, to the update package, $\widehat{ct}_{SKE}$. In the second embodiment, the user identifier and new public token, $Y_u$, are encrypted in the update package, $\widehat{ct}_{SKE}$, using the encryption key, $k_{SKE}$, and the encryption function of an agreed encryption scheme, to generate a ciphertext, $\widehat{ct}_{SKE}$, also referred to (see step 11) as $\hat{ct}_G$.

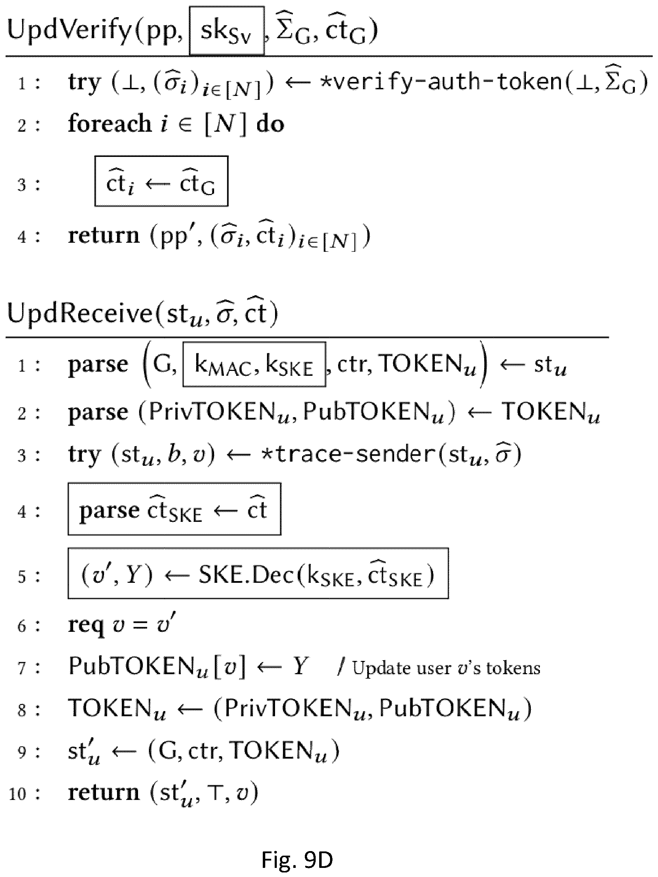

The function UpdVerify in Figure 9D is now essentially the same as the Verify function because the server 2 no longer maintains a list of public tokens. The *verify-auth-token function used in this procedure has been described above in connection with the Verify function of the second embodiment and the description is not repeated.

The function UpdReceive is changed in several ways. In step 3, the function *trace-sender, shown in Figure 9F, has been changed to include the step of decrypting the ciphertext in the download package, $\hat{\sigma}$. In steps 4 and 5, the ciphertext including the new public token, $\hat{ct}_{SKE}$, is decrypted using the encryption key, $k_{SKE}$. Steps 6 to 9 of the UpdReceive function are the same as steps 5 to 8 of the UpdReceive function described in connection with the first embodiment and serve to update the public tokens at the user device 1 based on the received new public token as previously described.

The second embodiment adapts the first embodiment to provide anonymity. By use of the MAC code, the server 2 can perform a check on incoming messages thereby preventing user devices 1 that are not a member of a group, G, from sending messages to the group, G. This has the effect of reducing the opportunity for denial of service attacks.

**Variation on the second embodiment**

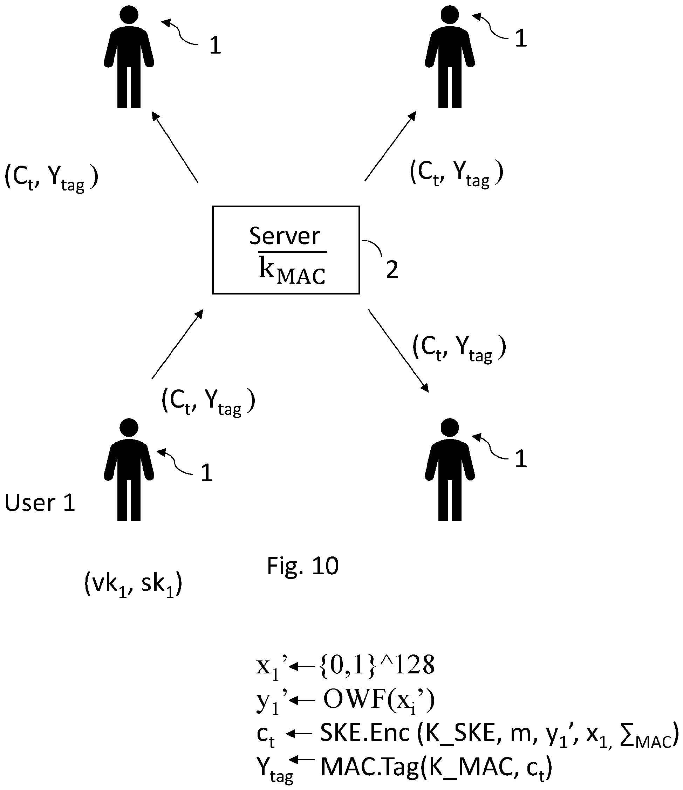

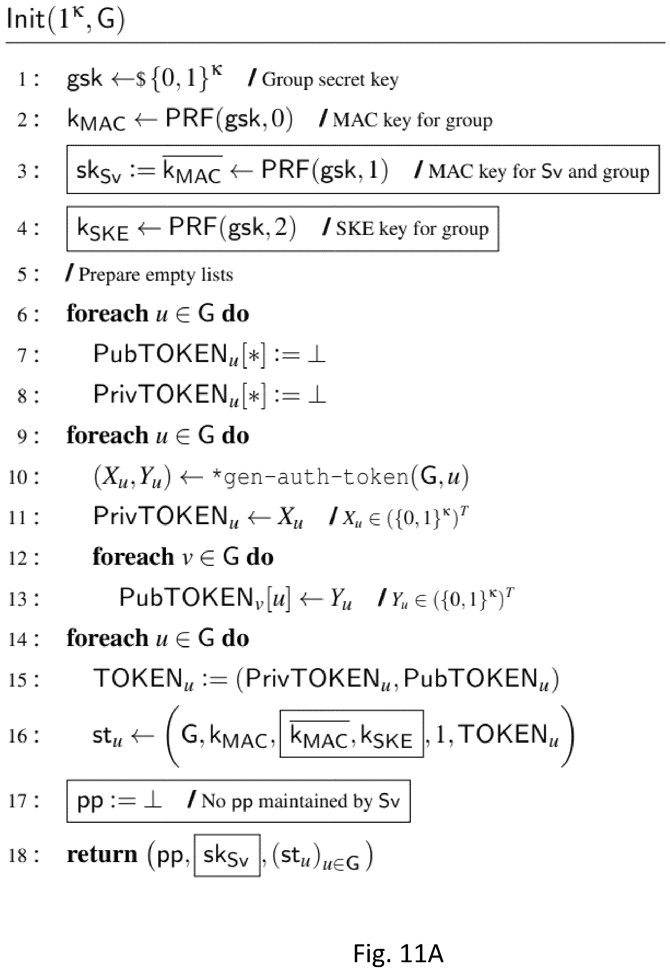

The idea of the variation on the first embodiment, that of introducing a user MAC key to cryptographically tie the message and the private key, can be applied in a similar manner to the second embodiment. Such a variation on the second embodiment is described here with reference to Figure 10 and Figures 11A to 11F.

Observe notational differences between the description of the second embodiment and the description of the variation on the second embodiment. What was referred to as the MAC key, k_MAC, in the second embodiment is referred to in the variation on the second embodiment and Figures 10 and 11A to 11F as the server MAC key $\overline{k_{MAC}}$, and the new MAC key introduced is henceforth referred to as the user MAC key $k_{MAC}$. The server MAC key is named as such because it is known by both the server 2 and the users/user devices 1. By contrast, the user MAC key is known only to the user devices, and is kept secret from the server 2. It is noted the user MAC key of the variation on the second embodiment is analogous to the user MAC key of the variation on the first embodiment.

The second embodiment ensures anonymity and anonymous blocklisting but has a weakness because private token, x, and message, m, are not cryptographically tied to one another in the process of sending the message and private token to the server. The messaging protocol according to the variation on the second embodiment introduces a user MAC key known only to the group users, $k_{MAC}$, to cryptographically tie the private token, x, and the message, m. As discussed earlier, such a user MAC key can be generated from the common group secret key, gsk, maintained by the CGKA protocol. The group secret key is derived from the underlying Continuous Group Key Exchange (CGKA) protocol. Accordingly, the group secret key is regularly updated/rotated by the CGKA. During initiation of the variation on the second embodiment, each user derives a user MAC key, $k_{MAC}$, from the group secret key. Accordingly, the user MAC key is secure and, by virtue of its derivation from the group secret key, achieves forward secrecy and post-compromise security. The user MAC key is kept secret from the server 2.

During an initial set-up each user device provides a public token, y, to the other user devices. The public token, y, is generated from a corresponding private token using a one-way function. In the same way as described in the second embodiment, the private token is a binary string generated by the user device. The public tokens are distributed via the server 2. During distribution each public token is encrypted by the group secret key, SKE. As described below messages sent via the server 2 are provided with a server message authentication code (MAC) that is checked by the server 2 before forwarding the public key to the other user devices. Accordingly, a ciphertext, Ct, encrypting the public key, y, is distributed via the server 2 along with a server MAC code generated based on the ciphertext. As with the first embodiment, the user device is not limited to issuing a single public key, y, at a time and may issue a plurality of public keys, y.

To send a message, a user (e.g. User 1) generates a new token pair, $x_1'$ and $y_1'$, as described in connection with the first embodiment using the one-way function. In addition, the user device 1 generates a user MAC code $\Sigma_{MAC}$ using the user MAC key $k_{MAC}$, the current private token, $x_1$, and the message. The user device 1 then encrypts the message, m, the new public token, y', and the current private token, x, and the MAC code $\Sigma_{MAC}$ using the encryption key, SKE, to generate a ciphertext, Ct. The user device 1 generates a server MAC code, $Y_{tag}$, of the ciphertext, Ct, using the server MAC key $\overline{k_{MAC}}$. The user device 1 then sends the ciphertext, $C_t$, the server MAC code, $Y_{tag}$, to the server 2.

Upon receipt of the ciphertext and server MAC code, the server 2 uses the server MAC key $\overline{k_{MAC}}$ to verify

the server MAC code, $Y_{tag}$. The server 2 has not been provided with the encryption key, SKE. Accordingly, the server 2 cannot read the ciphertext, Ct, or verify which user device 1 sent the message. However, the server 2 can, by using the server MAC key, check the server MAC code against the ciphertext, confirm that the ciphertext is from a member of the group and can prevent a third party from attacking the messaging system using a denial of service attack. If the server MAC code matches to the ciphertext, the server makes the ciphertext available to the group.

The receiver user device downloads the ciphertext from the server. The receiver user device can decrypt the ciphertext using the decryption function and the symmetric encryption key, SKE. As before, the receiver user device checks the private token from the ciphertext against stored public tokens to confirm the identity of the sender user device. The receiver user device also verifies the user MAC code $\Sigma_{MAC}$ to confirm that the private key is associated with the message. The receiver user device stores the new public token to allow receipt of a further message from the sender user device.

The server MAC key, user MAC key, and SKE key could be generated once for the group or could be successively regenerated in epochs of the group messaging protocol along with group secret generation in the group messaging protocol.

In the examples given, both the public token and private token are encrypted within the ciphertext during transit between the sender user device and the receiver user device via the server. However, in order to maintain anonymity, it is only necessary that the server 2 does not have access to both the public token and the private token. Accordingly, in other implementations, one of the public token and the private token could be sent in unencrypted form between the sender user device and the receiver user device via the server 2.

Figures 11A to 11F illustrate a protocol according to the variation on the second embodiment. In particular, the differences between the second embodiment and the variation on the second embodiment are emphasised in the below description.

Beginning with the initialisation function, Init, shown in Figure 11A, a group secret key gsk is obtained as in the second embodiment. As noted above, the continuous group key agreement is a feature of the MLS protocol, which allows each user device 1 in the group access to the group secret key, gsk. In step 2, a pseudo-random function, PRF, is applied to the group secret key to generate a user MAC key, $k_{MAC}$, for the group. Steps 3 to 15 of the variation on the second embodiment are the same as steps 2 to 14 of the second embodiment. In step 16, a user state, $st_u$, now includes the user MAC key $k_{MAC}$.

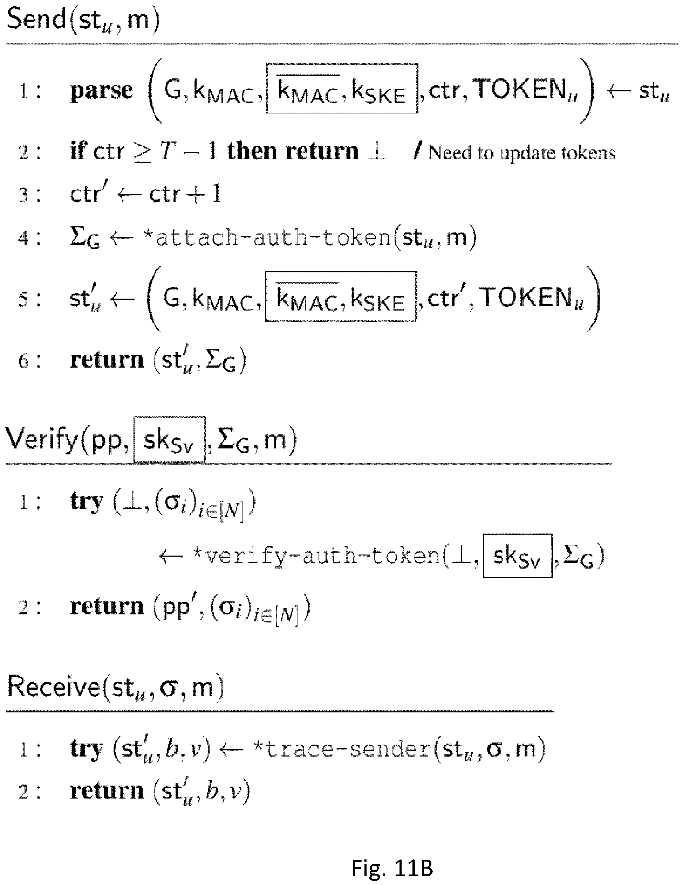

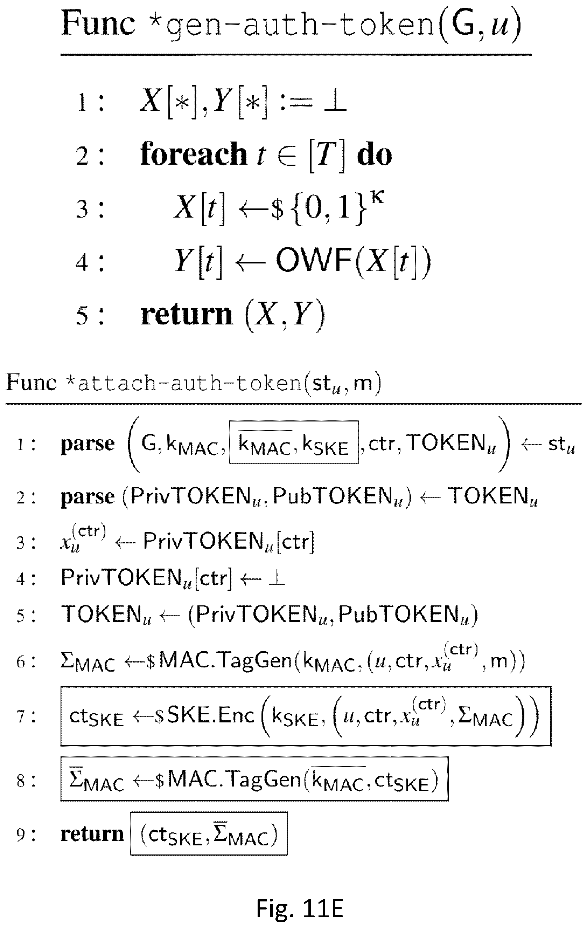

The Send function shown in Figure 11B is similar to the Send function described in connection with the second embodiment. In step 1, the user MAC key $k_{MAC}$ is now additionally parsed from the user state $st_u$. Further-more, the function *attach-auth-token ($st_u$, m) shown in Figure 11E has changed. Referring to the *attach-auth-token ($st_u$, m) function, in step 6, a user message authentication code (MAC) code, $\Sigma_{MAC}$, is generated using a MAC generation function on (u, ctr, $x_u^{(ctr)}$, m), where m refers to the message to be transmitted, $x_u^{(ctr)}$ is a private token, u is an identifier of a user, and ctr is an index to enable the receivers to match the private key to a previously received public key. Note that the list of arguments of the function *attach-auth-token ($st_u$, m) has therefore been expanded to include the message, m, as well as the state of the user, $st_u$. Referring back to the Send function of Figure 11B, in step 5 the updated user state $st_u'$ has additionally been updated to include the user MAC key $k_{MAC}$.

The Verify function performed by the server 2 in Figure 11B is the same as the Verify function performed by the server 2 in the second embodiment.

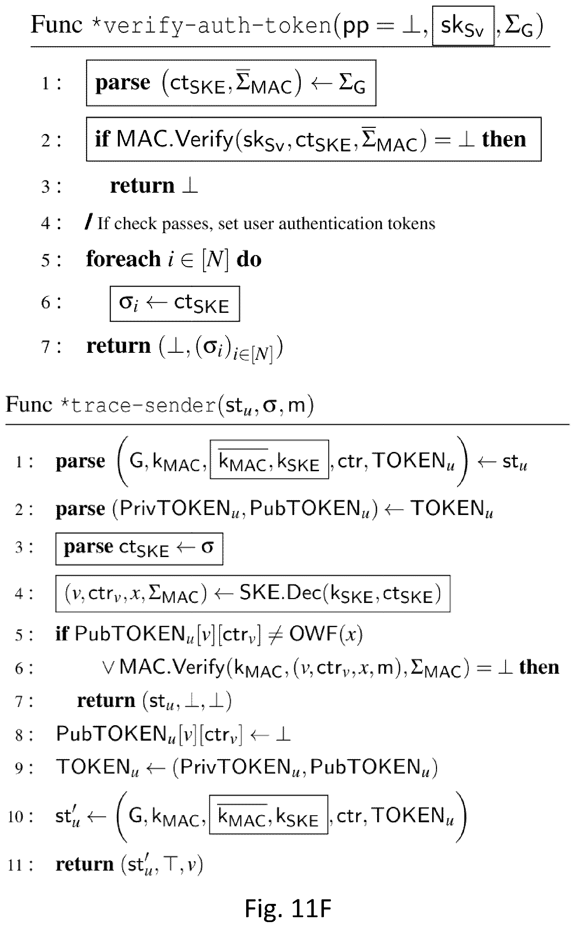

The Receive function performed by a user device 1 in Figure 11B differs from the second embodiment because the helper function *trace-sender($st_u$, $\sigma$, m) shown in Figure 11F has changed. Referring to *trace-sender($st_u$, $\sigma$, m) function in step 6, the function additionally checks the user MAC code using the user MAC key, (u, ctr, $x_u^{(ctr)}$, m), the user identifier, v, counter, ctr, private key, x, message, m, and a MAC generation function. If the check passes, the function continues as in the second embodiment.

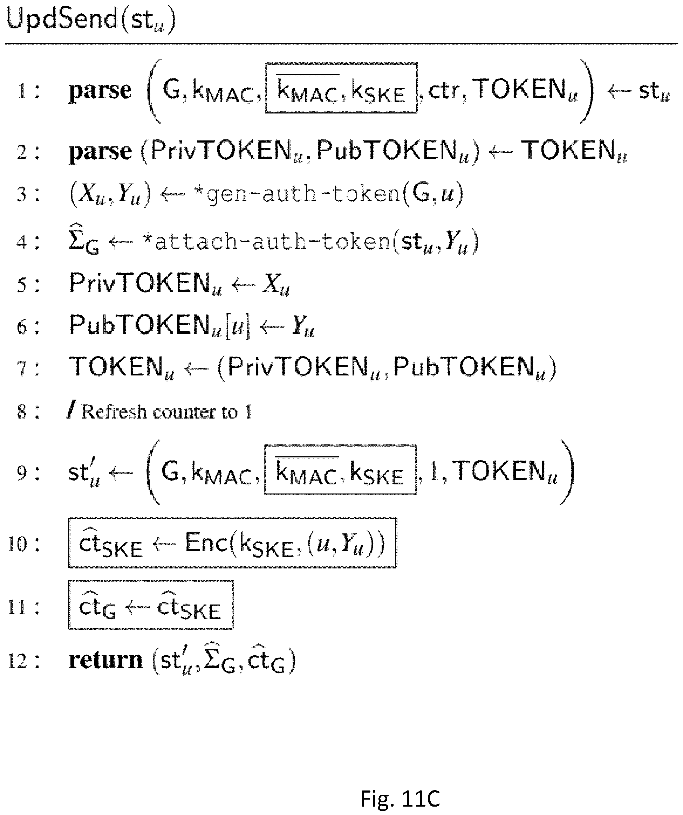

Looking at Figure 11C, the function UpdSend is changed in several ways compared to the second embodiment. In step 1, the epoch is no longer parsed from the user state $st_u$, but the user MAC key $k_{MAC}$ is parsed from the user state. Step 10 has changed because the helper function *attach-auth-token($st_u$, $Y_u$)) has changed to include addition of the user MAC code, $\Sigma_{MAC}$. The function *attach-auth-token for the variation on the second embodiment has been described above and the description is not repeated.

In step 9 of UpdSend, the updated user state $st_u'$ has been changed to additionally include $k_{MAC}$, $\overline{k_{MAC}}$ and $k_{SKE}$.

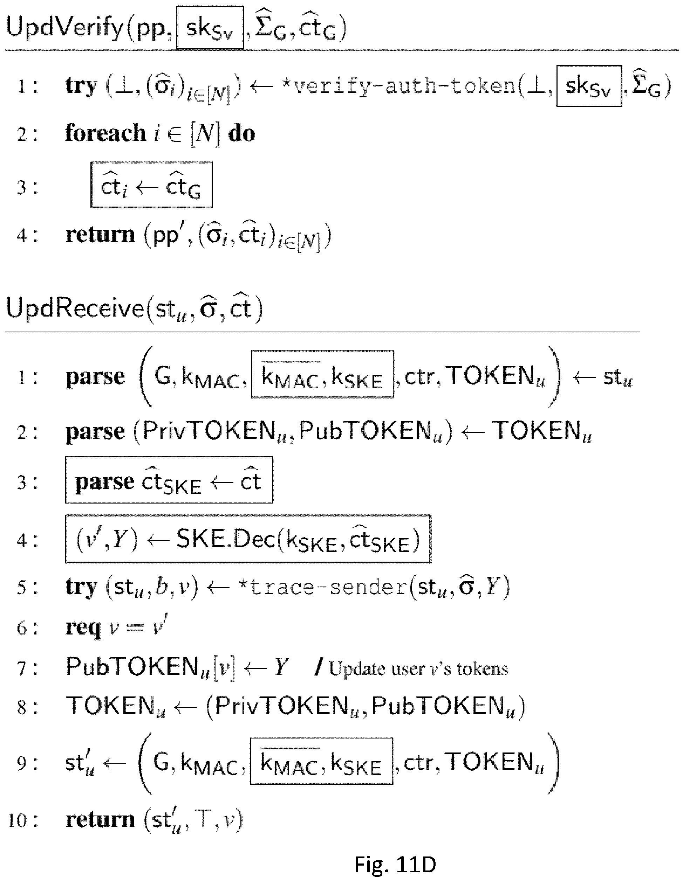

The function UpdVerify performed by the server 2 in Figure 11D is the same as the UpdVerify function performed by the server 2 in the second embodiment.

The function UpdReceive performed by the user device 1 in Figure 11D is changed in several ways when compared to the function UpdReceive in the second embodiment. Firstly, the user MAC key is additionally parsed from the user state. The helper function *trace-sender($st_u$, $\sigma$, Y) is now called after the ciphertext is decrypted. Furthermore, the helper function *trace-sender is changed to include checking the user MAC code against the user identifier, v, counter, ctr, message, m, and private token, x. The function *trace-sender for the variation on the second embodiment has been described above and the description is not repeated. In step 9, the updated user state $st_u'$ has been changed to additionally include $k_{MAC}$, $\overline{k_{MAC}}$ and $k_{SKE}$.

The variation on the second embodiment adapts the second embodiment to improve security. The use of the user MAC key to cryptographically tie x and m ensures a message cannot be separated from its corresponding private key, for example by a malicious server.

**Third embodiment**

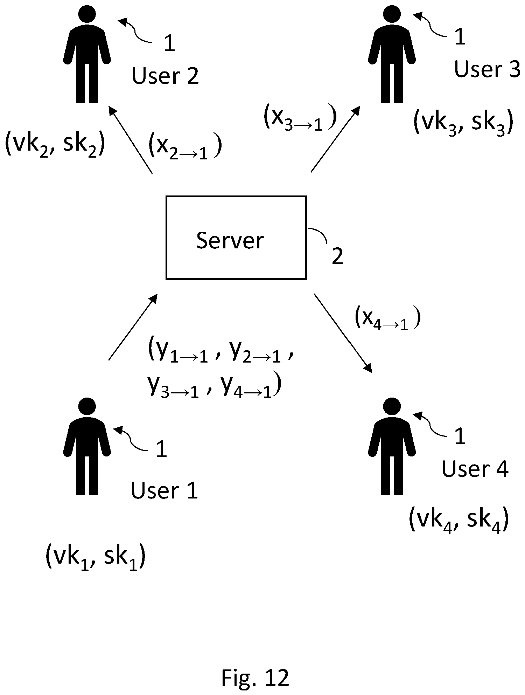

Figure 12 is a schematic diagram illustrating a third embodiment. The second embodiment may be vulnerable to denial of service attacks from within the group. For example, in connection with the second embodiment, a user device 1 within the group could create garbage ciphertexts and add a valid MAC to each ciphertext. The server 2 will check the MAC and forward the messages despite the ciphertexts being of no value. In order to mitigate this problem, it is desirable that the users with the group be traceable so that actions of a malicious user can be mitigated.

According to the third embodiment, rather than each user device 1 generating their own tokens, users generate tokens that allow other users to send messages to them. This involves a relatively expensive initiation phase in which the tokens are generated and distributed. Figure 12 shows four user devices 1 during an initiation phase. Figure 12 only illustrates generation and distribution of tokens by User 1, but in practice each user may generate and distribute tokens in order to allow messages to be sent to that user. As with previous embodiments, the private tokens, x, are generated as a binary string and public tokens, y, are generated based on a one-way function that is known to all user devices 1 in the group and the server 2. The notation a $\rightarrow$ b indicates that a message may be sent from user device a to user device b. Accordingly, private token x 2$\rightarrow$1 is a token that may be used by user 2 to send a message to user 1. Each user device 1 maintains a private/public key pair. The private tokens, x, are generated by user 1, encrypted using the appropriate public keys, and distributed to the other users in encrypted form so that the private tokens are securely transferred and can be decrypted by the receiving user devices 1. For security reasons, User 1 also generates a private token for itself. As shown in Figure 12, User 1 uploads the public tokens, y, to the server 2, which stores the public tokens in a database. The user devices may download the public tokens from the database and store them locally.

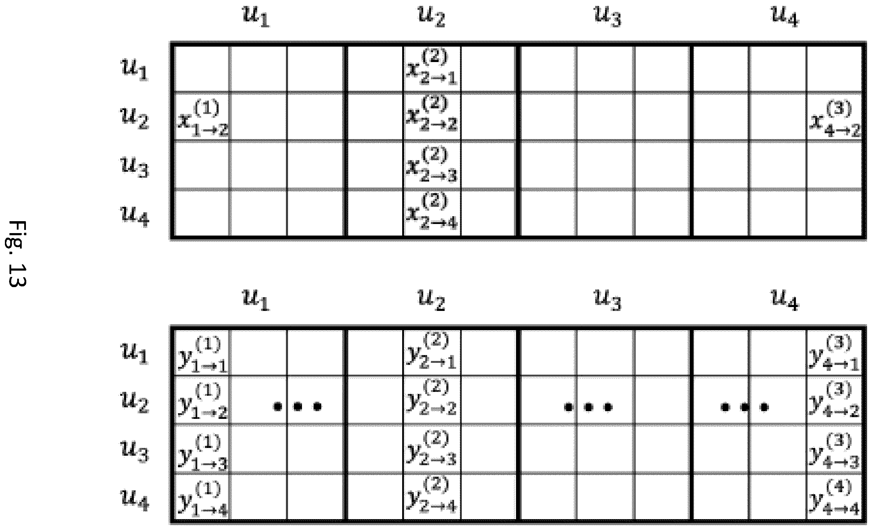

Figure 13 shows two tables. The upper table shows stored private tokens, x, and the lower table shows stored public tokens, y. In the example shown, each device has issued three tokens per user so that a user may send at most three messages before the public tokens in the lower table needs to be refreshed. The lower table storing the public tokens, y, may be stored on the server 2.

In use, a user that wants to send a message, m, to another user looks up a received private token, x, that was received from that user. A request is sent to the server 2 that includes the message, m, and the associated private token, x, for each device in the group that is to receive the message. The server 2 checks, using the one-way function that is known to each user device 1 and the server 2, that each received private token corresponds to a public token that was uploaded to the server 2. If the check is passed, the message is made available to the user devices 1 within the group. The user devices 1 in the group can download the message and an associated private token and can either check the private token against the private token that was issued to the sender or against the associated public token.

In this embodiment, messages that are made available by the server 2 are checked against the public tokens such that the receiving user device 1 knows who is sending the message. Accordingly, if a user behaves maliciously the user can be identified.

A development of the third embodiment reduces the need for periodically regenerating tokens. Instead of issuing a number of private tokens, x, to each user to allow them to send messages, each user device 1 may instead issue to each other user in a group a respective private seed token that may be used in conjunction with a pseudorandom function to generate the private tokens. This reduces the overhead in the initiation phase.

A further development of the third embodiment relates to anonymity of the users. If the server 2 stores the table in the form shown in the lower table in Figure 13, the server 2 will be able to trace which user sends subsequent messages because messages from the same user are checked using adjacent columns in the lower table. In order to address this, the users may generate a permutation key from a group secret key in the MLS protocol. Each user device 1 may write their generated public tokens to the server 2 using indexes generated in accordance with the determined permutation key and another value, such as an epoch value that is incremented each time the public tokens are updated. In this way, the public tokens are stored in a randomised order on the server 2 and the server 2 is unable to track which users send messages.

A feature of implementations of the third embodiment is that once a user in a group exhausts the public tokens on the server 2, the user must wait until all the other users perform an update before being able to send a message again otherwise the server 2 will reject the message because there is no corresponding public token stored on the server 2. If there is a large asymmetry in the number of messages sent by each user or if some users remain inactive for extended periods, this feature may be undesirable.

A way of mitigating this issue is to adaptively modify the number of public tokens issued for each user in each epoch to allow some users to send more messages than others. In a case that this is implemented with anonymity as discussed above, the server 2 can observe differing numbers of total tokens but cannot deduce how many tokens were issued for any particular user.

In further implementations, rather than waiting for all users of the group to update their tokens for the epoch, a subset of users may send messages within the group after a limited number of updates to the set of public tokens for a next epoch have been received. The upside of this approach is that users can update their tokens and start sending messages without waiting for all users to perform an update. A downside of this approach is that the anonymity of the user devices 1 is limited to the size of the sub-group of user devices 1 who have updated.

In some implementations, the second and third embodiments may be combined. As noted above, the second embodiment is anonymous and efficient, but lacks user traceability. Accordingly, the third embodiment may be implemented and, in a case that the third embodiment is implemented and fewer than a predetermined number of user devices 1 in a group, G, have updated their tokens, the method may switch to communication using the second embodiment (or variation on the second embodiment) until other user devices 1 have updated their tokens. This hybrid approach combines the benefits of both the second and third embodiments.

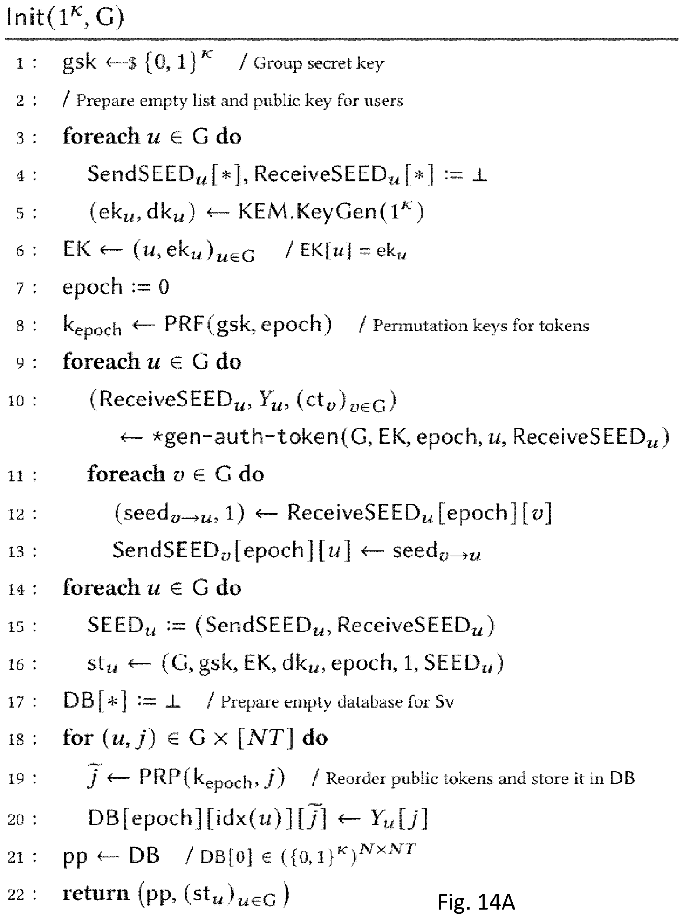

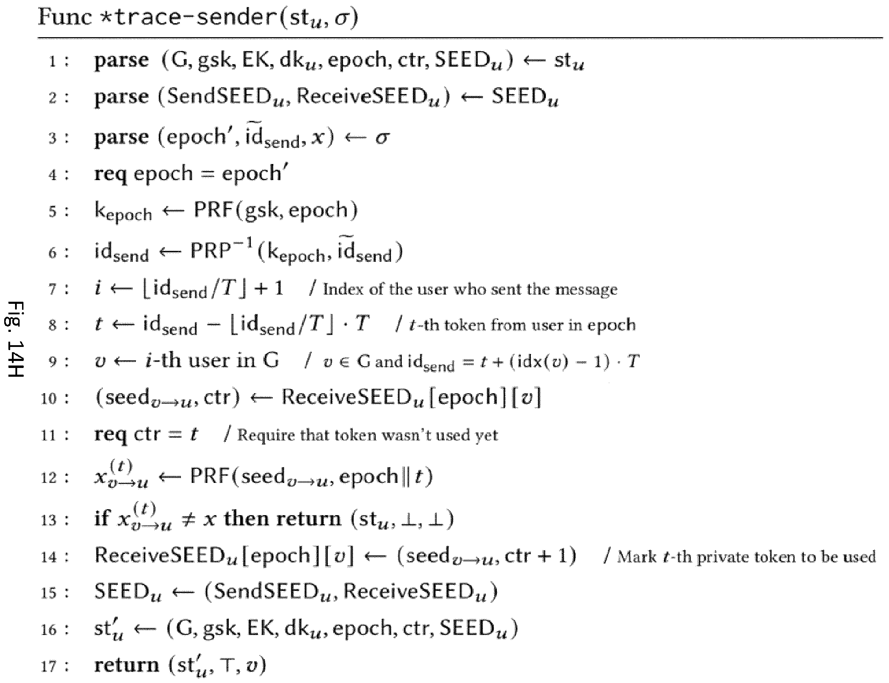

Figures 14A to 14H illustrate a protocol according to the third embodiment. Looking at Figure 14A, an Init function is performed by user devices 1 in an offline phase in which seeds are distributed among the user devices 1. The Init function is performed by each user device 1. In step 1, a group secret key, gsk, is obtained. As in earlier embodiments, the group secret key is a feature of the MLS protocol, which allows distribution of the group secret key to each user device 1 that is a member of the group. Steps 4 to 8 are performed for each user device 1 in a group for group messaging. Two lists, $SendSEED_u$ and $ReceiveSEED_u$ are prepared. public-/private key pairs $(ek_u, dk_u)$ are generated using a key generation function of a key encapsulation mechanism, such as Hashed ElGamal KEM or the NIST post-quantum computing standard Kyber. A user identifier and the encryption key form an object EK. The encryption key is a public key that is made available to group, such as by publication on the server 2. An epoch is set to 0 and permutation keys for an epoch, $k_{epoch}$, are generated in step 8 based on the epoch and the group secret key, gsk.

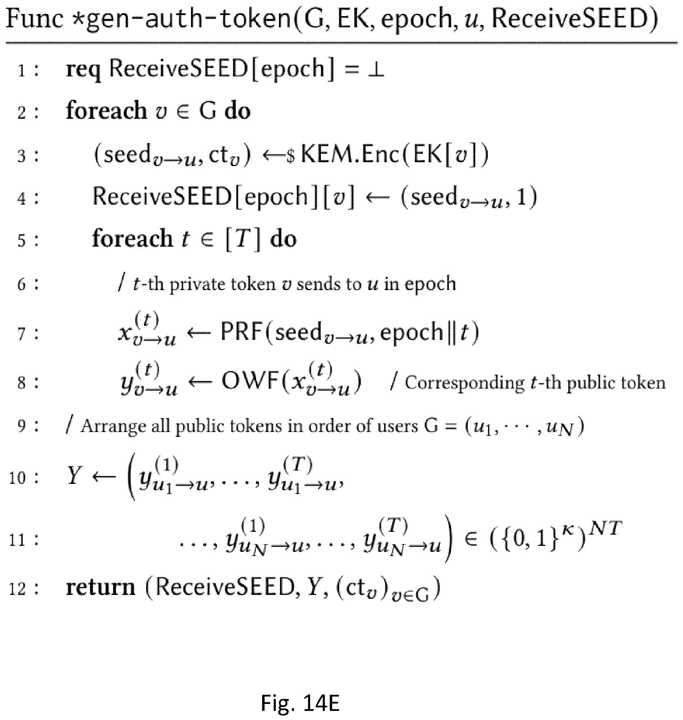

In step 10, a function *gen-auth-token is invoked, which is illustrated in Figure 14E. In step 3 of *gen-auth-token, the value EK (which is the user identifier and the generated encryption key, $ek_v$) for each user is used with an encryption function of the key encapsulation mechanism. The encryption function generates a seed value for each user device 1 of the group and a ciphertext, $ct_v$, that encrypts the seed under the corresponding user's public key. This process is repeated for each member of the group to generate a $seed_{v \rightarrow u}$ for each user, v, in the group. In step 4, the generated seed is included in the value ReceiveSEED for the given epoch. Steps 5 to 8 generate T public and private tokens from the generated seed. In steps 7, a pseudo random function, PRF, is used to generate T private tokens from the seed generated in step 4. In step 8, the one-way function that is known to the user devices 1 and the server 2, OWF, is used to generate T public tokens from the generated T private tokens. In step 9, the public tokens are ordered by users of the group. The ordered sets of T public tokens ordered by user are set as Y as illustrated in step 10. The function *gen-auth-token returns the seed list, Receive-SEED, that is an ordered list of public tokens, Y, and the ciphertexts, $ct_v$, that are encrypted under other user devices public keys and will allow the other user devices 1 to receive the seeds.

Returning to the Init function illustrated in Figure 14A, steps 12 and 13 store the seed that each user device 1 generated for itself so that it is able to receive a copy of its own messages, in the corresponding entry in the $ReceiveSEED_u$ list.

Steps 14 and 15 defines an overall list, SEED. based on the lists SendSEED and ReceiveSEED and step 16 defines a user state, $st_u$.

In step 17 a database is prepared at the server 2, referred to as Sv. In steps 18 to 21, each user device 1 uploads their public tokens to the database DB with the public tokens re-ordered in accordance with a pseudo-random permutation function, PRP, under the epoch key, $k_{epoch}$.

Although not illustrated, the ciphertexts, $ct_v$, are uploaded to the server 2 and downloaded by the respective user devices 1. The user devices 1 use their private keys, $dk_u$, to decrypt the ciphertext using a decryption function of the key encapsulation mechanism. Each decrypted seed is added to the SendSEED list at the user device 1 for sending to the user device 1 from which the seed was received.

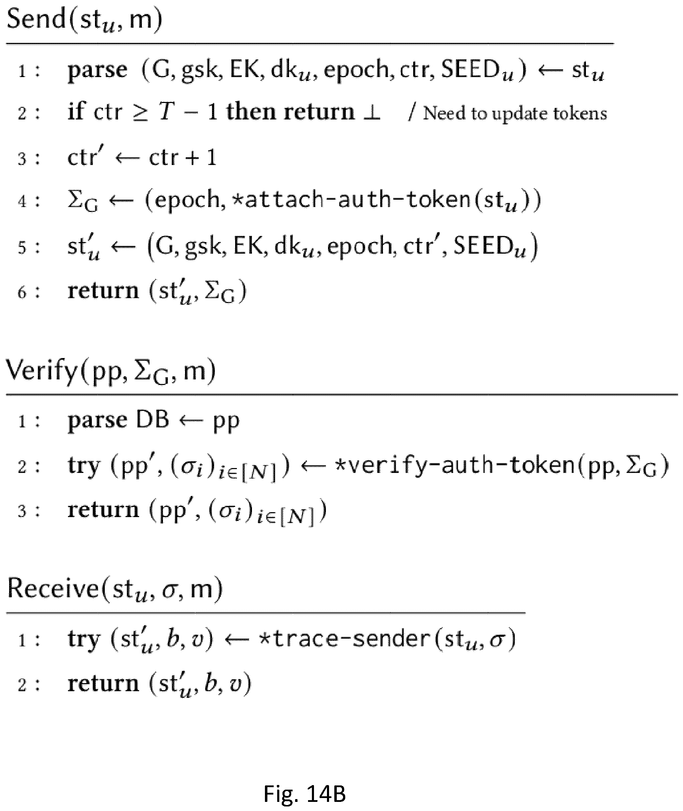

The Send function illustrated in Figure 14B is used to generate a group authentication token, $\Sigma_G$, for use when sending a message, m. In steps 1 and 2, the user device 1 parses the user state, $st_u$, and checks a counter, ctr, to see if the tokens at the server 2 need updating. In step 3, the counter is updated and in step 4, a function *attach-auth-token($st_u$) is used to generate the group authentication token, $\Sigma_G$.

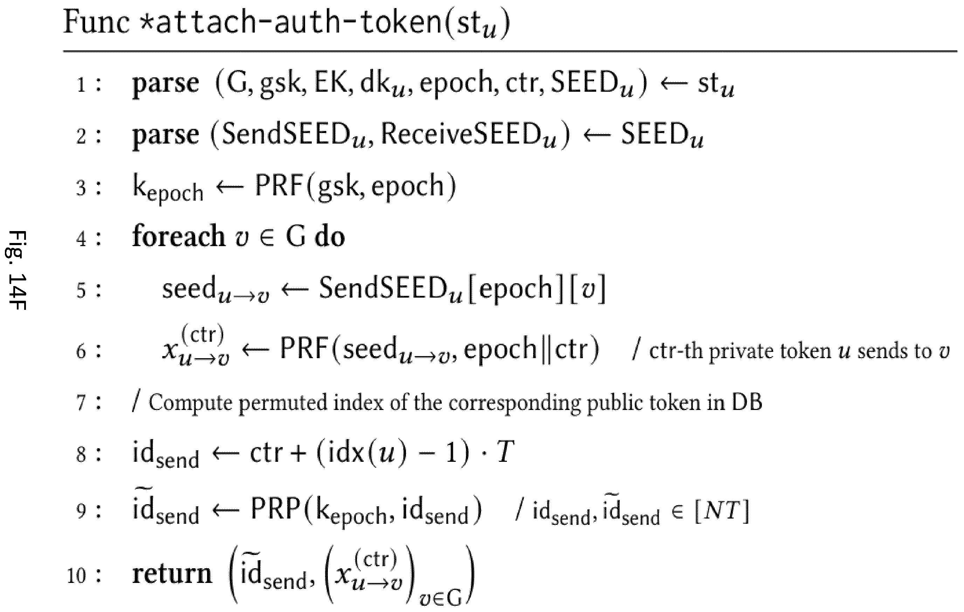

The *attach-auth-token($st_u$) is illustrated in Figure 14F. In steps 1 and 2 the user state, $st_u$, and the $SEED_u$, are parsed. In step 3, the permutation key, $k_{epoch}$, is generated in the same way as described in connection with step 8 of the Init function. In steps 4 to 6, the $seed_{u \rightarrow v}$ is retrieved from SendSEED. A pseudo-random function is used to generate a private token, $x^{(ctr)}_{u \rightarrow v}$ based on the counter, ctr, the seed, $seed_{u \rightarrow v}$, and the epoch. It is noted that the generated private token was generated using the same method at step 7 of the *gen-auth-token function described above in connection with the Init function. Accordingly, a corresponding public token is available in the database, DB, on the server 2. Steps 7 to 9 relate to computing the permuted index of the corresponding public token in the database using the pseudo-random permutation function, PRP. The function *attach-auth-token returns a permuted index, $\widetilde{id}_{send}$ , that identifies the location of a corresponding public token in the database on the server 2 and the set of private tokens for sending the message to the group user devices 1.

Returning to the Send function illustrated in Figure 14B, in step 5, the user state, $st_u$, is updated with the updated counter. The Send function returns the updated user state, $st'_u$, and the group authentication token, $\Sigma_G$.

Figure 14B also illustrates a Verify function performed by the server 2 which receives a message, m, and a group authentication token, $\Sigma_G$, from a sender user device 1. In step 1, the server 2 determines the state, pp, of the database, DB. In step 2, the server 2 uses the *verify-auth-token (pp, $\Sigma_G$). The final step of the Verify function is to return the output of the function *verify-auth-token (pp, $\Sigma_G$).

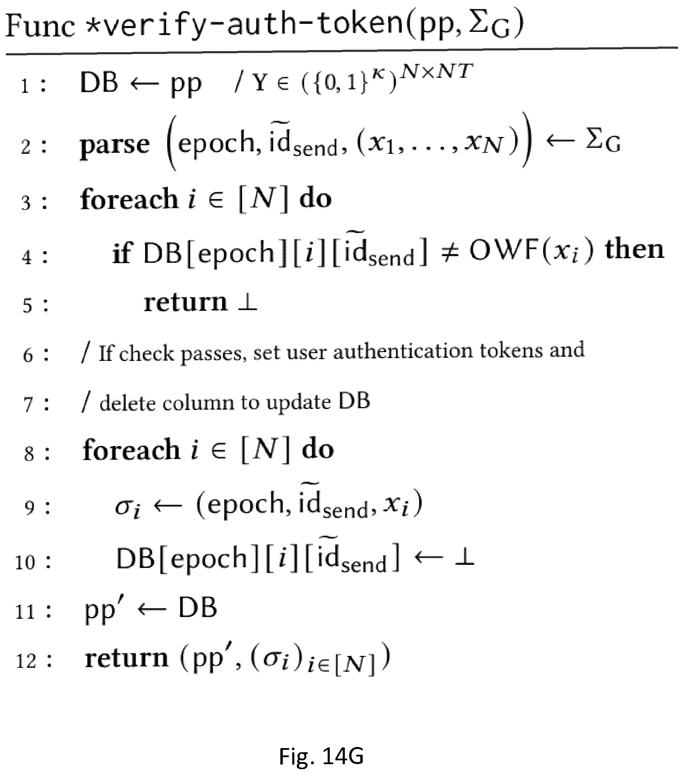

The *verify-auth-token (pp, $\Sigma_G$) function is illustrated in Figure 14G. In step 1, the state of the database, pp, is obtained that it includes public tokens, Y. In step 2, the received group authentication token, $\Sigma_G$, is parsed to identify the epoch, the permuted index, $\widetilde{id}_{send}$ , and the set of private tokens. In steps 4 to 7, the server 2 checks the portion of the database associated with the permuted index, $\widetilde{id}_{send}$ , to check the received private tokens against the corresponding uploaded public tokens, Y. The check is performed using the one-way function, OWF. If the check is passed, the server 2 deletes the column of public tokens and generates download packages. In steps 8 and 9, the server 2 generates a download package, $\sigma$, for each user device 1 that is to receive the message. The download package includes the epoch, permutation index, and the associated private token for that user device 1. In steps 10 and 11 the database state is updated. The function *verify-auth-token (pp, $\Sigma_G$) returns an updated database state and download packages for the user devices 1 in the group, $\sigma_i$.

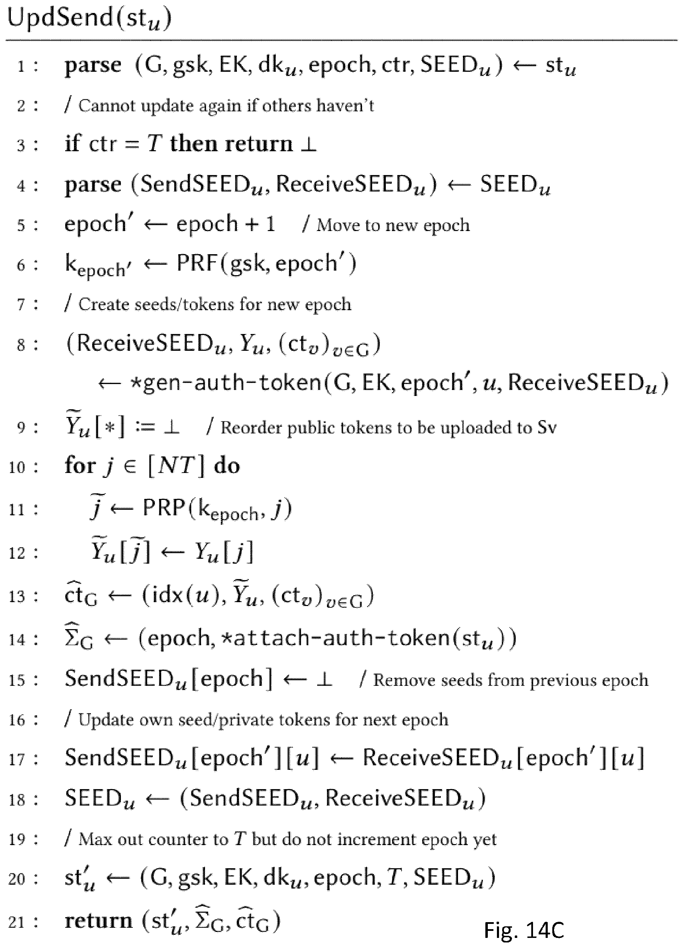

Figure 14C shows an UpdSend function performed by a user device 1 to refresh the public tokens according to the third embodiment. As before the purpose of the UpdSend function is to generate public tokens to refresh the public tokens on the server 2 and to generate a group authentication token, $\Sigma_G$, to be sent with the update. Step 1 parses the current user state, $st_u$. Step 2 notes that if other users haven't completed refreshing their public tokens in a current epoch the user device 1 cannot start a further epoch. In step 3, a counter is zeroed if it has reached T i.e. all the public tokens associated with the user device 1 have been used.

In step 4, the $SEED_u$ is parsed and in step 5 the epoch is advanced. In step 6 a new permutation key, $k_{epoch'}$, is generated for the new epoch. The permutation key is generated based on the group secret key, gsk, and the new epoch value. In steps 7 and 8, new seeds and tokens are generated for the new epoch using the function *gen-auth-token. The function *gen-auth-token was described above in connection with the function Init and the description will not be repeated as the method is the same. In steps 9 to 12, the newly generated public tokens, $\tilde{Y}_u$ are uploaded to the server 2 to store in the database in a permuted order determined by the permutation key, $k_{epoch'}$. In step 13, an update package $\hat{c}t_G$ is formed including the index, idx(u), the new set of public tokens, $\tilde{Y}_u$, and the ciphertexts, $ct_v$, in an update package, $\hat{c}t_G$.

In step 14, the function *attach-auth-token is used to generate a group authentication token, $\hat{\Sigma}_G$. The function *attach-auth-token was described above in connection with the Send function and the description will not be repeated. In step 17, the list of send seeds, Send-$SEED_u$, is reset to remove seeds from the previous epoch. In steps 16 and 17, the user's own seeds for the new epoch are added. Steps 18 and 19, define the overall list, $SEED_u$, and note that the counter is set to T, but the value of epoch, set in the user state, $st'_u$, is not updated yet. In step S20, the user state is updated and in step 21 the UpdSend function returns the updated state, $st'_u$, the group authentication token, $\hat{\Sigma}_G$, and the update package, $\hat{c}t_G$.

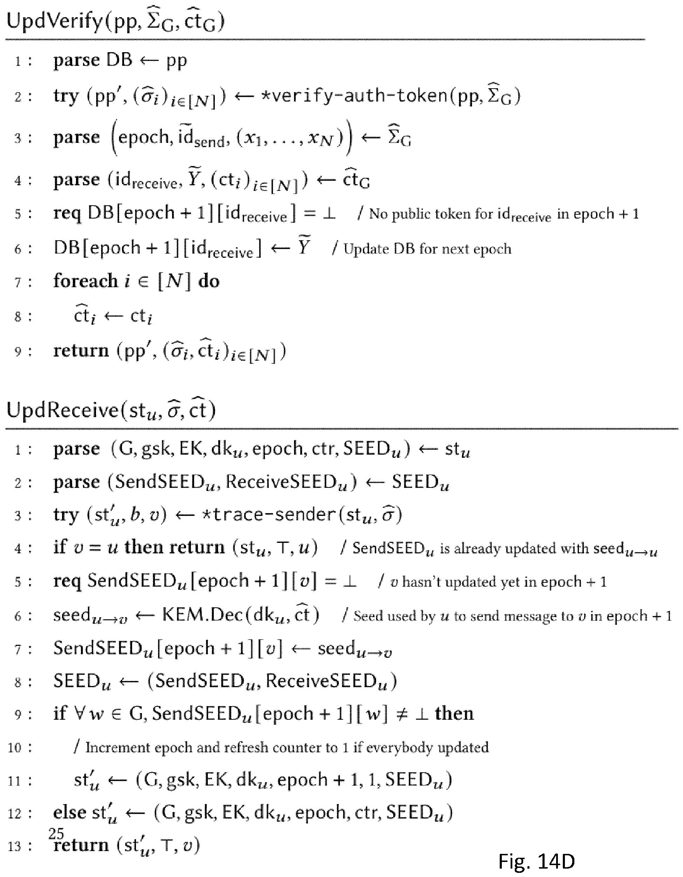

Figure 14D also illustrates an UpdVerify function that is performed by the server 2. In step 1, the state of the server 2 is parsed. Step 2 is the same as step 2 of the verify function, which uses the *verify-auth-token function, described above and returns an updated database state and download packages, $\sigma_i$. As this functionality has already been described, the description will not be repeated. In steps 3 and 4, the group authentication token, $\hat{\Sigma}_G$, and the update package, $\hat{c}t_G$, are parsed. In step 5, the server 2 checks that the database does not already have entries in the database for the next epoch (epoch+1) for the user device 1 that is sending the update, $id_{receive}$. As long at this condition is met, in step 6, the public tokens $\hat{Y}$ are saved to the database in association with the user device 1 and the new epoch. In step 8, the update packages, cti, are set as seed download packages, $\hat{c}t$, received from user devices 1. The function, UpdVerify returns an updated database state, pp', download packages, $\sigma_i$, and the seed download packages, $\hat{c}t_i$.

Also illustrated in Figure 14D is the function UpdReceive. This function is performed by each user device 1 that receives an update from a user device 1 that has performed UpdSend. In steps 1 and 2 the user state, $st_u$, and the seed, $SEED_u$, are parsed. Step 3 corresponds to step 1 of the Receive function described above and makes use of the *trace-sender function to identify the user device 1 that sent the download package. As this step and function have been described previously, the description is not repeated.

Steps 4 to 7 relate to updating the SendSEED list. In step 4, the user device 1 adds a seed that it generated for itself to the SendSEED list. In step 5, the user device 1 checks that the entry in the list of send seeds for the new epoch, epoch+1, for that user device 1 does not already include an entry. If the condition in step 5 is met, then in step 6, the ciphertext $\widehat{ct}$ is decrypted using the user device's private key, $dk_u$, to decrypt the seed, $seed_{u \to v}$. The decrypted seed is added to the list SendSEEDu in step 7. Step 8 defines the updated overall list, $SEED_u$. In step 9, if all user devices 1 in a group have completed the update process such that there are no null entries in the list $SendSEED_u$ for the new epoch, then the user device state, $st'_u$, is updated in step 11 with the new epoch value. Step 12 indicates that the user device state, $st'_u$, is not updated to the new epoch value if all user devices 1 in the group have not yet completed their update.

The function UpdReceive returns an updated user state, $st'_u$, and the identity of the user device 1 that sent the update.

The methods of the third embodiment add user traceability to the authentication mechanism. As noted above, these methods may be used to mitigate the risk of denial of service attacks because users within a group cannot easily perform such attacks.

**Fourth embodiment**

The fourth embodiment is a development of the third embodiment. A main difference between the third embodiment and the fourth embodiment is that the public tokens are replaced with verification keys from a one-time signature key pairs and the private tokens are replaced with signatures under the signing keys of the one-time signature key pairs. The previous embodiments offer slightly less protection against forgeability because the private tokens are not tied to the sent messages. This disadvantage is a trade off against the relative computational efficiency of these earlier embodiments.

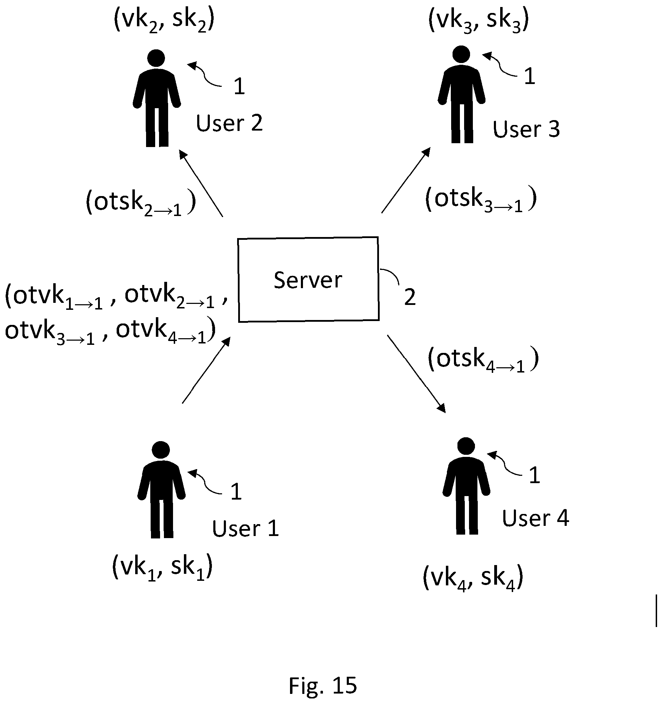

The fourth embodiment is illustrated in Figure 15, which shows four users during an initiation phase. Figure 15 only illustrates generation and distribution of tokens by User 1, but in practice each user may generate tokens in order to allow message to be sent to that user. A one-time signature scheme is known to the user devices 1 and the server 2. Each user device 1 in a group provides respective signing keys from pairs of one-time signature keys, otsk, to each other user using their respective public keys. Each user device 1 also uploads the verification keys of the one-time signature key pairs to the server 2. Accordingly, the server 2 stores a set of public tokens similar to the third embodiment, except that the public keys take the form of verification keys from one-time signature key pairs. In a case that a user device 1 sends a message, m, the user device 1 locates a one-time signing key received from a user device 1 to whom the message is to be sent (or a set of one-time signing keys for the members of the group to who the message is to be sent) and signs the message with the one-time signature key (or set of one-time signature keys) to generate a private token. The message and the private token in the form of signature of the message is then sent by the sender user device 1 to the server 2. The server 2 receives the message and the private token and checks the signature/private token using the public token that is the one-time signature verification key associated with the signature that was previously uploaded to the server 2.

The server 2 makes the message and private token available to the group if the server 2 can verify the signature/private token using the public token/verification key.

A receiver user device 1 in the group obtains the message and the private token and performs a check of the private token against either the corresponding public token or against the private tokens that the receiver user device 1 has generated to receive messages from the sender user device 1.

As with the third embodiment, instead of sending multiple one-time signature keys to the users, a single distribution phase may distribute a seed that can be used by the sender user device 1 to generate the one-time signing keys. The sender user device 1 then uses a one-time signing key to sign a message to be sent, the signature forming the private token.

As with the third embodiment, the fourth embodiment requires a finite number of public tokens (one-time verification keys) to be uploaded to the server 2 to allow messages to be checked and received. Difficulties associated with exhausting the public tokens on the server 2 were discussed in connection with the third embodiment and the methods for mitigating these difficulties are equally applicable to the fourth embodiment.

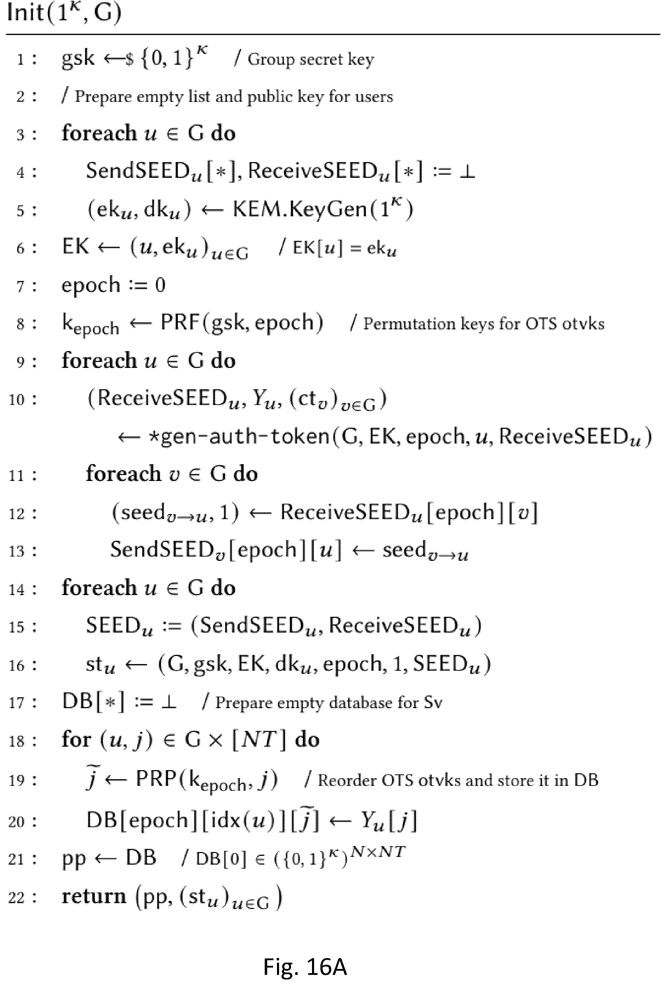

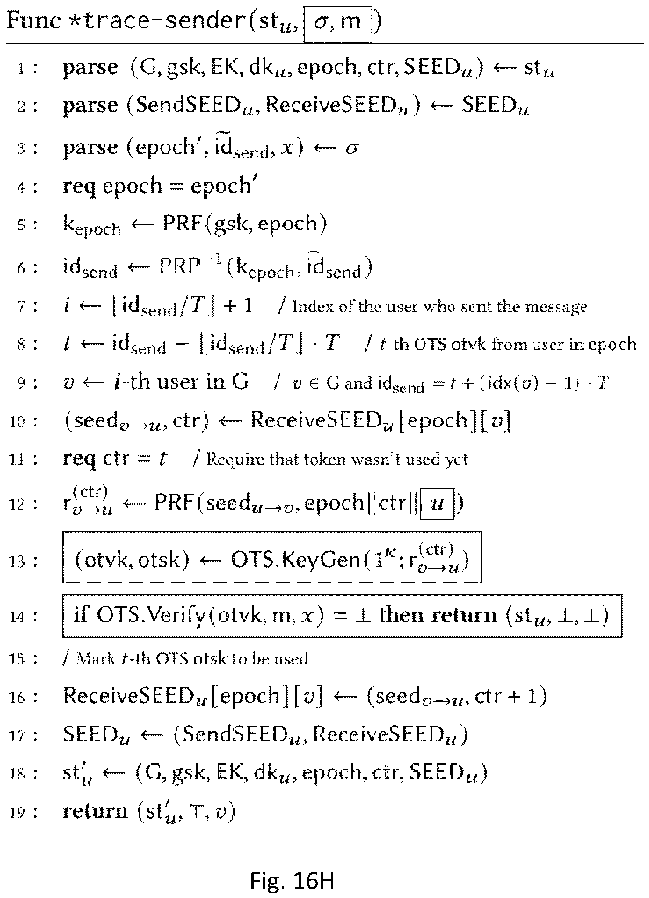

Figures 16A to 16H illustrate the protocol of the fourth embodiment. The main differences compared to the third embodiment are shown in boxes.

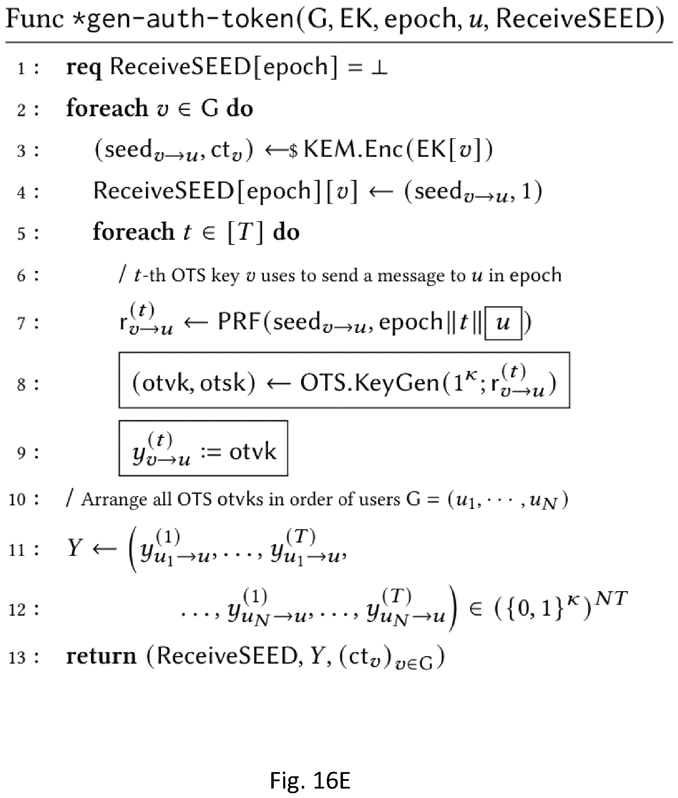

Figure 16A shows the Init function. This function is the same as the function previously described in connection with the third embodiment except for differences in the *gen-auth-token function. The *gen-auth-token function is shown in Figure 16E. In steps 6 to 9, the public tokens, y, are replaced with verifying keys from one-time signature key pairs. In step 7, T random values, $r_{v \to u}$, are generated using a pseudo-random function that takes the $seed_{v \to u}$ as an input and a concatenation of the epoch, a token counter that varies across T values, t, and the user identifier, u. T one-time signature key pairs are generated using a one-time key signature key generation function taking a respective random value, $r_{v \to u}$, as an input. Each one-time signature key pair comprises a one-time signature key, otsk, and a one-time verification key, otvk. In step 9, each one-time verification key is set as a public token, y. As before there are T keys generated by each user device 1 for each user device 1 in the group.

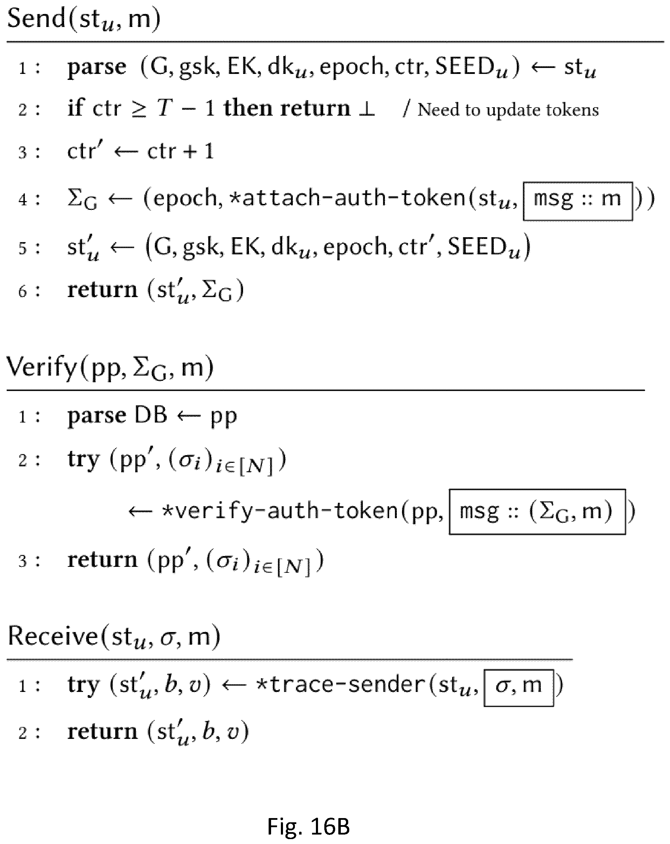

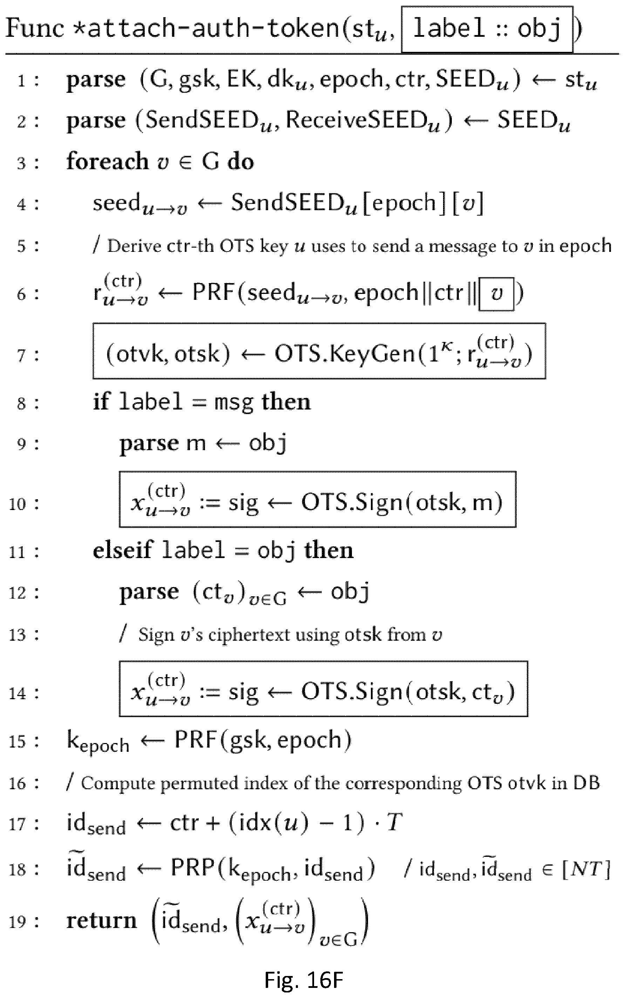

Figure 16B shows a Send function that is the same as the Send function described in connection with the third embodiment except for changes to the *attach-auth-token function, which now takes an additional label as input. The additional label is set as 'msg' in the Send function. The *attach-auth-token function is illustrated in Figure 16F. In steps 3 to 15, a private token, $x_{u \to v}$, is generated that is formed by a signature using a one-time signing key. In step 6, the random value, $r_{v \to u}$, is generated using the pseudorandom function, PRF that takes the send seed, $seed_{u \to v}$, as an input and a concatenation of the epoch, counter, and user device identifier. In step 7, the one-time signature key pair is generated using a one-time key signature key generation function taking the random value, $r_{v \to u}$, as an input. This is the same process that was used to generate the one-time signature key pairs in the Init function, so a corresponding verification key has been uploaded to the server 2 as a public token. Steps 7 to 14 relate to functions of the *attach-auth-token in a case that the label is either 'msg' or 'obj'. As the label is 'msg' in this case, steps 8 to 10 will be described. Description of steps 11 to 14 is deferred until discussion of the UpdSend function.

Steps 8 to 10 generate the private token, $x_{u \to v}$, by signing the message, m, to be sent under the one-time signature key, otsk. The protocol otherwise proceeds as before.

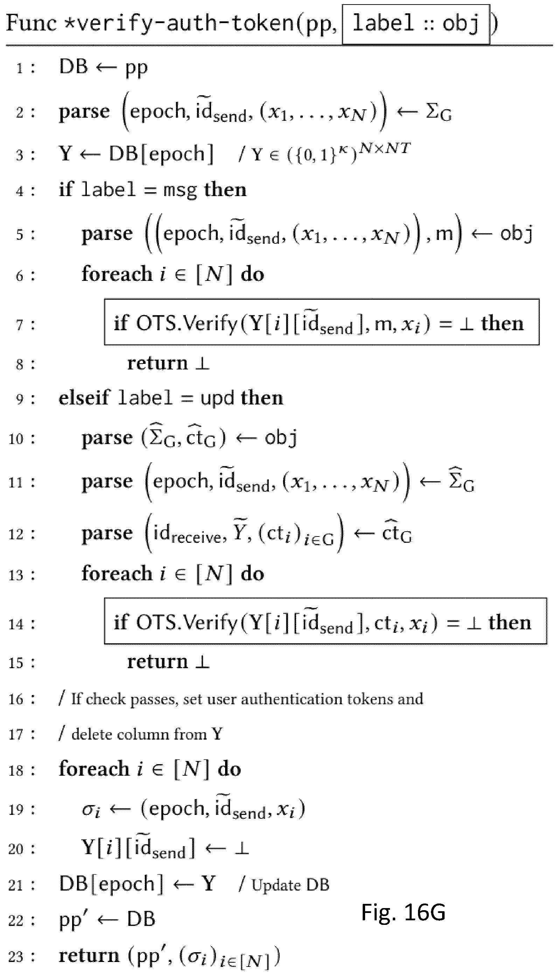

Figure 16B illustrates the Verify function, which is the same as described previously except for changes in the *verify-auth-token function, which now additionally takes the message, m, as an input along with a label 'msg'. The *verify-auth-token function is illustrated in Figure 16G. Steps 4 to 15 describe alternative functions depending on whether the input label is 'msg' or 'upd'. Steps 4 to 8 relate to the label 'msg' will be described now. Description of steps 9 to 15 is deferred to discussion of the UpdVerify function.

In steps 4 to 8, the received private tokens, x, are parsed and corresponding public tokens are identified in the database based on the index, $\widetilde{id}_{send}$. The public tokens are used to verify the private tokens by using a Verify function, OTS.Verify, from the signature scheme. The Verify function takes the public token, the message, and the private token as inputs. In this way, the server 2 can verify the one-time signature that forms the private token, x.

Figure 16B shows a Receive function. The Receive function is the same as in the third embodiment except for changes to the *trace-sender function, which now takes the message as an input in addition to the download package.

The *trace-sender function differs from the *trace-sender function in the third embodiment due to changes in steps 12 to 14. The user device 1 generates a random value, $r_{v \to u}$, associated with the counter using the pseudorandom function, PRF, that takes send seed, $seed_{u \to v}$, as an input and a concatenation of the epoch, counter, and user device identifier, u. In step 13, the one-time signature key pair is generated using the random value, $r_{v \to u}$. The received private token, x, is checked using the Verify function from the signature scheme, which takes, the one-time signature verification key, otvk, the message, m, and the private token, x, as inputs.

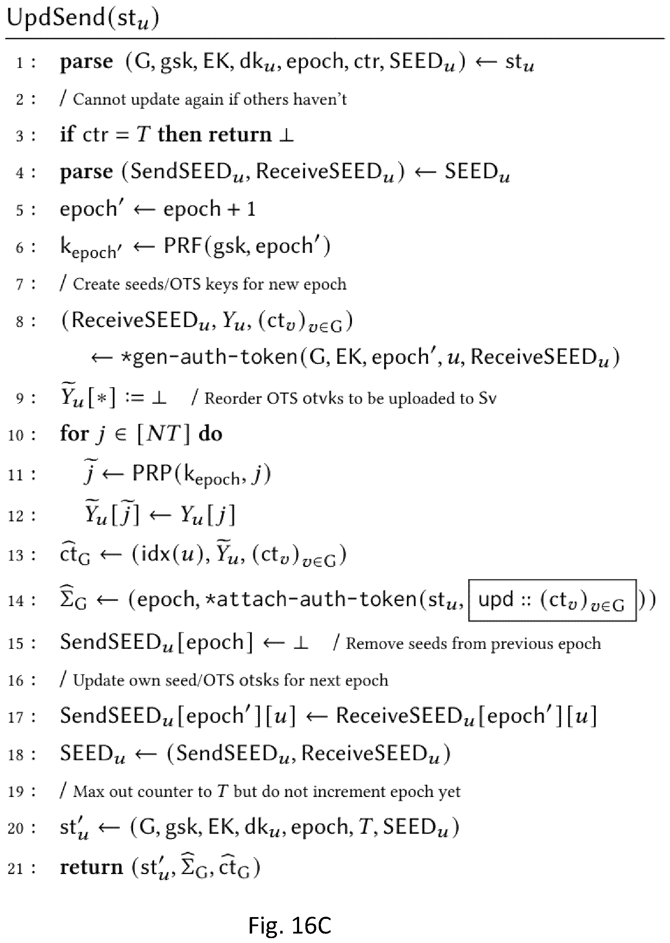

Figure 16C illustrates the UpdSend function. This function is similar to the function described in the third embodiment except for differences in the *gen-auth-token function and the *attach-auth-token function. The changes to the *gen-auth-token function have been described above in connection with the Init function and are not repeated here. The *attach-auth-token function is illustrated in Figure 16F and in contrast to the send function, now takes the ciphertext $ct_v$ as an input with a label 'obj'. In steps 11 to 14, the ciphertext, $ct_v$, is signed using the one-time signature key, otsk, to generate the private token, which is the signature of the ciphertext.

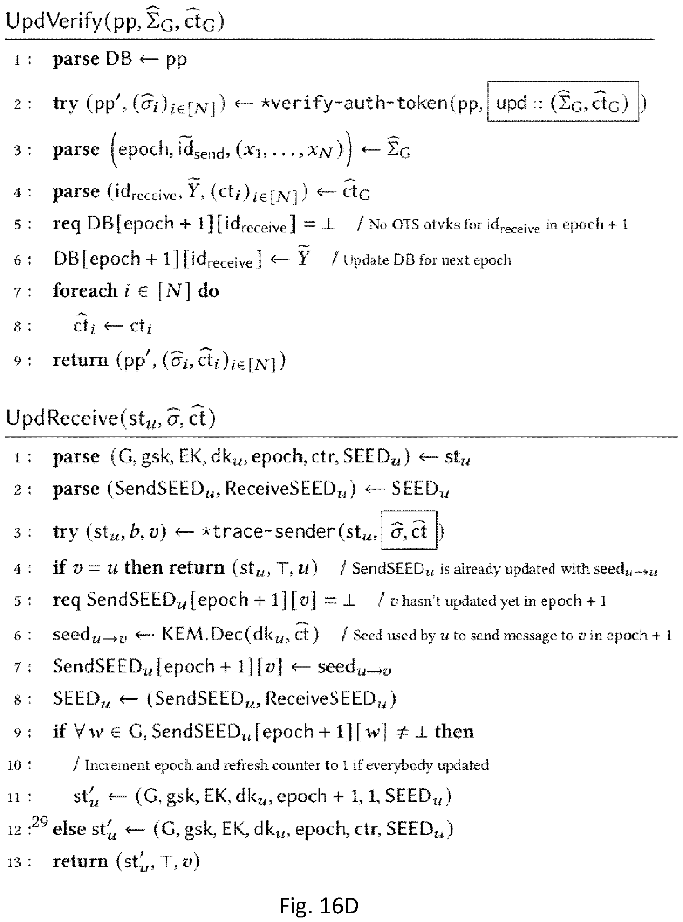

Figure 16D shows the UpdVerify function performed by the server 2. This function is the same as the UpdVerify function described in the third embodiment except for changes to the *verify-auth-token function. The *verify-auth-token function is shown in Figure 16G and steps 9 to 15 relate to verifying the update. The group authentication token, $\hat{\Sigma}_G$, is parsed to obtain the private tokens, x. The update package, $\hat{ct}_G$, is parsed to obtain the ciphertexts, $ct_i$. The private tokens, which are signatures of the ciphertexts, are checked in step 14 using the Verify function of the signature scheme which uses the public token (verification key), the ciphertext and the private token to check the private token (signature).

Figure 16D illustrates the UpdReceive function performed by a user device 1. This function is similar to the UpdReceive function described in connection with the third embodiment except for changes to the *trace-sender function. The changes to the *trace-sender function have been described above and the description is not repeated.

As noted above, the fourth embodiment re-introduces a signature scheme. The signatures are based on the message, which provides a stronger protection against forged messages because the private token is now tied to the contents of the message being sent.

## Fifth embodiment

The fifth embodiment is a development of the fourth embodiment and aims to address the need to maintain a database of one-time signature verification keys at the server 2. The fifth embodiment uses a group signature scheme to manage traceability.

A group signature scheme is a cryptographic protocol that allows a member of a group to anonymously sign a message on behalf of the group. It provides the anonymity, traceability, unforgeability, and verifiability.

The identity of the individual signer within the group remains hidden. Instead of revealing the actual signer, the signature identifies only the group from which the signature originates. While individual identities are hidden, a designated authority called a tracer can trace the signer of a signature. This property ensures that if a signature is misused or maliciously generated, the tracer can reveal the signer's identity.

Signatures generated using the group signature scheme should be resistant to forgery. Only authorized group members can produce valid signatures and it should be computationally infeasible for anyone else to forge a signature. Any recipient of a group signature can verify its authenticity using a public verification key. The verification process confirms that the signature is valid and originates from a member of the specified group.

A group signature scheme may involve various cryptographic techniques, such as digital signatures, zero-knowledge proofs, and key management protocols, to achieve the desired properties. The exact details and underlying algorithms used can vary depending on the specific group signature scheme being implemented. Examples are given further below.

A group signature consists of three entity types: a group manager, group tracers, and users. A group manager is unique and handles the registration of new users to the system. When a user $u$ wishes to join the system, the group manager provides $u$ a certificate certu attesting to the fact that $u$ is a valid user in the system. A user $u$ specifies a group tracer $l$ and can use certu to anonymously sign a message on behalf of all the users in the system. Note that there can be multiple group tracers in a group signature scheme that have different tracer keys. The signature can be publicly verifiable, but importantly, it remains anonymous to any entity (including the group manager) except the specified group tracer $l$. In contrast, $l$, can trace the signature back to user u.

A secure group messaging protocol that uses a group signature is provided as follows. The server 2 is the group manager and system users 1 are users of a group signature scheme. Note that the system users will want to communicate in smaller groups, which will subsequently be referred to as MLS groups. Since the MLS group users in an MLS group should be the only users that can trace the signature for that MLS group, each group tracer $l$ associated with that set of tracer keys is in the MLS group. This can be achieved because each user in an MLS group, G, shares a common group secret key, gsk, by virtue of using MLS. Each user in the MLS group generates the tracer keys (gtvk$l$, gtsk$l$) for the group tracer $l$ by executing a key generation algorithm of the group tracer using a randomness derived from the MLS group signature key. When a user sends a message to the MLS group, G, it runs the signing algorithm of the group signature scheme by specifying gtvk$l$ as the group tracer's key i.e. specifying that MLS group as the tracers. The server 2 relays the message to the MLS group, G, only if the signature verifies. The group users can locally run the tracing algorithm of $l$ on the system group signature since they hold the group tracer's secret key, gtsk$l$.

The Users in the group further use the group secret key, gsk, to generate a unique MLS group signature key pair (vk, sk) and upload the MLS group verification key, vk, to the server 2. To send a message to the group, a group user device 1 generates the system group signature discussed in the previous paragraph that allows for traceability and further attaches a MLS group signature or MLS group message access code (MAC) generated by the MLS group signature key, sk. Similar to the second embodiment, this additional MLS group signature guarantees that only members of the group can message within the group because the server 2 checks the MLS group signature of an incoming message with the MLS group signature verification key, vk. The group signature scheme guarantees that the users can trace the signer to a group user. Since group signature scheme allows user devices 1 to sign an unbounded number of messages, the problem of needing to periodically update the tokens or one-time signatures at the server 2 is overcome.

**Further description**

Various functions are described above. Details of examples of these functions are given as follows:
One-way function (OWF): This could be any one-way function. An example is SHA 256 with its output truncated. The output could be truncated to any length, but in one example is truncated to 16 bits.

Message Authentication Code (MAC) and Pseudorandom Function (PRF): This could be selected from known MAC and PRF. In one example, the MAC may be HMAC (Hugo Krawczyk, Mihir Bellare, and Ran Canetti. 1997. HMAC: Keyed-Hashing for Message Authentication. IETF Internet Request for Comments 2104). The output may be truncated. In one example, the output may be truncated to 16 bits. It is noted that a deterministic MAC can be viewed as a PRF.

Pseudorandom permutation (PRP): This may be selected from known PRP functions. In some embodiments either Fast-PRP (Emil Stefanov and Elaine Shi. 2012. FastPRP: Fast Pseudo-Random Permutations for Small Domains. Cryptology ePrint Archive, Report 2012/254) or the Thorp shuffle (Ben Morris, Phillip Rogaway, and Till Stegers. 2018. Deterministic Encryption with the Thorp Shuffle. Journal of Cryptology 31, 2 (April 2018), 521-536) may be used.

One-time signature schemes: This may be selected from known schemes. For example, for classical security Ed-DSA (Daniel J. Bernstein, Niels Duif, Tanja Lange, Peter Schwabe, and Bo-Yin Yang. 2011. High-Speed High-Security Signatures. In CHES 2011 (LNCS, Vol. 6917) Bart Preneel and Tsuyoshi Takagi (Eds.). Springer, Heidelberg, 124-142.) may be used. For post-quantum security WOTS+ (Andreas Hülsing. 2013. W-OTS+ - Shorter Signatures for Hash-Based Signature Schemes. In AFRICACRYPT 13 (LNCS, Vol. 7918), Amr Youssef, Abderrahmane Nitaj, and Aboul Ella Hassanien (Eds.). Springer, Heidelberg, 173-188) may be used.

Signature schemes: This may be selected among known signature schemes. For example, for classical security Ed-DSA (see reference above) may be used. For post-quantum security NIST PQC standard Dilithium (Vadim Lyubashevsky, Léo Ducas, Eike Kiltz, Tancrède Lepoint, Peter Schwabe, Gregor Seiler, Damien Stehl6, and Shi Bai. 2022. CRYSTALS-DILITHIUM. Technical Report. National Institute of Standards and Technology) may be used.

Group signatures: This may be selected among known group signature schemes. For example, for classical security the pairing-based BBS scheme (Dan Boneh, Xavier Boyen, and Hovav Shacham. 2004. Short Group Signatures. In CRYPTO 2004 (LNCS, Vol. 3152), Matthew Franklin (Ed.). Springer, Heidelberg, 41-55) may be used. For post-quantum security the lattice-based scheme proposed by Lyubashevsky, Nguyen, and Plançon (LNP) (Vadim Lyubashevsky, Ngoc Khanh Nguyen, and Maxime Plançon. 2022. Lattice-Based Zero-Knowledge Proofs and Applications: Shorter, Simpler, and More General, See [43], 71-101.) may be used.

Key Encapsulation Mechanism (KEM) schemes: This may be chosen from among known schemes. In some examples, Hashed ElGamal KEM may be used or the NIST PQC standard Kyber (Peter Schwabe, Roberto Avanzi, Joppe Bos, Léo Ducas, Eike Kiltz, Tancrède, Lepoint, Vadim Lyubashevsky, John M. Schanck, Gregor Seiler, Damien Stehl6,and Jintai Ding. 2022. CRYSTALS-KYBER. Technical Report. National Institute of Standards and Technology).

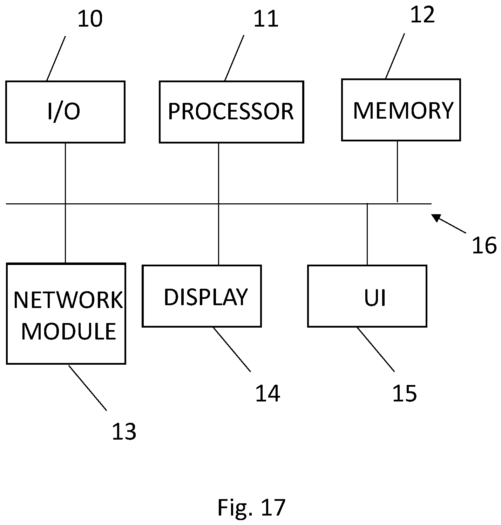

As described above, the user devices 1 and servers 2 may be any type of information processing apparatus. For example, the user devices 1 may be mobile devices, such as mobile phones. The server 2 may, in some cases, be implemented as a cloud service or as a separate standalone server. Figure 17 is a schematic diagram of components of an example information processing apparatus suitable for use in the methods described above. The diagram is illustrative and different hardware configurations for information processing apparatus are possible as is well known in the art. The information processing apparatus includes an I/O interface 10, such a USB port, Thunderbolt port, etc. to which an additional device, such as a storage device, could be connected. The information processing apparatus comprises a processor 11, a storage in the form of memory 12, a network module 13, a display 14, and a user interface 15. The network module may allow the information processing apparatus to communicate over a network such as a Wi-Fi network, a mobile telecommunications network, a local area network etc. The user interface may include components such as a keyboard, mouse, camera, etc. The components of the information processing apparatus may communicate with each other over a bus 16. Further components may be provided but are not shown or described. Any of the steps of the methods described above may be performed by computer-readable instructions of one or more programs stored in a storage and executed by a processor on one or more information processing apparatuses.

The above embodiments may be implemented on MLS or on related protocols such as CoCoA (Joël Alwen, Benedikt Auerbach, Miguel Cueto Noval, Karen Klein, Guillermo Pascual-Perez, Krzysztof Pietrzak, and MichaelWalter. 2022. CoCoA: Concurrent Continuous Group Key Agreement, See [44], 815-844.), and MLS variants (Joël Alwen, Sandro Coretti, Yevgeniy Dodis, and Yiannis Tselekounis. 2020. Security Analysis and Improvements for the IETF MLS Standard for Group Messaging. In CRYPTO 2020, Part I (LNCS, Vol. 12170), Daniele Micciancio and Thomas Ristenpart (Eds.). Springer, Heidelberg, 248-277.), (Joël Alwen, Sandro Coretti, Daniel Jost, and Marta Mularczyk. 2020. Continuous Group Key Agreement with Active Security, See [62], 261-290.), and (Joël Alwen, Dominik Hartmann, Eike Kiltz, and Marta Mularczyk. 2022. Server- Aided Continuous Group Key Agreement, See [73], 69-82.). Further suitable continuous group key agreement schemes are described in (Keitaro Hashimoto, Shuichi Katsumata, Eamonn Postlethwaite, Thomas Prest, and Bas Westerbaan. 2021. A Concrete Treatment of Efficient Continuous Group Key Agreement via Multi-Recipient PKEs, See [68], 1441-1462.) and (Keitaro Hashimoto, Shuichi Katsumata, and Thomas Prest. 2022. How to Hide MetaData in MLS-Like Secure Group Messaging: Simple, Modular, and Post- Quantum, See [73], 1399-1412.)

Each of the embodiments above may be implemented using MLS (or its variants). While this is straightforward, it is important to note that the definition of the authentication methods above was kept intentionally simple. The above methods assume a trusted initialization algorithm Init prepares the group user states and assumes the group of user devices 1 is fixed once and for all. In contrast, in MLS, a single user $u$ creates (or initializes) a group G = { $u$ } and then dynamically adds users to the group via sending welcome messages.

In the following there is provided an explanation of how to implement the above described embodiments with MLS. Firstly use with a set of group users that is established/fixed is considered. The slightly more involved case of how to implement the embodiments in the case of adding new users to the group is then considered.

*Recap on MLS Messages*

MLS consists of the forward-secure payload delivery (FSPD) and Continuous Group Key Agreement (CGKA) protocols. The FSPD protocol authenticates application messages which contain various types of data, such as chat texts, images, and stamps. In contrast, the CGKA protocol authenticates two different messages:

Handshake message: This is further broken up into proposal and commit messages (Richard Barnes, Benjamin Beurdouche, Raphael Robert, Jon Millican, Emad Omara, and Katriel Cohn-Gordon. 2023. The Messaging Layer Security (MI,S) Protocol. Internet-Draft draft-ietf mls-protocol-20. Internet Engineering Task Force, Sections 2 and 3). These are messages sent between group users, responsible for modifying the group state, e.g., to update the group secret key gsk.

Welcome message: This is a message sent from a group user to an outsider to make him/her a group member.

Notice the application and handshake messages are both messages exchanged within a group. In contrast, the welcome message is exchanged between a group user and an outsider. For the sake of explanation, we refer to the former two messages as group messages.

*Authentication in a Fixed Group*

We assume that one of the embodiments described above is set-up. Namely, if any user device 1 sends a message, all users accept the group authentication token. Moreover, since the group is fixed, we only focus on group messages.

MLS formats a group message in a specific manner:

(gid, epoch, senderID, Contents, AuthData) if using public mode
(gid, epoch, $ct_{senderID}$, $ct_{Contents}$, AuthData) if using private mode

where gid is the group identity; epoch is a counter; senderID is the sender's identity; Contents stores the group message; and ctx is an SKE encryption of $X$ under an SKE key derived from the group secret key. AuthData is an authentication data field. In MLS, AuthData includes either the signature of the sender in the public mode or an encryption of the signature in the private mode. Specifically, Handshake messages are in either the public or private mode, corresponding to MI,SPlaintext and MI,SCiphertext, respectively. The application messages are always in the private mode. Below, we denote all the information excluding AuthData as gmsg, regardless of the two modes, and call gmsg the group message for simplicity. With this structure in mind, using an embodiment described above with MLS is straightforward. When user $u \in G$ wants to send a group message gmsg, it runs the Send algorithm to create a group authentication token $\Sigma_G$ and then uploads (gmsg, AuthData := $\Sigma_G$) to the server 2. The server 2 verifies $\Sigma_G$ and prepares user authentication tokens $(\sigma_i)i \in [N]$, where $N = |G|$.

In a case that a user $v \in G$ with index $i = idx(v)$ contacts the server 2, the server 2 returns (gmsg, AuthData$_i$ := $\sigma_i$). User $v$ can then verify and trace user u by running the Receive algorithm of the embodiments described above on (gmsg, $\sigma i$). Here, we note if the underlying MLS (or more precisely the CGKA protocol) offers selective downloading, the server 2 can sanitize gmsg to $(gmsg_i)i \in [N]$ so that each user only downloads the amount of data they need.

Lastly, in case the authentication method requires state updates (e.g., embodiments 3 and 4), this can be simply run on top of MLS by directly embedding the group update information $\Sigma_G$ into Contents or $ct_{Contents}$ depending on the anonymity guarantee required.

*Authentication with a New Group User*

The case in which an outsider is added to the group is now considered.

As explained before, in the context of MLS, this is performed via a welcome message generated within the CGKA protocol. While the embodiments above have no notion of such welcome messages, all the embodiments allow an outsider to adaptively join the group. Details are as follows:

Embodiment 1. This case is simple since each user state is independent of the other user states. When an outsider joins the group via a welcome message, it simply mints a new token $(x_0, y_0)$ and uploads the public token $y_0$ to the server 2 and group. The outsider can additionally authenticate $y_0$ by including it in its key package or by directly signing it with a long-term private key that can be checked using the corresponding public key. Once $y_0$ is shared among the group, the outsider joining the group can use $x_0$ to start sending messages. Moreover, the outsider can fetch the current public tokens of the other users from the server 2. In case that the new user device 1 wants to be sure that these public tokens were indeed minted by the respective users, it could obtain the public tokens directly from the user devices 1 in the group.

Second embodiment. This is almost identical to the first embodiment. The only difference is that the outsider, after processing the welcome message, recovers the current group secret key, gsk. It then uses the gsk to derive the MAC key, kMAC, and an SKE key $k_{SKE}$. Note that kMAC and kSKE can be updated at any time that the CGKA protocol performs a commit. This offers forward secrecy and post-compromise security of the anonymity and anonymous blocklisting properties. Moreover, if the welcome message needs to be anonymous, we can rely on existing anonymous two-party messaging protocols, such as Sealed Sender (Technology preview: Sealed sender for Signal. https://signal.org/blog/) or Orca (Nirvan Tyagi, Julia Len, Ian Miers, and Thomas Ristenpart. 2022. Orca: Blocklisting in Sender-Anonymous Messaging. In USENIX Security 2022, Kevin R. B. Butler and Kurt Thomas (Eds.). USENIX Association, 2299-2316.), as this is exchanged between a specific group user to an outsider. Note that the latter protocol also provides user traceability.

Embodiments 3 and 4. These are the most intricate due to the global state-update property. Since the protocol flow of the third and fourth embodiments are identical, we only focus on the third embodiment. We cannot simply append columns corresponding to the new users since the server 2 can always link public tokens associated to these appended columns. Therefore to ensure anonymity, the group users must all update their state and refresh the public tokens held by the server 2. In more detail, similarly to the first embodiment, the outsider, o, after processing the welcome message mints the tokens and uploads the public tokens $y^{(t)}_{j \to o}$ to the server 2, and sends the PRF seeds, $seed_{j \to o}$, to each group user device 1 so that they can recover the corresponding private tokens. Once after every other user device 1 updates their states by further minting $T$ extra public tokens for the new user o, the new user $o$ can start sending messages. Note that since waiting for every user may be prohibitive in a large group, the method could initially use the second embodiment with the cost of weakening anonymity and user traceability as discussed above in connection with the third embodiment.

Fifth embodiment. This is the only protocol that requires the MLS server 2 to additionally run a group signature scheme. When a user joins the secure group messaging application, the server 2 provides the user with a certificate. Assuming this step has been finished, then joining a group is straightforward. This is because the only thing the outsider requires to run the authentication method of the fifth embodiment is the group's tracer key and signature key, which are both derived from the group secret key, gsk. Hence, following the same discussion in the second embodiment, we can easily add new users to the authentication scheme of the fifth embodiment.

Lastly, note that removing users is straightforward for all of the above-described embodiments. Since the first embodiment is not anonymous, the server 2 can simply maintain a list of group members. The second and fifth embodiments natively support removal at the MLS layer since once a commit occurs, the MAC key, kMAC, is updated along with the group secret key, gsk. Finally, for the third embodiment, the user devices 1 can simply remove the unused public tokens corresponding to the removed users from the server 2.

The term 'message' has been used in the description above. The term message should be understood to mean data to be transferred and is not limited to text messages. For example, the message could be any of an image, a sound file, text or a data file.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

The following clauses form part of the specification. The claims follow these clauses and are labelled as such.

1. A method of authenticating, at a receiver user device, a message received from a sender user device in a group messaging protocol comprising:

receiving at the receiver user device a public token associated with the sender user device;
storing the public token at the receiver user device;
receiving at the receiver user device a private token and a ciphertext that encrypts at least a message from the sender user device;
decrypting, by the receiver user device, the ciphertext to obtain the message;verifying by the receiver user device the private token against the stored public token using a one-way function; and
in a case that the private token is verified, determining that the message has been received from the sender user device,
wherein at least one of the public token and the private token is received at the receiver user device in an encrypted format.

2. A method according to clause 1 wherein the receiver user device receives the public token from a server, and the received public token is encrypted in a second ciphertext.

3. A method according to clause 1 or clause 2, wherein the receiver user device receives the ciphertext from the server and the ciphertext encrypts both the private token and the message.

4. A method according to clause 2 wherein the server receives the public token, the ciphertext, the private token, and a message authentication code associated with the ciphertext from the sender user device.

5. A method according to any preceding clause wherein the message authentication code is generated by the sender device from the ciphertext using a MAC key associated with a group of users in the group messaging protocol.

6. A method according to clause 5, wherein the server checks the message authentication code using the MAC key and only makes the ciphertext available to the group of user devices if the message authentication code matches the ciphertext.

7. A method according to any preceding clause wherein the ciphertext is encrypted by the sender user device and decrypted by the receiver user device using a symmetric encryption key that is derived from a group secret associated with the group messaging protocol.

8. A method according to clause 7, wherein the sender user device derives the symmetric encryption key from the group secret associated with the group messaging protocol.

9. A method according to any preceding clause wherein, the MAC key is provided to the server by one or more of the user devices that are a member of the group of users.

10. A method according to clause 9, wherein the sender user device derives the MAC key from a group secret associated with the group messaging protocol.

11. A method according to any preceding clause wherein the one-way function is a truncated cryptographic function.

12. A method according to clause 11 wherein the cryptographic function is SHA 256 and the output is truncated to sixteen bits.

13. A method according to any preceding clause wherein the ciphertext also encrypts a new public token and the receiver user device stores the new public token for use in receiving a subsequent message from the sender user device after the ciphertext has been decrypted.

14. A method according to any of clauses 1 to 12 wherein the sender user device generates the ciphertext by encrypting the message and one or more of a new public token for a next round of communication and the private token.

15. A group messaging system comprising a server and at least two user devices, each of the server and the at least two user devices being an information processing apparatus comprising a processor and a computer-readable storage medium, the computer-readable storage medium storing program instructions that cause the information processing apparatus to perform steps according to the methods described in any of clauses 1 to 14.

16. A plurality of programs that, when implemented on a group messaging system according to clause 15, causes the group messaging system to perform a method according to any of clauses 1 to 14.

17. A method of authenticating, at a receiver user device, a message received from a sender user device in a group messaging protocol, wherein:

a server is configured to process messages from an overall set of user devices,

user devices in the overall set of user devices are configured to communicate with each other using a group messaging protocol in one or more local groups formed from the overall set of user devices,

each user device in a local group of the one more local groups derives a local group messaging protocol key pair including a local group signing key and a local group verification key,

each user device in the overall set of user devices is a member of a system group signature scheme, and

each user device in each local group of the one or more local groups has a tracer key of the group signature scheme associated with that group that is derived from a group secret of the group messaging protocol, the method comprising:

a sender user device generating a system group signature of a message using the group signature scheme, wherein the message is to be sent to a local group of the one or more local groups and the system group signature is generated using a tracer key associated with the local group;

the sender user device generating a private token associated with the message using the local group signing key;

the server checking the system group signature using the system group signature scheme and checking the private token using the local group verification key of the group messaging protocol key pair; and

the server making the message available to the local group only if the system group signature is verified against the message and the private token is verified against the message, wherein the system group signature may be used by receiver user devices within the local group to verify the identity of the sender user device using a tracer function of the system group signature scheme.

18. A method according to clause 17, wherein the private token is one of a signature of the message and a message authentication code generated based on the message.

19. A method of authenticating, at a receiver user device, a message received from a sender user device in a group messaging protocol comprising:

receiving at the receiver user device a first public token associated with the sender user device; storing the first public token at the receiver user device;

receiving at the receiver user device a first private token and a ciphertext that encrypts at least a message from the sender user device;

decrypting, by the receiver user device, the ciphertext to obtain the message;

verifying by the receiver user device the first private token against the stored first public token using a one-way function, wherein in a case that the first private token is verified, the first public token is obtainable by applying the one-way function to the first private token; and

in a case that the first private token is verified, determining that the message has been received from the sender user device,

wherein at least one of the first public token and the first private token is received at the receiver user device in an encrypted format.

20. A method according to clause 19 wherein the receiver user device receives the first public token from a server, and the received first public token is encrypted in a previous ciphertext.

21. A method according to clause 19 or clause 20, wherein the receiver user device receives the ciphertext from the server and the ciphertext encrypts both the first private token and the message.

22. A method according to clause 20 wherein the server receives the first public token, the ciphertext, the first private token, and a message authentication code associated with the ciphertext from the sender user device.

23. A method according to any of clauses 19 to 22 wherein the message authentication code is generated by the sender device from the ciphertext using a MAC key associated with a group of users in the group messaging protocol.

24. A method according to clause 23, wherein the server checks the message authentication code using the MAC key and only makes the ciphertext available to the group of user devices if the message authentication code matches the ciphertext.

25. A method according to any of clauses 19 to 24 wherein the ciphertext is encrypted by the sender user device and decrypted by the receiver user device using a symmetric encryption key that is derived from a group secret associated with the group messaging protocol.

26. A method according to clause 25, wherein the sender user device derives the symmetric encryption key from the group secret associated with the group messaging protocol.

27. A method according to any of clauses 19 to 26 wherein, the MAC key is provided to the server by one or more of the user devices that are a member of the group of users.

28. A method according to clause 27, wherein the sender user device derives the MAC key from a group secret associated with the group messaging protocol.

29. A method according to any of clauses 19 to 28 wherein the one-way function is a truncated cryptographic function.

30. A method according to clause 29 wherein the cryptographic function is SHA 256 and the output is truncated to sixteen bits.

31. A method according to of clauses 19 to 30 wherein the ciphertext also encrypts a second public token and the receiver user device stores the second public token for use in receiving a subsequent message from the sender user device after the ciphertext has been decrypted.

32. A method according to any of clauses 19 to 31, comprising:

generating by the sender user device the first private token that is a random or pseudo-random binary string;

generating by the sender user device the first public token by applying a one-way function to the first private token

sending the first public token in encrypted or unencrypted format to the receiver user device via a server.

33. A method according to clause 32 wherein the sender user device:

generates a second private token that is a random or pseudo-random binary string;

generates a second public token by applying a one-way function to the second private token;

generates the ciphertext by encrypting the message, the second public token, and the first private token; and

sending the ciphertext to the server.

34. A group messaging system comprising a server and at least two user devices, each of the server and the at least two user devices being an information processing apparatus comprising a processor and a computer-readable storage medium, the computer-readable storage medium storing program instructions that cause the information processing apparatus to perform steps according to the methods described in any of clauses 19 to 33.

35. A plurality of programs that, when implemented on a group messaging system according to clause 34, causes the group messaging system to perform a method according to any of clauses 19 to 33.

## Claims

1. A method of authenticating, at a receiver user device, a message received from a sender user device in a group messaging protocol comprising:

   receiving at the receiver user device a first public token associated with the sender user device;
   storing the first public token at the receiver user device;
   receiving at the receiver user device a first private token and a ciphertext that encrypts at least a user message authentication code from the sender user device and a message from the sender user device, wherein the user message authentication code has been generated using at least the message, the first private token, and a user message authentication code key;
   decrypting, by the receiver user device, the ciphertext to obtain the message;
   verifying, by the receiver user device, the message authentication code using the user message authentication code key, the message and the first private token;
   verifying by the receiver user device the first private token against the stored first public token using a one-way function, wherein in a case that the first private token is verified, the first public token is obtainable by applying the one-way function to the first private token; and
   in a case that the first private token is verified, determining that the message has been received from the sender user device,
   wherein at least one of the first public token and the first private token is received at the receiver user device in an encrypted format.

2. A method according to claim 1 wherein the receiver user device receives the first public token from a server, and the received first public token is encrypted in a previous ciphertext.

3. A method according to claim 1 or claim 2, wherein the receiver user device receives the ciphertext from the server and the ciphertext encrypts both the first private token and the message.

4. A method according to claim 2 wherein the server receives the ciphertext, and a server message authentication code associated with the ciphertext from the sender user device.

5. A method according to claim 4 wherein the server message authentication code is generated by the sender device from the ciphertext using a server MAC key associated with a group of users in the group messaging protocol.

6. A method according to claim 5, wherein the server checks the message authentication code using the server MAC key and only makes the ciphertext available to the group of user devices if the server message authentication code matches the ciphertext.

7. A method according to any preceding claim, wherein the user MAC key is generated using a common group secret key of the group messaging protocol.

8. A method according to any preceding claim, wherein the user MAC key is known only to user devices in the group messaging protocol.

9. A method according to any preceding claim, wherein a server MAC key is provided to the server by one or more of the user devices that are a member of the group of users, wherein the server MAC key is derived from a group secret associated with the group messaging protocol.

10. A method according to any preceding claim wherein the one-way function is a truncated cryptographic function.

11. A method according to any preceding claim wherein the ciphertext also encrypts a second public token and the receiver user device stores the second public token for use in receiving a subsequent message from the sender user device after the ciphertext has been decrypted.

12. A method according to any preceding claim, comprising:

    generating by the sender user device the first private token that is a random or pseudo-random binary string;
    generating by the sender user device the first public token by applying a one-way function to the first private token; and
    sending the first public token in encrypted or unencrypted format to the receiver user device via a server.

13. A method according to claim 12 wherein the sender user device:

    generates a second private token that is a random or pseudo-random binary string;

generates a second public token by applying a one-way function to the second private token; generates the ciphertext by encrypting the message, the second public token, and the first private token; and sends the ciphertext to the server.

14. A group messaging system comprising a server and at least two user devices, each of the server and the at least two user devices being an information processing apparatus comprising a processor and a computer-readable storage medium, the computer-readable storage medium storing program instructions that cause the information processing apparatus to perform steps according to the methods described in any of claims 1 to 13.

15. A plurality of programs that, when implemented on a group messaging system according to claim 14, causes the group messaging system to perform a method according to any of claims 1 to 13.

$(m, Y_\sigma)$

User 2

$(m, Y_\sigma)$

Server **2**

$(m, Y_\sigma)$

$(m, Y_\sigma)$

User 1

$(vk_1, sk_1)$

$Y_\sigma \rightarrow \text{Sign}(sk_1, m)$

Fig. 1

$$Y_\sigma \leftarrow \text{Sign}(sk_1, m)$$
$$Ct \leftarrow \text{SKE.Enc}(k, Y_\sigma | m)$$

Fig. 2

Server

Fig. 3

$$(m|y_1', x_1)$$

$$(m|y_1', x_1)$$

Server

$$y_1 \cdots y_N$$

2

$$(m|y_1', x_1)$$

$$(m|y_1', x_1)$$

User 1

Fig. 4

$$(vk_1, sk_1)$$

$$x_1' \quad \{0,1\}\text{^}128$$
$$y_1' \quad \text{OWF }(x_i')$$

$$Y_\sigma \leftarrow \text{Sign }(sk_1, m)$$
$$Ct \leftarrow \text{SKE.Enc }(k, Y_\sigma|m)$$

# $\mathsf{Init}(1^K, G)$

1 : / Prepare empty lists

2 : **foreach** $u \in G$ **do**

3 : $\mathsf{PubTOKEN}_u[*] := \perp$

4 : $\mathsf{PrivTOKEN}_u[*] := \perp$

5 : **foreach** $u \in G$ **do**

6 : $(X_u, Y_u) \leftarrow \text{*gen-auth-token}(G, u)$

7 : $\mathsf{PrivTOKEN}_u \leftarrow X_u \quad / \ X_u \in (\{0,1\}^K)^T$

8 : **foreach** $v \in G$ **do**

9 : $\mathsf{PubTOKEN}_v[u] \leftarrow Y_u \quad / \ Y_u \in (\{0,1\}^K)^T$

10 : **foreach** $u \in G$ **do**

11 : $\mathsf{TOKEN}_u := (\mathsf{PrivTOKEN}_u, \mathsf{PubTOKEN}_u)$

12 : $\mathsf{st}_u \leftarrow (G, 1, \mathsf{TOKEN}_u)$

13 : $DB[*] := \perp \quad$ / Prepare empty database for Sv

14 : **for** $u \in G$ **do**

15 : $DB[u] \leftarrow Y_u$

16 : $\mathsf{pp} \leftarrow DB \quad / \ DB \in (\{0,1\}^K)^{N \times T}$

17 : **return** $\left(\mathsf{pp}, (\mathsf{st}_u)_{u \in G}\right)$

Fig. 5A

## Send($\text{st}_u$, m)

---

parse $(G, \text{ctr}, \text{TOKEN}_u) \leftarrow \text{st}_u$

**if** $\text{ctr} \geq T - 1$ **then return** $\perp$   / Need to update tokens

$\text{ctr}' \leftarrow \text{ctr} + 1$

$\Sigma_G \leftarrow \star\texttt{attach-auth-token}(\text{st}_u)$

$\text{st}'_u \leftarrow (G, \text{ctr}', \text{TOKEN}_u)$

**return** $(\text{st}'_u, \Sigma_G)$

## Verify($\text{pp}, \Sigma_G$, m)

---

**parse** $\text{DB} \leftarrow \text{pp}$

**try** $(\text{pp}', (\sigma_v)_{v \in G}) \leftarrow \star\texttt{verify-auth-token}(\text{pp}, \Sigma_G)$

**return** $(\text{pp}', (\sigma_v)_{v \in G})$

## Receive($\text{st}_u, \sigma$, m)

---

**try** $(\text{st}'_u, b, v) \leftarrow \star\texttt{trace-sender}(\text{st}_u, \sigma, m)$

**return** $(\text{st}'_u, b, v)$

Fig. 5B

## UpdSend($\mathrm{st}_u$)

---

$\mathbf{parse}$ $(\mathrm{G}, \mathrm{epoch}, \mathrm{ctr}, \mathrm{TOKEN}_u) \leftarrow \mathrm{st}_u$

$\mathbf{parse}$ $(\mathrm{PrivTOKEN}_u, \mathrm{PubTOKEN}_u) \leftarrow \mathrm{TOKEN}_u$

$(X_u, Y_u) \leftarrow {}^\star\mathrm{gen\text{-}auth\text{-}token}(\mathrm{G}, u)$

$\mathrm{PrivTOKEN}_u \leftarrow X_u$

$\mathrm{PubTOKEN}_u[u] \leftarrow Y_u$

$\mathrm{TOKEN}_u \leftarrow (\mathrm{PrivTOKEN}_u, \mathrm{PubTOKEN}_u)$

/ Refresh counter to 1

$\mathrm{st}'_u \leftarrow (\mathrm{G}, 1, \mathrm{TOKEN}_u)$

$\widehat{\mathrm{ct}}_{\mathrm{G}} \leftarrow (u, Y_u)$

$\widehat{\Sigma}_{\mathrm{G}} \leftarrow {}^\star\mathrm{attach\text{-}auth\text{-}token}(\mathrm{st}_u)$

$\mathbf{return}$ $(\mathrm{st}'_u, \widehat{\Sigma}_{\mathrm{G}}, \widehat{\mathrm{ct}}_{\mathrm{G}})$

Fig. 5C

## UpdVerify$(\mathrm{pp}, \widehat{\Sigma}_\mathrm{G}, \widehat{\mathrm{ct}}_\mathrm{G})$

**parse** $\mathrm{DB} \leftarrow \mathrm{pp}$

**try** $(\mathrm{pp}', (\widehat{\sigma}_v)_{v \in \mathrm{G}}) \leftarrow *\mathsf{verify\text{-}auth\text{-}token}(\mathrm{pp}, \widehat{\Sigma}_\mathrm{G})$

**parse** $(u, Y_u) \leftarrow \widehat{\mathrm{ct}}_\mathrm{G}$

$\mathrm{DB}[u] \leftarrow Y_u$

**foreach** $v \in \mathrm{G}$ **do**

$\qquad \widehat{\mathrm{ct}}_v \leftarrow (u, Y_u)$

**return** $(\mathrm{pp}', (\widehat{\sigma}_v, \widehat{\mathrm{ct}}_v)_{v \in \mathrm{G}})$

## UpdReceive$(\mathrm{st}_u, \widehat{\sigma}, \widehat{\mathrm{ct}})$

**parse** $(\mathrm{G}, \mathrm{ctr}, \mathsf{TOKEN}_u) \leftarrow \mathrm{st}_u$

**parse** $(\mathsf{PrivTOKEN}_u, \mathsf{PubTOKEN}_u) \leftarrow \mathsf{TOKEN}_u$

**try** $(\mathrm{st}_u, b, v) \leftarrow *\mathsf{trace\text{-}sender}(\mathrm{st}_u, \widehat{\sigma})$

**parse** $(v', Y) \leftarrow \widehat{\mathrm{ct}}$

**req** $v = v'$

$\mathsf{PubTOKEN}_u[v] \leftarrow Y$ / Update user $v$'s tokens

$\mathsf{TOKEN}_u \leftarrow (\mathsf{PrivTOKEN}_u, \mathsf{PubTOKEN}_u)$

$\mathrm{st}_u' \leftarrow (\mathrm{G}, \mathrm{ctr}, \mathsf{TOKEN}_u)$

**return** $(\mathrm{st}_u', b, v)$

Fig. 5D

## Func $*$gen-auth-token$(G, u)$

$X[*], Y[*] := \perp$

**foreach** $t \in [T]$ **do**

$\quad X[t] \leftarrow\$ \{0, 1\}^{\kappa}$

$\quad Y[t] \leftarrow \mathrm{OWF}(X[t])$

**return** $(X, Y)$

## Func $*$attach-auth-token$(\mathrm{st}_u)$

**parse** $(\mathrm{G}, \mathrm{ctr}, \mathrm{TOKEN}_u) \leftarrow \mathrm{st}_u$

**parse** $(\mathrm{PrivTOKEN}_u, \mathrm{PubTOKEN}_u) \leftarrow \mathrm{TOKEN}_u$

$x_u^{(\mathrm{ctr})} \leftarrow \mathrm{PrivTOKEN}_u[\mathrm{ctr}]$

$\mathrm{PrivTOKEN}_u[\mathrm{ctr}] \leftarrow \perp$

$\mathrm{TOKEN}_u \leftarrow (\mathrm{PrivTOKEN}_u, \mathrm{PubTOKEN}_u)$

**return** $\left(u, \mathrm{ctr}, x_u^{(\mathrm{ctr})}\right)$

Fig. 5E

## Func *verify-auth-token(pp, $\Sigma_G$)

**DB** $\leftarrow$ pp $\quad$ / DB $\in (\{0,1\}^\kappa)^{N \times T}$

**parse** $(u, \text{ctr}, x) \leftarrow \Sigma_G$

**if** $\text{DB}[u][\text{ctr}] \neq \text{OWF}(x)$ **then**

$\quad$ **return** $\bot$

/ If check passes, set user authentication tokens and

/ delete entry from DB

**foreach** $v \in G$ **do**

$\quad \sigma_v \leftarrow (u, \text{ctr}, x)$

$\text{DB}[u][\text{ctr}] \leftarrow \bot$

$\text{pp}' \leftarrow \text{DB}$

**return** $(\text{pp}', (\sigma_v)_{v \in G})$

## Func *trace-sender($\text{st}_u, \sigma$)

**parse** $(G, \text{ctr}, \text{TOKEN}_u) \leftarrow \text{st}_u$

**parse** $(\text{PrivTOKEN}_u, \text{PubTOKEN}_u) \leftarrow \text{TOKEN}_u$

**parse** $(v, \text{ctr}_v, x) \leftarrow \sigma$

**if** $\text{PubTOKEN}_u[v][\text{ctr}_v] \neq \text{OWF}(x)$ **then**

$\quad$ **return** $(\text{st}_u, \bot, \bot)$

$\text{PubTOKEN}_u[v][\text{ctr}_v] \leftarrow \bot$

$\text{TOKEN}_u \leftarrow (\text{PrivTOKEN}_u, \text{PubTOKEN}_u)$

$\text{st}'_u \leftarrow (G, \text{ctr}, \text{TOKEN}_u)$

**return** $(\text{st}'_u, \top, v)$

Fig. 5F

$(m \mid y_1', x_1) + \Sigma_{MAC}$

$(m \mid y_1', x_1) + \Sigma_{MAC}$

Server
$y_1 \cdots y_N$

2

$(m \mid y_1', x_1) + \Sigma_{MAC}$

$(m \mid y_1', x_1) + \Sigma_{MAC}$

User 1

$(vk_1, sk_1)$

Fig. 6

$x_1' \quad \{0,1\}^{\wedge}128$
$y_1' \quad OWF (x_i')$

# Init$(1^\kappa, G)$

---

1: $\quad$ gsk $\leftarrow$\$ $\{0,1\}^\kappa$ $\quad$ **/** Group secret key

2: $\quad$ k$_{\mathsf{MAC}}$ $\leftarrow$ PRF(gsk, 0) $\quad$ **/** MAC key for group

3: $\quad$ **/** Prepare empty lists

4: $\quad$ **foreach** $u \in$ G **do**

5: $\qquad$ PubTOKEN$_u[*] := \perp$

6: $\qquad$ PrivTOKEN$_u[*] := \perp$

7: $\quad$ **foreach** $u \in$ G **do**

8: $\qquad$ $(X_u, Y_u) \leftarrow$ *gen-auth-token(G, $u$)

9: $\qquad$ PrivTOKEN$_u \leftarrow X_u$ $\quad$ **/** $X_u \in (\{0,1\}^\kappa)^T$

10: $\qquad$ **foreach** $v \in$ G **do**

11: $\qquad\quad$ PubTOKEN$_v[u] \leftarrow Y_u$ $\quad$ **/** $Y_u \in (\{0,1\}^\kappa)^T$

12: $\quad$ **foreach** $u \in$ G **do**

13: $\qquad$ TOKEN$_u := ($PrivTOKEN$_u$, PubTOKEN$_u)$

14: $\qquad$ st$_u \leftarrow ($G, k$_{\mathsf{MAC}}$, 1, TOKEN$_u)$

15: $\quad$ DB$[*] := \perp$ $\quad$ **/** Prepare empty database for Sv

16: $\quad$ **for** $u \in$ G **do**

17: $\qquad$ DB$[u] \leftarrow Y_u$

18: $\quad$ pp $\leftarrow$ DB $\quad$ **/** DB $\in (\{0,1\}^\kappa)^{N \times T}$

19: $\quad$ **return** $\left(\mathsf{pp}, (\mathsf{st}_u)_{u \in \mathsf{G}}\right)$

## Fig. 7A

## Send($\mathsf{st}_u$, m)

**parse** $(\mathsf{G}, \mathsf{k}_{\mathsf{MAC}}, \mathsf{ctr}, \mathsf{TOKEN}_u) \leftarrow \mathsf{st}_u$

**if** $\mathsf{ctr} \geq T - 1$ **then return** $\bot$ / Need to update tokens

$\mathsf{ctr}' \leftarrow \mathsf{ctr} + 1$

$\Sigma_{\mathsf{G}} \leftarrow {}^*\mathtt{attach\text{-}auth\text{-}token}(\mathsf{st}_u, \mathsf{m})$

$\mathsf{st}_u' \leftarrow (\mathsf{G}, \mathsf{k}_{\mathsf{MAC}}, \mathsf{ctr}', \mathsf{TOKEN}_u)$

**return** $(\mathsf{st}_u', \Sigma_{\mathsf{G}})$

## Verify($\mathsf{pp}$, $\Sigma_{\mathsf{G}}$, m)

**parse** $\mathsf{DB} \leftarrow \mathsf{pp}$

**try** $(\mathsf{pp}', (\sigma_v)_{v \in \mathsf{G}}) \leftarrow {}^*\mathtt{verify\text{-}auth\text{-}token}(\mathsf{pp}, \Sigma_{\mathsf{G}})$

**return** $(\mathsf{pp}', (\sigma_v)_{v \in \mathsf{G}})$

## Receive($\mathsf{st}_u$, $\sigma$, m)

**try** $(\mathsf{st}_u', b, v) \leftarrow {}^*\mathtt{trace\text{-}sender}(\mathsf{st}_u, \sigma, \mathsf{m})$

**return** $(\mathsf{st}_u', b, v)$

Fig. 7B

# UpdSend($\mathsf{st}_u$)

---

**parse** $(\mathsf{G}, \mathsf{k}_{\mathsf{MAC}}, \mathsf{ctr}, \mathsf{TOKEN}_u) \leftarrow \mathsf{st}_u$

**parse** $(\mathsf{PrivTOKEN}_u, \mathsf{PubTOKEN}_u) \leftarrow \mathsf{TOKEN}_u$

$(X_u, Y_u) \leftarrow {}^{\star}\texttt{gen-auth-token}(\mathsf{G}, u)$

$\mathsf{PrivTOKEN}_u \leftarrow X_u$

$\mathsf{PubTOKEN}_u[u] \leftarrow Y_u$

$\mathsf{TOKEN}_u \leftarrow (\mathsf{PrivTOKEN}_u, \mathsf{PubTOKEN}_u)$

$/$ Refresh counter to 1

$\mathsf{st}'_u \leftarrow (\mathsf{G}, \mathsf{k}_{\mathsf{MAC}}, 1, \mathsf{TOKEN}_u)$

$\widehat{\mathsf{ct}}_{\mathsf{G}} \leftarrow (u, Y_u)$

$\widehat{\Sigma}_{\mathsf{G}} \leftarrow {}^{\star}\texttt{attach-auth-token}(\mathsf{st}_u, \widehat{\mathsf{ct}}_{\mathsf{G}})$

**return** $(\mathsf{st}'_u, \widehat{\Sigma}_{\mathsf{G}}, \widehat{\mathsf{ct}}_{\mathsf{G}})$

Fig. 7C

## UpdVerify$(pp, \widehat{\Sigma}_G, \widehat{ct}_G)$

1: **parse** $DB \leftarrow pp$

2: **try** $(pp', (\widehat{\sigma}_v)_{v \in G}) \leftarrow {}^*\texttt{verify-auth-token}(pp, \widehat{\Sigma}_G)$

3: **parse** $(u, Y_u) \leftarrow \widehat{ct}_G$

4: $DB[u] \leftarrow Y_u$

5: **foreach** $v \in G$ **do**

6: $\quad \widehat{ct}_v \leftarrow (u, Y_u)$

7: **return** $(pp', (\widehat{\sigma}_v, \widehat{ct}_v)_{v \in G})$


## UpdReceive$(st_u, \widehat{\sigma}, \widehat{ct})$

1: **parse** $(G, k_{MAC}, ctr, TOKEN_u) \leftarrow st_u$

2: **parse** $(PrivTOKEN_u, PubTOKEN_u) \leftarrow TOKEN_u$

3: **try** $(st_u, b, v) \leftarrow {}^*\texttt{trace-sender}(st_u, \widehat{\sigma}, \widehat{ct})$

4: **parse** $(v', Y) \leftarrow \widehat{ct}$

5: **req** $v = v'$

6: $PubTOKEN_u[v] \leftarrow Y$    **/** Update user $v$'s tokens

7: $TOKEN_u \leftarrow (PrivTOKEN_u, PubTOKEN_u)$

8: $st'_u \leftarrow (G, k_{MAC}, ctr, TOKEN_u)$

9: **return** $(st'_u, b, v)$


Fig. 7D

# Func *gen-auth-token$(\mathsf{G}, u)$

1 :  $X[*], Y[*] := \perp$

2 :  **foreach** $t \in [T]$ **do**

3 :  $X[t] \leftarrow\!\!\$\, \{0,1\}^{\kappa}$

4 :  $Y[t] \leftarrow \mathsf{OWF}(X[t])$

5 :  **return** $(X, Y)$

# Func *attach-auth-token$(\mathsf{st}_u, \mathsf{m})$

1 :  **parse** $(\mathsf{G}, \mathsf{k}_{\mathsf{MAC}}, \mathsf{ctr}, \mathsf{TOKEN}_u) \leftarrow \mathsf{st}_u$

2 :  **parse** $(\mathsf{PrivTOKEN}_u, \mathsf{PubTOKEN}_u) \leftarrow \mathsf{TOKEN}_u$

3 :  $x_u^{(\mathsf{ctr})} \leftarrow \mathsf{PrivTOKEN}_u[\mathsf{ctr}]$

4 :  $\mathsf{PrivTOKEN}_u[\mathsf{ctr}] \leftarrow \perp$

5 :  $\mathsf{TOKEN}_u \leftarrow (\mathsf{PrivTOKEN}_u, \mathsf{PubTOKEN}_u)$

6 :  $\Sigma_{\mathsf{MAC}} \leftarrow\!\!\$\, \mathsf{MAC.TagGen}(\mathsf{k}_{\mathsf{MAC}}, (u, \mathsf{ctr}, x_u^{(\mathsf{ctr})}, \mathsf{m}))$

7 :  **return** $\left(u, \mathsf{ctr}, x_u^{(\mathsf{ctr})}, \Sigma_{\mathsf{MAC}}\right)$

Fig. 7E

## Func *verify-auth-token$(pp, \Sigma_G)$

$DB \leftarrow pp$    **/** $DB \in (\{0,1\}^\kappa)^{N \times T}$

**parse** $(u, \mathsf{ctr}, x, \Sigma_{\mathsf{MAC}}) \leftarrow \Sigma_G$

**if** $DB[u][\mathsf{ctr}] \neq OWF(x)$ **then**

    **return** $\perp$

**/** If check passes, set user authentication tokens and

**/** delete entry from DB

**foreach** $v \in G$ **do**

    $\sigma_v \leftarrow (u, \mathsf{ctr}, x, \Sigma_{\mathsf{MAC}})$

$DB[u][\mathsf{ctr}] \leftarrow \perp$

$pp' \leftarrow DB$

**return** $(pp', (\sigma_v)_{v \in G})$

## Func *trace-sender$(\mathsf{st}_u, \sigma, m)$

**parse** $(G, k_{\mathsf{MAC}}, \mathsf{ctr}, \mathsf{TOKEN}_u) \leftarrow \mathsf{st}_u$

**parse** $(\mathsf{PrivTOKEN}_u, \mathsf{PubTOKEN}_u) \leftarrow \mathsf{TOKEN}_u$

**parse** $(v, \mathsf{ctr}_v, x, \Sigma_{\mathsf{MAC}}) \leftarrow \sigma$

**if** $\mathsf{PubTOKEN}_u[v][\mathsf{ctr}_v] \neq OWF(x)$

    $\vee$ MAC.Verify$(k_{\mathsf{MAC}}, (v, \mathsf{ctr}_v, x, m), \Sigma_{\mathsf{MAC}}) = \perp$ **then**

    **return** $(\mathsf{st}_u, \perp, \perp)$

$\mathsf{PubTOKEN}_u[v][\mathsf{ctr}_v] \leftarrow \perp$

$\mathsf{TOKEN}_u \leftarrow (\mathsf{PrivTOKEN}_u, \mathsf{PubTOKEN}_u)$

$\mathsf{st}'_u \leftarrow (G, k_{\mathsf{MAC}}, \mathsf{ctr}, \mathsf{TOKEN}_u)$

**return** $(\mathsf{st}'_u, \top, v)$

Fig. 7F

$(C_t, Y_{tag})$

$(C_t, Y_{tag})$

Server
K_MAC

2

$(C_t, Y_{tag})$

$(C_t, Y_{tag})$

User 1

$(vk_1, sk_1)$

$x_1' \leftarrow \{0,1\}^{\wedge}128$

$y_1' \leftarrow OWF(x_i')$

$c_t \leftarrow SKE.Enc\,(K\_SKE, m, y_1', x_1)$

$Y_{tag} \leftarrow MAC.Tag(K\_MAC, c_t)$

Fig. 8

# $\mathsf{Init}(1^\kappa, G)$

$\mathsf{gsk} \leftarrow\!\!\$ \{0,1\}^\kappa$   / Group secret key

$\mathsf{sk}_{Sv} := \mathsf{k}_{MAC} \leftarrow \mathsf{PRF}(\mathsf{gsk}, 0)$   / MAC key for Sv and group

$\mathsf{k}_{SKE} \leftarrow \mathsf{PRF}(\mathsf{gsk}, 1)$   / SKE key for group

/ Prepare empty lists

**foreach** $u \in G$ **do**

  $\mathsf{PubTOKEN}_u[*] := \bot$

  $\mathsf{PrivTOKEN}_u[*] := \bot$

**foreach** $u \in G$ **do**

  $(X_u, Y_u) \leftarrow \mathsf{*gen\text{-}auth\text{-}token}(G, u)$

  $\mathsf{PrivTOKEN}_u \leftarrow X_u$   / $X_u \in (\{0,1\}^\kappa)^T$

  **foreach** $v \in G$ **do**

    $\mathsf{PubTOKEN}_v[u] \leftarrow Y_u$   / $Y_u \in (\{0,1\}^\kappa)^T$

**foreach** $u \in G$ **do**

  $\mathsf{TOKEN}_u := (\mathsf{PrivTOKEN}_u, \mathsf{PubTOKEN}_u)$

  $\mathsf{st}_u \leftarrow \left(G, \boxed{\mathsf{k}_{MAC}, \mathsf{k}_{SKE}}, 1, \mathsf{TOKEN}_u\right)$

$\mathsf{pp} := \bot$   / No pp maintained by Sv

**return** $\left(\mathsf{pp}, \boxed{\mathsf{sk}_{Sv}}, (\mathsf{st}_u)_{u \in G}\right)$

Fig. 9A

## Send$(\text{st}_u, \text{m})$

1 : **parse** $\left(\text{G}, \boxed{\text{k}_{\text{MAC}}, \text{k}_{\text{SKE}}}, \text{ctr}, \text{TOKEN}_u\right) \leftarrow \text{st}_u$

2 : **if** $\text{ctr} \geq T - 1$ **then return** $\perp$    / Need to update tokens

3 : $\text{ctr}' \leftarrow \text{ctr} + 1$

4 : $\Sigma_{\text{G}} \leftarrow *\text{attach-auth-token}(\text{st}_u)$

5 : $\text{st}'_u \leftarrow (\text{G}, \text{ctr}', \text{TOKEN}_u)$

6 : **return** $(\text{st}'_u, \Sigma_{\text{G}})$

## Verify$(\text{pp}, \boxed{\text{sk}_{\text{Sv}}}, \Sigma_{\text{G}}, \text{m})$

1 : **try** $\left(\perp, (\sigma_i)_{i \in [N]}\right)$

         $\leftarrow *\text{verify-auth-token}(\perp, \boxed{\text{sk}_{\text{Sv}}}, \Sigma_{\text{G}})$

2 : **return** $\left(\text{pp}', (\sigma_i)_{i \in [N]}\right)$

## Receive$(\text{st}_u, \sigma, \text{m})$

1 : **try** $(\text{st}'_u, b, v) \leftarrow *\text{trace-sender}(\text{st}_u, \sigma, \text{m})$

2 : **return** $(\text{st}'_u, b, v)$

Fig. 9B

## UpdSend($\text{st}_u$)

---

**parse** $\left(G, \boxed{\text{k}_{\text{MAC}}, \text{k}_{\text{SKE}}}, \text{epoch}, \text{ctr}, \text{TOKEN}_u\right) \leftarrow \text{st}_u$

**parse** $(\text{PrivTOKEN}_u, \text{PubTOKEN}_u) \leftarrow \text{TOKEN}_u$

$(X_u, Y_u) \leftarrow *\text{gen-auth-token}(G, u)$

$\widehat{\Sigma}_G \leftarrow *\text{attach-auth-token}(\text{st}_u)$

$\text{PrivTOKEN}_u \leftarrow X_u$

$\text{PubTOKEN}_u[u] \leftarrow Y_u$

$\text{TOKEN}_u \leftarrow (\text{PrivTOKEN}_u, \text{PubTOKEN}_u)$

/ Refresh counter to 1

$\text{st}'_u \leftarrow (G, 1, \text{TOKEN}_u)$

$\boxed{\widehat{\text{ct}}_{\text{SKE}} \leftarrow \text{Enc}(\text{k}_{\text{SKE}}, (u, Y_u))}$

$\boxed{\widehat{\text{ct}}_G \leftarrow \widehat{\text{ct}}_{\text{SKE}}}$

**return** $(\text{st}'_u, \widehat{\Sigma}_G, \widehat{\text{ct}}_G)$

Fig. 9C

$\mathsf{UpdVerify}(\mathrm{pp}, \boxed{\mathsf{sk_{Sv}}}, \widehat{\Sigma}_G, \widehat{\mathsf{ct}}_G)$

$\mathbf{try}\ (\bot, (\widehat{\sigma}_i)_{i \in [N]}) \leftarrow \text{*verify-auth-token}(\bot, \widehat{\Sigma}_G)$

$\mathbf{foreach}\ i \in [N]\ \mathbf{do}$

$\boxed{\widehat{\mathsf{ct}}_i \leftarrow \widehat{\mathsf{ct}}_G}$

$\mathbf{return}\ (\mathrm{pp}', (\widehat{\sigma}_i, \widehat{\mathsf{ct}}_i)_{i \in [N]})$

$\mathsf{UpdReceive}(\mathsf{st}_u, \widehat{\sigma}, \widehat{\mathsf{ct}})$

$\mathbf{parse}\ \left(G, \boxed{\mathsf{k_{MAC}}, \mathsf{k_{SKE}}}, \mathrm{ctr}, \mathsf{TOKEN}_u\right) \leftarrow \mathsf{st}_u$

$\mathbf{parse}\ (\mathsf{PrivTOKEN}_u, \mathsf{PubTOKEN}_u) \leftarrow \mathsf{TOKEN}_u$

$\mathbf{try}\ (\mathsf{st}_u, b, v) \leftarrow \text{*trace-sender}(\mathsf{st}_u, \widehat{\sigma})$

$\boxed{\mathbf{parse}\ \widehat{\mathsf{ct}}_{\mathsf{SKE}} \leftarrow \widehat{\mathsf{ct}}}$

$\boxed{(v', Y) \leftarrow \mathsf{SKE.Dec}(\mathsf{k_{SKE}}, \widehat{\mathsf{ct}}_{\mathsf{SKE}})}$

$\mathbf{req}\ v = v'$

$\mathsf{PubTOKEN}_u[v] \leftarrow Y\quad$ / Update user $v$'s tokens

$\mathsf{TOKEN}_u \leftarrow (\mathsf{PrivTOKEN}_u, \mathsf{PubTOKEN}_u)$

$\mathsf{st}'_u \leftarrow (G, \mathrm{ctr}, \mathsf{TOKEN}_u)$

$\mathbf{return}\ (\mathsf{st}'_u, \top, v)$

Fig. 9D

## Func *gen-auth-token($G, u$)

$X[*], Y[*] := \bot$

**foreach** $t \in [T]$ **do**

$\quad X[t] \leftarrow\$ \{0,1\}^{\kappa}$

$\quad Y[t] \leftarrow \mathrm{OWF}(X[t])$

**return** $(X, Y)$

## Func *attach-auth-token($\mathrm{st}_u$)

**parse** $\left(G, \boxed{k_{\mathsf{MAC}}, k_{\mathsf{SKE}}}, \mathrm{ctr}, \mathsf{TOKEN}_u\right) \leftarrow \mathrm{st}_u$

**parse** $(\mathsf{PrivTOKEN}_u, \mathsf{PubTOKEN}_u) \leftarrow \mathsf{TOKEN}_u$

$x_u^{(\mathrm{ctr})} \leftarrow \mathsf{PrivTOKEN}_u[\mathrm{ctr}]$

$\mathsf{PrivTOKEN}_u[\mathrm{ctr}] \leftarrow \bot$

$\mathsf{TOKEN}_u \leftarrow (\mathsf{PrivTOKEN}_u, \mathsf{PubTOKEN}_u)$

$\boxed{\mathsf{ct}_{\mathsf{SKE}} \leftarrow\$ \mathsf{SKE.Enc}\left(k_{\mathsf{SKE}}, \left(u, \mathrm{ctr}, x_u^{(\mathrm{ctr})}\right)\right)}$

$\boxed{\Sigma_{\mathsf{MAC}} \leftarrow\$ \mathsf{MAC.TagGen}(k_{\mathsf{MAC}}, \mathsf{ct}_{\mathsf{SKE}})}$

**return** $\boxed{(\mathsf{ct}_{\mathsf{SKE}}, \Sigma_{\mathsf{MAC}})}$

Fig. 9E

## Func *verify-auth-token(pp = $\perp$, $\boxed{sk_{Sv}}$, $\Sigma_G$)

1 : $\boxed{\textbf{parse } (ct_{SKE}, \Sigma_{MAC}) \leftarrow \Sigma_G}$

2 : $\boxed{\textbf{if } MAC.Verify(sk_{Sv}, ct_{SKE}, \Sigma_{MAC}) = \perp \textbf{ then}}$

3 : **return** $\perp$

4 : / If check passes, set user authentication tokens

5 : **foreach** $i \in [N]$ **do**

6 : $\boxed{\sigma_i \leftarrow ct_{SKE}}$

7 : **return** $(\perp, (\sigma_i)_{i \in [N]})$

## Func *trace-sender($st_u$, $\sigma$)

1 : **parse** $\left(G, \boxed{k_{MAC}, k_{SKE}}, ctr, TOKEN_u\right) \leftarrow st_u$

2 : **parse** $(PrivTOKEN_u, PubTOKEN_u) \leftarrow TOKEN_u$

3 : $\boxed{\textbf{parse } ct_{SKE} \leftarrow \sigma}$

4 : $\boxed{(v, ctr_v, x) \leftarrow SKE.Dec(k_{SKE}, ct_{SKE})}$

5 : **if** $PubTOKEN_u[v][ctr_v] \neq OWF(x)$ **then**

6 : **return** $(st_u, \perp, \perp)$

7 : $PubTOKEN_u[v][ctr_v] \leftarrow \perp$

8 : $TOKEN_u \leftarrow (PrivTOKEN_u, PubTOKEN_u)$

9 : $st'_u \leftarrow (G, ctr, TOKEN_u)$

10 : **return** $(st'_u, \top, v)$

Fig. 9F

Fig. 10

$$x_1' \leftarrow \{0,1\}^{\wedge}128$$
$$y_1' \leftarrow OWF(x_i')$$
$$c_t \leftarrow SKE.Enc(K\_SKE, m, y_1', x_{1,}\ \Sigma_{MAC})$$
$$Y_{tag} \leftarrow MAC.Tag(K\_MAC, c_t)$$

# $\mathsf{Init}(1^\kappa, \mathsf{G})$

1 : $\quad \mathsf{gsk} \leftarrow\!\$ \{0,1\}^\kappa \quad$ **/** Group secret key

2 : $\quad \mathsf{k_{MAC}} \leftarrow \mathsf{PRF}(\mathsf{gsk}, 0) \quad$ **/** MAC key for group

3 : $\quad \boxed{\mathsf{sk_{Sv}} := \overline{\mathsf{k_{MAC}}} \leftarrow \mathsf{PRF}(\mathsf{gsk}, 1) \quad \text{\textbf{/} MAC key for Sv and group}}$

4 : $\quad \boxed{\mathsf{k_{SKE}} \leftarrow \mathsf{PRF}(\mathsf{gsk}, 2) \quad \text{\textbf{/} SKE key for group}}$

5 : $\quad$ **/** Prepare empty lists

6 : $\quad$ **foreach** $u \in \mathsf{G}$ **do**

7 : $\quad\quad \mathsf{PubTOKEN}_u[*] := \perp$

8 : $\quad\quad \mathsf{PrivTOKEN}_u[*] := \perp$

9 : $\quad$ **foreach** $u \in \mathsf{G}$ **do**

10 : $\quad\quad (X_u, Y_u) \leftarrow {}^\star\mathtt{gen\text{-}auth\text{-}token}(\mathsf{G}, u)$

11 : $\quad\quad \mathsf{PrivTOKEN}_u \leftarrow X_u \quad$ **/** $X_u \in (\{0,1\}^\kappa)^T$

12 : $\quad\quad$ **foreach** $v \in \mathsf{G}$ **do**

13 : $\quad\quad\quad \mathsf{PubTOKEN}_v[u] \leftarrow Y_u \quad$ **/** $Y_u \in (\{0,1\}^\kappa)^T$

14 : $\quad$ **foreach** $u \in \mathsf{G}$ **do**

15 : $\quad\quad \mathsf{TOKEN}_u := (\mathsf{PrivTOKEN}_u, \mathsf{PubTOKEN}_u)$

16 : $\quad\quad \mathsf{st}_u \leftarrow \left( \mathsf{G}, \mathsf{k_{MAC}}, \boxed{\overline{\mathsf{k_{MAC}}}, \mathsf{k_{SKE}}}, 1, \mathsf{TOKEN}_u \right)$

17 : $\quad \boxed{\mathsf{pp} := \perp \quad \text{\textbf{/} No pp maintained by Sv}}$

18 : $\quad$ **return** $\left( \mathsf{pp}, \boxed{\mathsf{sk_{Sv}}}, (\mathsf{st}_u)_{u \in \mathsf{G}} \right)$

Fig. 11A

## $\text{Send}(\text{st}_u, m)$

1: **parse** $\left( G, k_{MAC}, \boxed{\overline{k_{MAC}}, k_{SKE}}, ctr, TOKEN_u \right) \leftarrow st_u$

2: **if** $ctr \geq T - 1$ **then return** $\perp$ / Need to update tokens

3: $ctr' \leftarrow ctr + 1$

4: $\Sigma_G \leftarrow {}^*\texttt{attach-auth-token}(\mathbf{st}_u, \mathbf{m})$

5: $st'_u \leftarrow \left( G, k_{MAC}, \boxed{\overline{k_{MAC}}, k_{SKE}}, ctr', TOKEN_u \right)$

6: **return** $(st'_u, \Sigma_G)$

## $\text{Verify}(\text{pp}, \boxed{sk_{Sv}}, \Sigma_G, m)$

1: **try** $\left( \perp, (\sigma_i)_{i \in [N]} \right)$

$\leftarrow {}^*\texttt{verify-auth-token}(\perp, \boxed{sk_{Sv}}, \Sigma_G)$

2: **return** $\left( pp', (\sigma_i)_{i \in [N]} \right)$

## $\text{Receive}(\text{st}_u, \sigma, m)$

1: **try** $(st'_u, b, v) \leftarrow {}^*\texttt{trace-sender}(\mathbf{st}_u, \sigma, \mathbf{m})$

2: **return** $(st'_u, b, v)$

Fig. 11B

## UpdSend$(\mathsf{st}_u)$

1: **parse** $\left( \mathsf{G}, \mathsf{k_{MAC}}, \boxed{\overline{\mathsf{k_{MAC}}}, \mathsf{k_{SKE}}}, \mathsf{ctr}, \mathsf{TOKEN}_u \right) \leftarrow \mathsf{st}_u$

2: **parse** $(\mathsf{PrivTOKEN}_u, \mathsf{PubTOKEN}_u) \leftarrow \mathsf{TOKEN}_u$

3: $(X_u, Y_u) \leftarrow {}^\star\texttt{gen-auth-token}(\mathsf{G}, u)$

4: $\widehat{\Sigma}_\mathsf{G} \leftarrow {}^\star\texttt{attach-auth-token}(\mathsf{st}_u, Y_u)$

5: $\mathsf{PrivTOKEN}_u \leftarrow X_u$

6: $\mathsf{PubTOKEN}_u[u] \leftarrow Y_u$

7: $\mathsf{TOKEN}_u \leftarrow (\mathsf{PrivTOKEN}_u, \mathsf{PubTOKEN}_u)$

8: **/** Refresh counter to 1

9: $\mathsf{st}'_u \leftarrow \left( \mathsf{G}, \mathsf{k_{MAC}}, \boxed{\overline{\mathsf{k_{MAC}}}, \mathsf{k_{SKE}}}, 1, \mathsf{TOKEN}_u \right)$

10: $\boxed{\widehat{\mathsf{ct}}_{\mathsf{SKE}} \leftarrow \mathsf{Enc}(\mathsf{k_{SKE}}, (u, Y_u))}$

11: $\boxed{\widehat{\mathsf{ct}}_\mathsf{G} \leftarrow \widehat{\mathsf{ct}}_{\mathsf{SKE}}}$

12: **return** $(\mathsf{st}'_u, \widehat{\Sigma}_\mathsf{G}, \widehat{\mathsf{ct}}_\mathsf{G})$

Fig. 11C

$\underline{\text{UpdVerify}(\text{pp}, \boxed{\text{sk}_{\text{Sv}}}, \widehat{\Sigma}_G, \widehat{\text{ct}}_G)}$

$1: \quad \textbf{try } (\bot, (\widehat{\sigma}_i)_{i \in [N]}) \leftarrow \ast\texttt{verify-auth-token}(\bot, \boxed{\text{sk}_{\text{Sv}}}, \widehat{\Sigma}_G)$

$2: \quad \textbf{foreach } i \in [N] \textbf{ do}$

$3: \quad\quad \boxed{\widehat{\text{ct}}_i \leftarrow \widehat{\text{ct}}_G}$

$4: \quad \textbf{return } (\text{pp}', (\widehat{\sigma}_i, \widehat{\text{ct}}_i)_{i \in [N]})$

$\underline{\text{UpdReceive}(\text{st}_u, \widehat{\sigma}, \widehat{\text{ct}})}$

$1: \quad \textbf{parse } \left( G, k_{\text{MAC}}, \boxed{\overline{k_{\text{MAC}}}, k_{\text{SKE}}}, \text{ctr}, \text{TOKEN}_u \right) \leftarrow \text{st}_u$

$2: \quad \textbf{parse } (\text{PrivTOKEN}_u, \text{PubTOKEN}_u) \leftarrow \text{TOKEN}_u$

$3: \quad \boxed{\textbf{parse } \widehat{\text{ct}}_{\text{SKE}} \leftarrow \widehat{\text{ct}}}$

$4: \quad \boxed{(v', Y) \leftarrow \text{SKE.Dec}(k_{\text{SKE}}, \widehat{\text{ct}}_{\text{SKE}})}$

$5: \quad \textbf{try } (\text{st}_u, b, v) \leftarrow \ast\texttt{trace-sender}(\text{st}_u, \widehat{\sigma}, Y)$

$6: \quad \textbf{req } v = v'$

$7: \quad \text{PubTOKEN}_u[v] \leftarrow Y \quad \textit{/ } \text{Update user } v\text{'s tokens}$

$8: \quad \text{TOKEN}_u \leftarrow (\text{PrivTOKEN}_u, \text{PubTOKEN}_u)$

$9: \quad \text{st}'_u \leftarrow \left( G, k_{\text{MAC}}, \boxed{\overline{k_{\text{MAC}}}, k_{\text{SKE}}}, \text{ctr}, \text{TOKEN}_u \right)$

$10: \quad \textbf{return } (\text{st}'_u, \top, v)$

Fig. 11D

# Func *gen-auth-token$(\mathbf{G}, u)$

1: $X[*], Y[*] := \bot$

2: **foreach** $t \in [T]$ **do**

3: $X[t] \leftarrow\$ \{0,1\}^\kappa$

4: $Y[t] \leftarrow \mathsf{OWF}(X[t])$

5: **return** $(X, Y)$

Func *attach-auth-token$(\mathsf{st}_u, \mathsf{m})$

1: **parse** $\left(\mathsf{G}, \mathsf{k_{MAC}}, \boxed{\overline{\mathsf{k_{MAC}}}, \mathsf{k_{SKE}}}, \mathsf{ctr}, \mathsf{TOKEN}_u\right) \leftarrow \mathsf{st}_u$

2: **parse** $(\mathsf{PrivTOKEN}_u, \mathsf{PubTOKEN}_u) \leftarrow \mathsf{TOKEN}_u$

3: $x_u^{(\mathsf{ctr})} \leftarrow \mathsf{PrivTOKEN}_u[\mathsf{ctr}]$

4: $\mathsf{PrivTOKEN}_u[\mathsf{ctr}] \leftarrow \bot$

5: $\mathsf{TOKEN}_u \leftarrow (\mathsf{PrivTOKEN}_u, \mathsf{PubTOKEN}_u)$

6: $\Sigma_{\mathsf{MAC}} \leftarrow\$ \mathsf{MAC.TagGen}(\mathsf{k_{MAC}}, (u, \mathsf{ctr}, x_u^{(\mathsf{ctr})}, \mathsf{m}))$

7: $\boxed{\mathsf{ct_{SKE}} \leftarrow\$ \mathsf{SKE.Enc}\left(\mathsf{k_{SKE}}, \left(u, \mathsf{ctr}, x_u^{(\mathsf{ctr})}, \Sigma_{\mathsf{MAC}}\right)\right)}$

8: $\boxed{\overline{\Sigma}_{\mathsf{MAC}} \leftarrow\$ \mathsf{MAC.TagGen}(\overline{\mathsf{k_{MAC}}}, \mathsf{ct_{SKE}})}$

9: **return** $\boxed{(\mathsf{ct_{SKE}}, \overline{\Sigma}_{\mathsf{MAC}})}$

Fig. 11E

## Func *verify-auth-token$(pp = \perp, \boxed{sk_{Sv}}, \Sigma_G)$

1 : $\boxed{\textbf{parse } (ct_{SKE}, \overline{\Sigma}_{MAC}) \leftarrow \Sigma_G}$

2 : $\boxed{\textbf{if } MAC.Verify(sk_{Sv}, ct_{SKE}, \overline{\Sigma}_{MAC}) = \perp \textbf{ then}}$

3 :     **return** $\perp$

4 :     **/** If check passes, set user authentication tokens

5 : **foreach** $i \in [N]$ **do**

6 :     $\boxed{\sigma_i \leftarrow ct_{SKE}}$

7 : **return** $\left(\perp, (\sigma_i)_{i \in [N]}\right)$

## Func *trace-sender$(st_u, \sigma, m)$

1 : **parse** $\left(G, k_{MAC}, \boxed{\overline{k_{MAC}}, k_{SKE}}, ctr, TOKEN_u\right) \leftarrow st_u$

2 : **parse** $(PrivTOKEN_u, PubTOKEN_u) \leftarrow TOKEN_u$

3 : $\boxed{\textbf{parse } ct_{SKE} \leftarrow \sigma}$

4 : $\boxed{(v, ctr_v, x, \Sigma_{MAC}) \leftarrow SKE.Dec(k_{SKE}, ct_{SKE})}$

5 : **if** $PubTOKEN_u[v][ctr_v] \neq OWF(x)$

6 :     $\vee\ MAC.Verify(k_{MAC}, (v, ctr_v, x, m), \Sigma_{MAC}) = \perp \textbf{ then}$

7 :     **return** $(st_u, \perp, \perp)$

8 : $PubTOKEN_u[v][ctr_v] \leftarrow \perp$

9 : $TOKEN_u \leftarrow (PrivTOKEN_u, PubTOKEN_u)$

10 : $st_u' \leftarrow \left(G, k_{MAC}, \boxed{\overline{k_{MAC}}, k_{SKE}}, ctr, TOKEN_u\right)$

11 : **return** $(st_u', \top, v)$

## Fig. 11F

Fig. 12

Fig. 13

## $\mathsf{Init}(1^\kappa, G)$

1: $\mathsf{gsk} \leftarrow\!\!\$ \ \{0,1\}^\kappa$   / Group secret key

2:   / Prepare empty list and public key for users

3: **foreach** $u \in G$ **do**

4:     $\mathsf{SendSEED}_u[*], \mathsf{ReceiveSEED}_u[*] := \perp$

5:     $(\mathsf{ek}_u, \mathsf{dk}_u) \leftarrow \mathsf{KEM.KeyGen}(1^\kappa)$

6: $\mathsf{EK} \leftarrow (u, \mathsf{ek}_u)_{u \in G}$    / $\mathsf{EK}[u] = \mathsf{ek}_u$

7: $\mathsf{epoch} := 0$

8: $\mathsf{k}_{\mathsf{epoch}} \leftarrow \mathsf{PRF}(\mathsf{gsk}, \mathsf{epoch})$    / Permutation keys for tokens

9: **foreach** $u \in G$ **do**

10:     $(\mathsf{ReceiveSEED}_u, Y_u, (\mathsf{ct}_v)_{v \in G})$

        $\leftarrow \star\mathsf{gen\text{-}auth\text{-}token}(G, \mathsf{EK}, \mathsf{epoch}, u, \mathsf{ReceiveSEED}_u)$

11:     **foreach** $v \in G$ **do**

12:         $(\mathsf{seed}_{v \to u}, 1) \leftarrow \mathsf{ReceiveSEED}_u[\mathsf{epoch}][v]$

13:         $\mathsf{SendSEED}_v[\mathsf{epoch}][u] \leftarrow \mathsf{seed}_{v \to u}$

14: **foreach** $u \in G$ **do**

15:     $\mathsf{SEED}_u := (\mathsf{SendSEED}_u, \mathsf{ReceiveSEED}_u)$

16:     $\mathsf{st}_u \leftarrow (G, \mathsf{gsk}, \mathsf{EK}, \mathsf{dk}_u, \mathsf{epoch}, 1, \mathsf{SEED}_u)$

17: $\mathsf{DB}[*] := \perp$   / Prepare empty database for Sv

18: **for** $(u, j) \in G \times [NT]$ **do**

19:     $\tilde{j} \leftarrow \mathsf{PRP}(\mathsf{k}_{\mathsf{epoch}}, j)$   / Reorder public tokens and store it in DB

20:     $\mathsf{DB}[\mathsf{epoch}][\mathsf{idx}(u)][\tilde{j}] \leftarrow Y_u[j]$

21: $\mathsf{pp} \leftarrow \mathsf{DB}$   / $\mathsf{DB}[0] \in (\{0,1\}^\kappa)^{N \times NT}$

22: **return** $\big(\mathsf{pp}, (\mathsf{st}_u)_{u \in G}\big)$

Fig. 14A

## Send($st_u$, m)

---

**parse** $(G, gsk, EK, dk_u, epoch, ctr, SEED_u) \leftarrow st_u$

**if** $ctr \geq T - 1$ **then return** $\perp$    / Need to update tokens

$ctr' \leftarrow ctr + 1$

$\Sigma_G \leftarrow (epoch, *\texttt{attach-auth-token}(st_u))$

$st'_u \leftarrow (G, gsk, EK, dk_u, epoch, ctr', SEED_u)$

**return** $(st'_u, \Sigma_G)$

## Verify($pp, \Sigma_G$, m)

---

**parse** $DB \leftarrow pp$

**try** $(pp', (\sigma_i)_{i \in [N]}) \leftarrow *\texttt{verify-auth-token}(pp, \Sigma_G)$

**return** $(pp', (\sigma_i)_{i \in [N]})$

## Receive($st_u, \sigma$, m)

---

**try** $(st'_u, b, v) \leftarrow *\texttt{trace-sender}(st_u, \sigma)$

**return** $(st'_u, b, v)$

Fig. 14B

# UpdSend($st_u$)

**parse** $(G, gsk, EK, dk_u, epoch, ctr, SEED_u) \leftarrow st_u$

/ Cannot update again if others haven't

**if** $ctr = T$ **then return** $\perp$

**parse** $(SendSEED_u, ReceiveSEED_u) \leftarrow SEED_u$

$epoch' \leftarrow epoch + 1$   / Move to new epoch

$k_{epoch'} \leftarrow PRF(gsk, epoch')$

/ Create seeds/tokens for new epoch

$(ReceiveSEED_u, Y_u, (ct_v)_{v \in G})$
    $\leftarrow \star gen\text{-}auth\text{-}token(G, EK, epoch', u, ReceiveSEED_u)$

$\widetilde{Y_u}[*] := \perp$   / Reorder public tokens to be uploaded to Sv

**for** $j \in [NT]$ **do**

   $\widetilde{j} \leftarrow PRP(k_{epoch}, j)$

   $\widetilde{Y_u}[\widetilde{j}] \leftarrow Y_u[j]$

$\widehat{ct}_G \leftarrow (idx(u), \widetilde{Y_u}, (ct_v)_{v \in G})$

$\widehat{\Sigma}_G \leftarrow (epoch, \star attach\text{-}auth\text{-}token(st_u))$

$SendSEED_u[epoch] \leftarrow \perp$   / Remove seeds from previous epoch

/ Update own seed/private tokens for next epoch

$SendSEED_u[epoch'][u] \leftarrow ReceiveSEED_u[epoch'][u]$

$SEED_u \leftarrow (SendSEED_u, ReceiveSEED_u)$

/ Max out counter to $T$ but do not increment epoch yet

$st'_u \leftarrow (G, gsk, EK, dk_u, epoch, T, SEED_u)$

**return** $(st'_u, \widehat{\Sigma}_G, \widehat{ct}_G)$

Fig. 14C

## $\mathsf{UpdVerify}(\mathsf{pp}, \widehat{\Sigma}_G, \widehat{\mathsf{ct}}_G)$

**parse** $\mathsf{DB} \leftarrow \mathsf{pp}$

**try** $(\mathsf{pp}', (\widehat{\sigma}_i)_{i \in [N]}) \leftarrow *\mathsf{verify\text{-}auth\text{-}token}(\mathsf{pp}, \widehat{\Sigma}_G)$

**parse** $\left(\mathsf{epoch}, \widetilde{\mathsf{id}}_{\mathsf{send}}, (x_1, \ldots, x_N)\right) \leftarrow \widehat{\Sigma}_G$

**parse** $(\mathsf{id}_{\mathsf{receive}}, \widetilde{Y}, (\mathsf{ct}_i)_{i \in [N]}) \leftarrow \widehat{\mathsf{ct}}_G$

**req** $\mathsf{DB}[\mathsf{epoch} + 1][\mathsf{id}_{\mathsf{receive}}] = \bot$   / No public token for $\mathsf{id}_{\mathsf{receive}}$ in epoch + 1

$\mathsf{DB}[\mathsf{epoch} + 1][\mathsf{id}_{\mathsf{receive}}] \leftarrow \widetilde{Y}$   / Update DB for next epoch

**foreach** $i \in [N]$ **do**

$\quad \widehat{\mathsf{ct}}_i \leftarrow \mathsf{ct}_i$

**return** $(\mathsf{pp}', (\widehat{\sigma}_i, \widehat{\mathsf{ct}}_i)_{i \in [N]})$

## $\mathsf{UpdReceive}(\mathsf{st}_u, \widehat{\sigma}, \widehat{\mathsf{ct}})$

**parse** $(G, \mathsf{gsk}, \mathsf{EK}, \mathsf{dk}_u, \mathsf{epoch}, \mathsf{ctr}, \mathsf{SEED}_u) \leftarrow \mathsf{st}_u$

**parse** $(\mathsf{SendSEED}_u, \mathsf{ReceiveSEED}_u) \leftarrow \mathsf{SEED}_u$

**try** $(\mathsf{st}'_u, b, v) \leftarrow *\mathsf{trace\text{-}sender}(\mathsf{st}_u, \widehat{\sigma})$

**if** $v = u$ **then return** $(\mathsf{st}_u, \top, u)$   / $\mathsf{SendSEED}_u$ is already updated with $\mathsf{seed}_{u \to u}$

**req** $\mathsf{SendSEED}_u[\mathsf{epoch} + 1][v] = \bot$   / $v$ hasn't updated yet in epoch + 1

$\mathsf{seed}_{u \to v} \leftarrow \mathsf{KEM.Dec}(\mathsf{dk}_u, \widehat{\mathsf{ct}})$   / Seed used by $u$ to send message to $v$ in epoch + 1

$\mathsf{SendSEED}_u[\mathsf{epoch} + 1][v] \leftarrow \mathsf{seed}_{u \to v}$

$\mathsf{SEED}_u \leftarrow (\mathsf{SendSEED}_u, \mathsf{ReceiveSEED}_u)$

**if** $\forall w \in G, \mathsf{SendSEED}_u[\mathsf{epoch} + 1][w] \neq \bot$ **then**

$\quad$ / Increment epoch and refresh counter to 1 if everybody updated

$\quad \mathsf{st}'_u \leftarrow (G, \mathsf{gsk}, \mathsf{EK}, \mathsf{dk}_u, \mathsf{epoch} + 1, 1, \mathsf{SEED}_u)$

**else** $\mathsf{st}'_u \leftarrow (G, \mathsf{gsk}, \mathsf{EK}, \mathsf{dk}_u, \mathsf{epoch}, \mathsf{ctr}, \mathsf{SEED}_u)$

**return** $(\mathsf{st}'_u, \top, v)$

Fig. 14D

## Func *gen-auth-token$(G, EK, epoch, u, ReceiveSEED)$

1:  **req** ReceiveSEED$[$epoch$] = \perp$

2:  **foreach** $v \in G$ **do**

3:      $(\text{seed}_{v \to u}, \text{ct}_v) \leftarrow\$ \text{KEM.Enc}(EK[v])$

4:      ReceiveSEED$[$epoch$][v] \leftarrow (\text{seed}_{v \to u}, 1)$

5:      **foreach** $t \in [T]$ **do**

6:          / $t$-th private token $v$ sends to $u$ in epoch

7:          $x^{(t)}_{v \to u} \leftarrow \text{PRF}(\text{seed}_{v \to u}, \text{epoch} \| t)$

8:          $y^{(t)}_{v \to u} \leftarrow \text{OWF}(x^{(t)}_{v \to u})$   / Corresponding $t$-th public token

9:  / Arrange all public tokens in order of users $G = (u_1, \cdots, u_N)$

10:  $Y \leftarrow \left( y^{(1)}_{u_1 \to u}, \ldots, y^{(T)}_{u_1 \to u}, \right.$

11:          $\left. \ldots, y^{(1)}_{u_N \to u}, \ldots, y^{(T)}_{u_N \to u} \right) \in (\{0,1\}^{\kappa})^{NT}$

12:  **return** $(\text{ReceiveSEED}, Y, (\text{ct}_v)_{v \in G})$

Fig. 14E

## Func *attach-auth-token(st$_u$)

1 : **parse** $(G, gsk, EK, dk_u, epoch, ctr, SEED_u) \leftarrow st_u$

2 : **parse** $(SendSEED_u, ReceiveSEED_u) \leftarrow SEED_u$

3 : $k_{epoch} \leftarrow PRF(gsk, epoch)$

4 : **foreach** $v \in G$ **do**

5 :      $seed_{u \to v} \leftarrow SendSEED_u[epoch][v]$

6 :      $x_{u \to v}^{(ctr)} \leftarrow PRF(seed_{u \to v}, epoch\|ctr)$     / ctr-th private token $u$ sends to $v$

7 :      / Compute permuted index of the corresponding public token in DB

8 : $id_{send} \leftarrow ctr + (idx(u) - 1) \cdot T$

9 : $\widetilde{id}_{send} \leftarrow PRP(k_{epoch}, id_{send})$     / $id_{send}, \widetilde{id}_{send} \in [NT]$

10 : **return** $\left( \widetilde{id}_{send}, \left( x_{u \to v}^{(ctr)} \right)_{v \in G} \right)$

Fig. 14F

EP 4 749 983 A1

## Func $\star$verify-auth-token$(\text{pp}, \Sigma_G)$

$\text{DB} \leftarrow \text{pp}$    $/\ Y \in (\{0,1\}^\kappa)^{N \times NT}$

**parse** $\left(\text{epoch}, \widetilde{\text{id}}_{\text{send}}, (x_1, \ldots, x_N)\right) \leftarrow \Sigma_G$

**foreach** $i \in [N]$ **do**

     **if** $\text{DB}[\text{epoch}][i][\widetilde{\text{id}}_{\text{send}}] \neq \text{OWF}(x_i)$ **then**

         **return** $\perp$

$/$ If check passes, set user authentication tokens and

$/$ delete column to update DB

**foreach** $i \in [N]$ **do**

     $\sigma_i \leftarrow (\text{epoch}, \widetilde{\text{id}}_{\text{send}}, x_i)$

     $\text{DB}[\text{epoch}][i][\widetilde{\text{id}}_{\text{send}}] \leftarrow \perp$

$\text{pp}' \leftarrow \text{DB}$

**return** $\left(\text{pp}', (\sigma_i)_{i \in [N]}\right)$

Fig. 14G

## Func *trace-sender$(\mathrm{st}_u, \sigma)$

$\text{parse } (G, gsk, EK, dk_u, epoch, ctr, SEED_u) \leftarrow \mathrm{st}_u$

$\text{parse } (SendSEED_u, ReceiveSEED_u) \leftarrow SEED_u$

$\text{parse } (epoch', \widetilde{id}_{send}, x) \leftarrow \sigma$

$\text{req } epoch = epoch'$

$k_{epoch} \leftarrow PRF(gsk, epoch)$

$id_{send} \leftarrow PRP^{-1}(k_{epoch}, \widetilde{id}_{send})$

$i \leftarrow \lfloor id_{send}/T \rfloor + 1$ / Index of the user who sent the message

$t \leftarrow id_{send} - \lfloor id_{send}/T \rfloor \cdot T$ / $t$-th token from user in epoch

$v \leftarrow i\text{-th user in } G$ / $v \in G$ and $id_{send} = t + (idx(v) - 1) \cdot T$

$(seed_{v \rightarrow u}, ctr) \leftarrow ReceiveSEED_u[epoch][v]$

$\text{req } ctr = t$ / Require that token wasn't used yet

$x^{(t)}_{v \rightarrow u} \leftarrow PRF(seed_{v \rightarrow u}, epoch \| t)$

$\text{if } x^{(t)}_{v \rightarrow u} \neq x \text{ then return } (\mathrm{st}_u, \bot, \bot)$

$ReceiveSEED_u[epoch][v] \leftarrow (seed_{v \rightarrow u}, ctr + 1)$ / Mark $t$-th private token to be used

$SEED_u \leftarrow (SendSEED_u, ReceiveSEED_u)$

$\mathrm{st}'_u \leftarrow (G, gsk, EK, dk_u, epoch, ctr, SEED_u)$

$\text{return } (\mathrm{st}'_u, \top, v)$

Fig. 14H

EP 4 749 983 A1

$(vk_2, sk_2)$

1

User 2

$(otsk_{2\rightarrow1})$

$(vk_3, sk_3)$

1

User 3

$(otsk_{3\rightarrow1})$

$(otvk_{1\rightarrow1}, otvk_{2\rightarrow1}, otvk_{3\rightarrow1}, otvk_{4\rightarrow1})$

Server

2

$(otsk_{4\rightarrow1})$

1

User 1

$(vk_1, sk_1)$

1

User 4

$(vk_4, sk_4)$

Fig. 15

## $\mathsf{Init}(1^\kappa, G)$

$\mathsf{gsk} \leftarrow\$ \{0, 1\}^\kappa$ / Group secret key

/ Prepare empty list and public key for users

**foreach** $u \in G$ **do**

   $\mathsf{SendSEED}_u[*], \mathsf{ReceiveSEED}_u[*] := \bot$

   $(\mathsf{ek}_u, \mathsf{dk}_u) \leftarrow \mathsf{KEM.KeyGen}(1^\kappa)$

$\mathsf{EK} \leftarrow (u, \mathsf{ek}_u)_{u \in G}$ / $\mathsf{EK}[u] = \mathsf{ek}_u$

$\mathsf{epoch} := 0$

$\mathsf{k_{epoch}} \leftarrow \mathsf{PRF}(\mathsf{gsk}, \mathsf{epoch})$ / Permutation keys for OTS otvks

**foreach** $u \in G$ **do**

   $(\mathsf{ReceiveSEED}_u, Y_u, (\mathsf{ct}_v)_{v \in G})$

      $\leftarrow \mathsf{*gen\text{-}auth\text{-}token}(G, \mathsf{EK}, \mathsf{epoch}, u, \mathsf{ReceiveSEED}_u)$

   **foreach** $v \in G$ **do**

      $(\mathsf{seed}_{v \to u}, 1) \leftarrow \mathsf{ReceiveSEED}_u[\mathsf{epoch}][v]$

      $\mathsf{SendSEED}_v[\mathsf{epoch}][u] \leftarrow \mathsf{seed}_{v \to u}$

**foreach** $u \in G$ **do**

   $\mathsf{SEED}_u := (\mathsf{SendSEED}_u, \mathsf{ReceiveSEED}_u)$

   $\mathsf{st}_u \leftarrow (G, \mathsf{gsk}, \mathsf{EK}, \mathsf{dk}_u, \mathsf{epoch}, 1, \mathsf{SEED}_u)$

$\mathsf{DB}[*] := \bot$ / Prepare empty database for Sv

**for** $(u, j) \in G \times [NT]$ **do**

   $\widetilde{j} \leftarrow \mathsf{PRP}(\mathsf{k_{epoch}}, j)$ / Reorder OTS otvks and store it in DB

   $\mathsf{DB}[\mathsf{epoch}][\mathsf{idx}(u)][\widetilde{j}] \leftarrow Y_u[j]$

$\mathsf{pp} \leftarrow \mathsf{DB}$ / $\mathsf{DB}[0] \in (\{0, 1\}^\kappa)^{N \times NT}$

**return** $(\mathsf{pp}, (\mathsf{st}_u)_{u \in G})$

Fig. 16A

## $\text{Send}(\text{st}_u, \text{m})$

---

**parse** $(G, \text{gsk}, \text{EK}, \text{dk}_u, \text{epoch}, \text{ctr}, \text{SEED}_u) \leftarrow \text{st}_u$

**if** $\text{ctr} \geq T - 1$ **then return** $\perp$    / Need to update tokens

$\text{ctr}' \leftarrow \text{ctr} + 1$

$\Sigma_G \leftarrow (\text{epoch}, \star\texttt{attach-auth-token}(\text{st}_u, \boxed{\text{msg} :: \text{m}}))$

$\text{st}'_u \leftarrow (G, \text{gsk}, \text{EK}, \text{dk}_u, \text{epoch}, \text{ctr}', \text{SEED}_u)$

**return** $(\text{st}'_u, \Sigma_G)$

## $\text{Verify}(\text{pp}, \Sigma_G, \text{m})$

---

**parse** $\text{DB} \leftarrow \text{pp}$

**try** $(\text{pp}', (\sigma_i)_{i \in [N]})$

     $\leftarrow \star\texttt{verify-auth-token}(\text{pp}, \boxed{\text{msg} :: (\Sigma_G, \text{m})})$

**return** $(\text{pp}', (\sigma_i)_{i \in [N]})$

## $\text{Receive}(\text{st}_u, \sigma, \text{m})$

---

**try** $(\text{st}'_u, b, v) \leftarrow \star\texttt{trace-sender}(\text{st}_u, \boxed{\sigma, \text{m}})$

**return** $(\text{st}'_u, b, v)$

Fig. 16B

## UpdSend($\mathsf{st}_u$)

**parse** $(G, \mathsf{gsk}, \mathsf{EK}, \mathsf{dk}_u, \mathsf{epoch}, \mathsf{ctr}, \mathsf{SEED}_u) \leftarrow \mathsf{st}_u$

/ Cannot update again if others haven't

**if** $\mathsf{ctr} = T$ **then return** $\bot$

**parse** $(\mathsf{SendSEED}_u, \mathsf{ReceiveSEED}_u) \leftarrow \mathsf{SEED}_u$

$\mathsf{epoch}' \leftarrow \mathsf{epoch} + 1$

$\mathsf{k}_{\mathsf{epoch}'} \leftarrow \mathsf{PRF}(\mathsf{gsk}, \mathsf{epoch}')$

/ Create seeds/OTS keys for new epoch

$(\mathsf{ReceiveSEED}_u, Y_u, (\mathsf{ct}_v)_{v \in G})$
$\leftarrow {*}\mathsf{gen\text{-}auth\text{-}token}(G, \mathsf{EK}, \mathsf{epoch}', u, \mathsf{ReceiveSEED}_u)$

$\widetilde{Y_u}[*] := \bot$  / Reorder OTS otvks to be uploaded to Sv

**for** $j \in [NT]$ **do**

$\quad \widetilde{j} \leftarrow \mathsf{PRP}(\mathsf{k}_{\mathsf{epoch}}, j)$

$\quad \widetilde{Y_u}[\widetilde{j}] \leftarrow Y_u[j]$

$\widehat{\mathsf{ct}}_G \leftarrow (\mathsf{idx}(u), \widetilde{Y_u}, (\mathsf{ct}_v)_{v \in G})$

$\widehat{\Sigma}_G \leftarrow (\mathsf{epoch}, {*}\mathsf{attach\text{-}auth\text{-}token}(\mathsf{st}_u, \boxed{\mathsf{upd} :: (\mathsf{ct}_v)_{v \in G}}))$

$\mathsf{SendSEED}_u[\mathsf{epoch}] \leftarrow \bot$  / Remove seeds from previous epoch

/ Update own seed/OTS otsks for next epoch

$\mathsf{SendSEED}_u[\mathsf{epoch}'][u] \leftarrow \mathsf{ReceiveSEED}_u[\mathsf{epoch}'][u]$

$\mathsf{SEED}_u \leftarrow (\mathsf{SendSEED}_u, \mathsf{ReceiveSEED}_u)$

/ Max out counter to $T$ but do not increment epoch yet

$\mathsf{st}'_u \leftarrow (G, \mathsf{gsk}, \mathsf{EK}, \mathsf{dk}_u, \mathsf{epoch}, T, \mathsf{SEED}_u)$

**return** $(\mathsf{st}'_u, \widehat{\Sigma}_G, \widehat{\mathsf{ct}}_G)$

## Fig. 16C

## UpdVerify$(\text{pp}, \widehat{\Sigma}_G, \widehat{\text{ct}}_G)$

parse DB ← pp

try $(\text{pp}', (\widehat{\sigma}_i)_{i \in [N]}) \leftarrow \text{*verify-auth-token}(\text{pp}, \boxed{\text{upd} :: (\widehat{\Sigma}_G, \widehat{\text{ct}}_G)})$

parse $\left(\text{epoch}, \widetilde{\text{id}}_{\text{send}}, (x_1, \ldots, x_N)\right) \leftarrow \widehat{\Sigma}_G$

parse $(\text{id}_{\text{receive}}, \widetilde{Y}, (\text{ct}_i)_{i \in [N]}) \leftarrow \widehat{\text{ct}}_G$

req $\text{DB}[\text{epoch} + 1][\text{id}_{\text{receive}}] = \bot$  / No OTS otvks for $\text{id}_{\text{receive}}$ in epoch + 1

$\text{DB}[\text{epoch} + 1][\text{id}_{\text{receive}}] \leftarrow \widetilde{Y}$  / Update DB for next epoch

**foreach** $i \in [N]$ **do**

$\quad \widehat{\text{ct}}_i \leftarrow \text{ct}_i$

**return** $(\text{pp}', (\widehat{\sigma}_i, \widehat{\text{ct}}_i)_{i \in [N]})$

## UpdReceive$(\text{st}_u, \widehat{\sigma}, \widehat{\text{ct}})$

parse $(G, \text{gsk}, \text{EK}, \text{dk}_u, \text{epoch}, \text{ctr}, \text{SEED}_u) \leftarrow \text{st}_u$

parse $(\text{SendSEED}_u, \text{ReceiveSEED}_u) \leftarrow \text{SEED}_u$

try $(\text{st}_u, b, v) \leftarrow \text{*trace-sender}(\text{st}_u, \boxed{\widehat{\sigma}, \widehat{\text{ct}}})$

**if** $v = u$ **then return** $(\text{st}_u, \top, u)$  / $\text{SendSEED}_u$ is already updated with $\text{seed}_{u \to u}$

req $\text{SendSEED}_u[\text{epoch} + 1][v] = \bot$  / $v$ hasn't updated yet in epoch + 1

$\text{seed}_{u \to v} \leftarrow \text{KEM.Dec}(\text{dk}_u, \widehat{\text{ct}})$  / Seed used by $u$ to send message to $v$ in epoch + 1

$\text{SendSEED}_u[\text{epoch} + 1][v] \leftarrow \text{seed}_{u \to v}$

$\text{SEED}_u \leftarrow (\text{SendSEED}_u, \text{ReceiveSEED}_u)$

**if** $\forall w \in G, \text{SendSEED}_u[\text{epoch} + 1][w] \neq \bot$ **then**

$\quad$ / Increment epoch and refresh counter to 1 if everybody updated

$\quad \text{st}'_u \leftarrow (G, \text{gsk}, \text{EK}, \text{dk}_u, \text{epoch} + 1, 1, \text{SEED}_u)$

$^{29}$ **else** $\text{st}'_u \leftarrow (G, \text{gsk}, \text{EK}, \text{dk}_u, \text{epoch}, \text{ctr}, \text{SEED}_u)$

**return** $(\text{st}'_u, \top, v)$

## Fig. 16D

## Func ⋆gen-auth-token(G, EK, epoch, $u$, ReceiveSEED)

**req** ReceiveSEED[epoch] = ⊥

**foreach** $v \in$ G **do**

$(\mathrm{seed}_{v \to u}, \mathrm{ct}_v) \leftarrow\$ \mathrm{KEM.Enc}(\mathrm{EK}[v])$

ReceiveSEED[epoch][$v$] ← $(\mathrm{seed}_{v \to u}, 1)$

**foreach** $t \in [T]$ **do**

/ $t$-th OTS key $v$ uses to send a message to $u$ in epoch

$r_{v \to u}^{(t)} \leftarrow \mathrm{PRF}(\mathrm{seed}_{v \to u}, \mathrm{epoch} \| t \| \boxed{u})$

$\boxed{(\mathrm{otvk}, \mathrm{otsk}) \leftarrow \mathrm{OTS.KeyGen}(1^\kappa; r_{v \to u}^{(t)})}$

$\boxed{y_{v \to u}^{(t)} := \mathrm{otvk}}$

/ Arrange all OTS otvks in order of users G = $(u_1, \cdots, u_N)$

$Y \leftarrow \left( y_{u_1 \to u}^{(1)}, \ldots, y_{u_1 \to u}^{(T)}, \right.$

$\left. \ldots, y_{u_N \to u}^{(1)}, \ldots, y_{u_N \to u}^{(T)} \right) \in (\{0, 1\}^\kappa)^{NT}$

**return** $(\mathrm{ReceiveSEED}, Y, (\mathrm{ct}_v)_{v \in G})$

Fig. 16E

Func $\ast$attach-auth-token($\mathrm{st}_u$, $\boxed{\texttt{label} :: \texttt{obj}}$)

$\rule{10cm}{0.4pt}$

**parse** $(G, \mathrm{gsk}, \mathrm{EK}, \mathrm{dk}_u, \mathrm{epoch}, \mathrm{ctr}, \mathrm{SEED}_u) \leftarrow \mathrm{st}_u$

**parse** $(\mathrm{SendSEED}_u, \mathrm{ReceiveSEED}_u) \leftarrow \mathrm{SEED}_u$

**foreach** $v \in G$ **do**

    $\mathrm{seed}_{u \to v} \leftarrow \mathrm{SendSEED}_u[\mathrm{epoch}][v]$

    / Derive ctr-th OTS key $u$ uses to send a message to $v$ in epoch

    $r_{u \to v}^{(\mathrm{ctr})} \leftarrow \mathrm{PRF}(\mathrm{seed}_{u \to v}, \mathrm{epoch} \| \mathrm{ctr} \| \boxed{v})$

    $\boxed{(\mathrm{otvk}, \mathrm{otsk}) \leftarrow \mathrm{OTS.KeyGen}(1^\kappa; r_{u \to v}^{(\mathrm{ctr})})}$

    **if** $\texttt{label} = \mathrm{msg}$ **then**

        **parse** $\mathrm{m} \leftarrow \mathrm{obj}$

        $\boxed{x_{u \to v}^{(\mathrm{ctr})} := \mathrm{sig} \leftarrow \mathrm{OTS.Sign}(\mathrm{otsk}, \mathrm{m})}$

    **elseif** $\texttt{label} = \mathrm{obj}$ **then**

        **parse** $(\mathrm{ct}_v)_{v \in G} \leftarrow \mathrm{obj}$

        / Sign $v$'s ciphertext using otsk from $v$

        $\boxed{x_{u \to v}^{(\mathrm{ctr})} := \mathrm{sig} \leftarrow \mathrm{OTS.Sign}(\mathrm{otsk}, \mathrm{ct}_v)}$

$\mathrm{k}_{\mathrm{epoch}} \leftarrow \mathrm{PRF}(\mathrm{gsk}, \mathrm{epoch})$

/ Compute permuted index of the corresponding OTS otvk in DB

$\mathrm{id}_{\mathrm{send}} \leftarrow \mathrm{ctr} + (\mathrm{idx}(u) - 1) \cdot T$

$\widetilde{\mathrm{id}}_{\mathrm{send}} \leftarrow \mathrm{PRP}(\mathrm{k}_{\mathrm{epoch}}, \mathrm{id}_{\mathrm{send}})$   / $\mathrm{id}_{\mathrm{send}}, \widetilde{\mathrm{id}}_{\mathrm{send}} \in [NT]$

**return** $\left(\widetilde{\mathrm{id}}_{\mathrm{send}}, \left(x_{u \to v}^{(\mathrm{ctr})}\right)_{v \in G}\right)$

Fig. 16F

Func *verify-auth-token(pp, | label :: obj |)

DB ← pp

**parse** $\left(\text{epoch}, \widetilde{\text{id}}_{\text{send}}, (x_1, \ldots, x_N)\right) \leftarrow \Sigma_G$

$Y \leftarrow DB[\text{epoch}]$   $/ Y \in (\{0,1\}^\kappa)^{N \times NT}$

**if** label = msg **then**

   **parse** $\left(\left(\text{epoch}, \widetilde{\text{id}}_{\text{send}}, (x_1, \ldots, x_N)\right), m\right) \leftarrow \text{obj}$

   **foreach** $i \in [N]$ **do**

      **if** $\text{OTS.Verify}(Y[i][\widetilde{\text{id}}_{\text{send}}], m, x_i) = \bot$ **then**

         **return** $\bot$

**elseif** label = upd **then**

   **parse** $(\widehat{\Sigma}_G, \widehat{\text{ct}}_G) \leftarrow \text{obj}$

   **parse** $\left(\text{epoch}, \widetilde{\text{id}}_{\text{send}}, (x_1, \ldots, x_N)\right) \leftarrow \widehat{\Sigma}_G$

   **parse** $\left(\text{id}_{\text{receive}}, \widetilde{Y}, (\text{ct}_i)_{i \in G}\right) \leftarrow \widehat{\text{ct}}_G$

   **foreach** $i \in [N]$ **do**

      **if** $\text{OTS.Verify}(Y[i][\widetilde{\text{id}}_{\text{send}}], \text{ct}_i, x_i) = \bot$ **then**

         **return** $\bot$

/ If check passes, set user authentication tokens and

/ delete column from Y

**foreach** $i \in [N]$ **do**

   $\sigma_i \leftarrow (\text{epoch}, \widetilde{\text{id}}_{\text{send}}, x_i)$

   $Y[i][\widetilde{\text{id}}_{\text{send}}] \leftarrow \bot$

$DB[\text{epoch}] \leftarrow Y$   / Update DB

$pp' \leftarrow DB$

**return** $(pp', (\sigma_i)_{i \in [N]})$

Fig. 16G

Func $\star$trace-sender$(\text{st}_u, \boxed{\sigma, \text{m}})$

parse $(G, \text{gsk}, \text{EK}, \text{dk}_u, \text{epoch}, \text{ctr}, \text{SEED}_u) \leftarrow \text{st}_u$

parse $(\text{SendSEED}_u, \text{ReceiveSEED}_u) \leftarrow \text{SEED}_u$

parse $(\text{epoch}', \widetilde{\text{id}}_{\text{send}}, x) \leftarrow \sigma$

**req** $\text{epoch} = \text{epoch}'$

$k_{\text{epoch}} \leftarrow \text{PRF}(\text{gsk}, \text{epoch})$

$\text{id}_{\text{send}} \leftarrow \text{PRP}^{-1}(k_{\text{epoch}}, \widetilde{\text{id}}_{\text{send}})$

$i \leftarrow \lfloor \text{id}_{\text{send}}/T \rfloor + 1$ / Index of the user who sent the message

$t \leftarrow \text{id}_{\text{send}} - \lfloor \text{id}_{\text{send}}/T \rfloor \cdot T$ / $t$-th OTS otvk from user in epoch

$v \leftarrow i$-th user in $G$ / $v \in G$ and $\text{id}_{\text{send}} = t + (\text{idx}(v) - 1) \cdot T$

$(\text{seed}_{v \to u}, \text{ctr}) \leftarrow \text{ReceiveSEED}_u[\text{epoch}][v]$

**req** $\text{ctr} = t$ / Require that token wasn't used yet

$r_{v \to u}^{(\text{ctr})} \leftarrow \text{PRF}(\text{seed}_{u \to v}, \text{epoch}\|\text{ctr}\|\boxed{u})$

$\boxed{(\text{otvk}, \text{otsk}) \leftarrow \text{OTS.KeyGen}(1^\kappa; r_{v \to u}^{(\text{ctr})})}$

$\boxed{\textbf{if } \text{OTS.Verify}(\text{otvk}, \text{m}, x) = \bot \textbf{ then return } (\text{st}_u, \bot, \bot)}$

/ Mark $t$-th OTS otsk to be used

$\text{ReceiveSEED}_u[\text{epoch}][v] \leftarrow (\text{seed}_{v \to u}, \text{ctr} + 1)$

$\text{SEED}_u \leftarrow (\text{SendSEED}_u, \text{ReceiveSEED}_u)$

$\text{st}'_u \leftarrow (G, \text{gsk}, \text{EK}, \text{dk}_u, \text{epoch}, \text{ctr}, \text{SEED}_u)$

**return** $(\text{st}'_u, \top, v)$

Fig. 16H

Fig. 17

# EUROPEAN SEARCH REPORT

**Application Number**

EP 24 21 4350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BOAZ CATANE ET AL: "Massive Group Message Authentication with Revocable Anonymity", IACR, INTERNATIONAL ASSOCIATION FOR CRYPTOLOGIC RESEARCH, vol. 20130526:125453, 26 May 2013 (2013-05-26), pages 1-9, XP061007730, * sections 2-5, figures 1, 3, 4 * | 1-15 | INV. H04L9/06 H04L9/08 H04L9/32 |
| A | JOËL ALWEN ET AL: "On The Insider Security of MLS", IACR, INTERNATIONAL ASSOCIATION FOR CRYPTOLOGIC RESEARCH , vol. 20220811:145544 11 August 2022 (2022-08-11), pages 1-64, XP061075629, Retrieved from the Internet: URL:https://eprint.iacr.org/archive/2020/1327/1660229744.pdf [retrieved on 2022-08-11] * sections 3, 4, figures 1-4 * | 1-15 | |

**TECHNICAL FIELDS SEARCHED (IPC)**

H04L

The present search report has been drawn up for all claims

| Place of search | Date of completion of the search | Examiner |
|---|---|---|
| Munich | 4 April 2025 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **EMIL STEFANOV** ; **ELAINE SHI**. FastPRP: Fast Pseudo-Random Permutations for Small Domains.. *Cryptology ePrint Archive, Report 2012/254*, 2012
- **BEN MORRIS** ; **PHILLIP ROGAWAY** ; **TILL STEGERS**. Deterministic Encryption with the Thorp Shuffle. *Journal of Cryptology*, 2018, vol. 31 (2), 521-536
- High-Speed High-Security Signatures. **DANIEL J. BERNSTEIN** ; **NIELS DUIF** ; **TANJA LANGE** ; **PETER SCHWABE** ; **BO-YIN YANG**. In CHES 2011. Springer, 2011, vol. 6917, 124-142
- W-OTS+ - Shorter Signatures for Hash-Based Signature Schemes. **ANDREAS HÜLSING**. In AFRICACRYPT 13. Springer, 2013, vol. 7918, 173-188
- **VADIM LYUBASHEVSKY** ; **LÉO DUCAS** ; **EIKE KILTZ** ; **TANCRÈDE LEPOINT** ; **PETER SCHWABE** ; **GREGOR SEILER** ; **DAMIEN STEHL6** ; **SHI BAI**. CRYSTALS-DILITHIUM. *Technical Report.*, 2022
- Short Group Signatures. **DAN BONEH** ; **XAVIER BOYEN** ; **HOVAV SHACHAM**. In CRYPTO 2004. Springer, 2004, vol. 3152, 41-55
- **VADIM LYUBASHEVSKY** ; **NGOC KHANH NGUYEN** ; **MAXIME PLANÇON**. *Lattice-Based Zero-Knowledge Proofs and Applications: Shorter, Simpler, and More General*, 2022, vol. 43, 71-101
- **PETER SCHWABE** ; **ROBERTO AVANZI** ; **JOPPE BOS** ; **LÉO DUCAS** ; **EIKE KILTZ** ; **TANCRÈDE, LEPOINT** ; **VADIM LYUBASHEVSKY** ; **JOHN M. SCHANCK** ; **GREGOR SEILER** ; **DAMIEN STEHL6**. CRYSTALS-KYBER. *Technical Report*, 2022

- **JOËL ALWEN** ; **BENEDIKT AUERBACH** ; **MIGUEL CUETO NOVAL** ; **KAREN KLEIN** ; **GUILLERMO PASCUAL-PEREZ** ; **KRZYSZTOF PIETRZAK** ; **MICHAELWALTER**. *CoCoA: Concurrent Continuous Group Key Agreement*, 2022, vol. 44, 815-844
- Security Analysis and Improvements for the IETF MLS Standard for Group Messaging. **JOËL ALWEN** ; **SANDRO CORETTI** ; **YEVGENIY DODIS** ; **YIANNIS TSELEKOUNIS**. In CRYPTO 2020, Part I. Springer, 2020, vol. 12170, 248-277
- **JOËL ALWEN** ; **SANDRO CORETTI** ; **DANIEL JOST** ; **MARTA MULARCZYK**. *Continuous Group Key Agreement with Active Security*, 2020, vol. 62, 261-290
- **JOËL ALWEN** ; **DOMINIK HARTMANN** ; **EIKE KILTZ** ; **MARTA MULARCZYK**. *Server- Aided Continuous Group Key Agreement*, 2022, vol. 73, 69-82
- **KEITARO HASHIMOTO** ; **SHUICHI KATSUMATA** ; **EAMONN POSTLETHWAITE** ; **THOMAS PREST** ; **BAS WESTERBAAN**. *A Concrete Treatment of Efficient Continuous Group Key Agreement via Multi-Recipient PKEs*, 2021, vol. 68, 1441-1462
- **KEITARO HASHIMOTO** ; **SHUICHI KATSUMATA** ; **THOMAS PREST**. *How to Hide MetaData in MLS-Like Secure Group Messaging: Simple, Modular, and Post- Quantum*, 2022, vol. 73, 1399-1412
- **RICHARD BARNES** ; **BENJAMIN BEURDOUCHE** ; **RAPHAEL ROBERT** ; **JON MILLICAN** ; **EMAD OMARA** ; **KATRIEL COHN-GORDON**. The Messaging Layer Security (MI,S) Protocol. Internet-Draft draft-ietf mls-protocol-20. *Internet Engineering Task Force*, 2023
- Orca: Blocklisting in Sender-Anonymous Messaging.. **NIRVAN TYAGI** ; **JULIA LEN** ; **IAN MIERS** ; **THOMAS RISTENPART**. In USENIX Security. USENIX Association, 2022, 2299-2316